(19) Europäisches Patentamt
European Patent Office
Office européen des brevets

(11) EP 1 565 504 B1

(12) # FASCICULE DE BREVET EUROPEEN

(45) Date de publication et mention de la délivrance du brevet:
**10.08.2011 Bulletin 2011/32**

(21) Numéro de dépôt: **03767912.3**

(22) Date de dépôt: **05.11.2003**

(51) Int Cl.:
***C08F 290/14*** (2006.01) ***C09C 3/00*** (2006.01)
***C11D 3/42*** (2006.01) ***D06L 3/12*** (2006.01)
***D21H 21/30*** (2006.01) ***C08K 3/00*** (2006.01)

(86) Numéro de dépôt international:
**PCT/FR2003/003300**

(87) Numéro de publication internationale:
**WO 2004/044022 (27.05.2004 Gazette 2004/22)**

(54) **UTILISATION D'UN COPOLYMERE DISPOSANT D'AU MOINS UNE FONCTION GREFFEE ALKOXY OU HYDROXY POLYALKYLENE GLYCOL, COMME AGENT AMELIORANT L'ACTIVATION DE L'AZURAGE OPTIQUE ET PRODUITS OBTENUS.**

VERWENDUNG EINES POLYMERISATS, GEPPFROPFTES ALKOXY- ODER HYDROXYPOLYALKYLENGLYCOL ENTHALTEND, ALS VERBESSERER BEIM OPTISCHEN AUFHELLEN, UND DIE PRODUKTE

USE OF A COPOLYMER HAVING AT LEAST ONE GRAFTED ALKOXY OR HYDROXY POLYALKYLENE GLYCOL FUNCTION AS AN AGENT FOR IMPROVING OPTICAL BRIGHTENING ACTIVATION, AND PRODUCTS OBTAINED

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **08.11.2002 FR 0214000**

(43) Date de publication de la demande:
**24.08.2005 Bulletin 2005/34**

(73) Titulaire: **COATEX S.A.S.**
**69730 Genay (FR)**

(72) Inventeurs:
- **DUPONT, François**
  **F-69004 Lyon (FR)**
- **JACQUEMET, Christian**
  **F-69005 Lyon (FR)**
- **SUAU, Jean-Marc**
  **F-69480 Lucenay (FR)**
- **MONGOIN, Jacques**
  **F-69650 Quincieux (FR)**

(74) Mandataire: **Richebourg, Michel François**
**Cabinet Michel Richebourg**
**"Le Clos du Golf"**
**69 Rue Saint-Simon**
**42000 Saint Etienne (FR)**

(56) Documents cités:
**FR-A- 2 810 261** **US-A- 5 491 209**
**US-B1- 6 413 306**

- **DATABASE WPI Section Ch, Week 199435 Derwent Publications Ltd., London, GB; Class A14, AN 1994-283389 XP002248413 & JP 06 211951 A (SANYO CHEM IND LTD) 2 août 1994 (1994-08-02)**
- **DATABASE WPI Section Ch, Week 199815 Derwent Publications Ltd., London, GB; Class A14, AN 1998-163702 XP002248414 & JP 10 030010 A (TOYO INK MFG CO LTD) 3 février 1998 (1998-02-03)**
- **DATABASE WPI Section Ch, Week 200062 Derwent Publications Ltd., London, GB; Class A14, AN 2000-641523 XP002248415 & JP 2000 229233 A (DENKI KAGAKU KOGYO KK) 22 août 2000 (2000-08-22)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 565 504 B1

## Description

La présente invention concerne le secteur technique du papier, du textile, de la détergence, de la peinture, et notamment le domaine des charges de masse et des sauces de couchage papetières, en vue d'apporter une amélioration de l'activation de l'azurage optique au niveau du produit final.

L'invention concerne tout d'abord l'utilisation d'un copolymère hydrosoluble disposant d'au moins une fonction alkoxy ou hydroxy polyalkylène glycol greffée sur au moins un monomère insaturé éthylénique, comme agent améliorant l'activation de l'azurage optique du produit final.

L'invention concerne aussi l'agent améliorant l'activation de l'azurage optique du produit final.

L'invention concerne également l'utilisation d'un copolymère hydrosoluble disposant d'au moins une fonction alkoxy ou hydroxy polyalkylène glycol greffée sur au moins un monomère insaturé éthylénique, comme agent améliorant l'activation de l'azurage optique du produit final, et mis en oeuvre dans un procédé de dispersion de pigments et/ou de charges minérales en suspension aqueuse. Elle concerne également le procédé de dispersion mettant en oeuvre ledit copolymère ainsi que les suspensions aqueuses ainsi obtenues.

Elle concerne aussi l'utilisation desdites suspensions aqueuses pour la fabrication des charges de masse et/ou des sauces de couchage. Elle concerne également les sauces de couchage et les charges de masse ainsi obtenues. Elle concerne enfin l'utilisation desdites charges de masse et desdites sauces de couchage pour la fabrication et/ou le couchage des papiers. Elle concerne également les papiers ainsi obtenus.

L'invention concerne également l'utilisation d'un copolymère hydrosoluble disposant d'au moins une fonction alkoxy ou hydroxy polyalkylène glycol greffée sur au moins un monomère insaturé éthylénique, comme agent améliorant l'activation de l'azurage optique du produit final, et mis en oeuvre dans un procédé de broyage de pigments et/ou de charges minérales en suspension aqueuse. Elle concerne également le procédé de broyage mettant en oeuvre ledit copolymère ainsi que les suspensions aqueuses ainsi obtenues.

Elle concerne aussi l'utilisation desdites suspensions aqueuses pour la fabrication des charges de masse et/ou des sauces de couchage. Elle concerne également les sauces de couchage et les charges de masse ainsi obtenues.

Elle concerne enfin l'utilisation desdites charges de masse et desdites sauces de couchage pour la fabrication et/ou le couchage des papiers. Elle concerne également les papiers ainsi obtenus.

L'invention concerne également l'utilisation d'un copolymère hydrosoluble disposant d'au moins une fonction alkoxy ou hydroxy polyalkylène glycol greffée sur au moins un monomère insaturé éthylénique, comme agent améliorant l'activation de l'azurage optique du produit final, et mis en oeuvre dans un procédé de fabrication de charges de masse. Elle concerne également le procédé de fabrication des charges de masse mettant en oeuvre ledit copolymère ainsi que les charges de masse ainsi obtenues.

Elle concerne aussi l'utilisation desdites charges de masse pour la fabrication des papiers. Elle concerne enfin les papiers ainsi obtenus.

L'invention concerne également l'utilisation d'un copolymère hydrosoluble disposant d'au moins une fonction alkoxy ou hydroxy polyalkylène glycol greffée sur au moins un monomère insaturé éthylénique, comme agent améliorant l'activation de l'azurage optique du produit final, et mis en oeuvre dans un procédé de fabrication de sauces de couchage. Elle concerne également le procédé de fabrication de sauces de couchage mettant en oeuvre ledit copolymère ainsi que les sauces de couchage ainsi obtenues.

Elle concerne aussi l'utilisation des sauces de couchage ainsi obtenues pour le couchage des papiers. Elle concerne enfin les papiers ainsi obtenus.

De plus, l'invention concerne l'utilisation de copolymères hydrosolubles selon l'invention comme additifs dans la fabrication de suspensions de matières minérales préalablement dispersées et/ou broyées. Elle concerne également l'utilisation des suspensions ainsi obtenues dans la fabrication de sauces papetières.

Enfin, l'invention concerne l'utilisation de copolymères hydrosolubles selon l'invention comme additifs améliorant l'activation de l'azurage optique dans des compositions textiles, détergentes ou de peinture et concerne également les compositions textiles, détergentes et de peinture les contenant.

Le procédé de fabrication d'un papier comprend plusieurs étapes dont : mise en suspension aqueuse des pigments et/ou des charges minérales ; utilisation desdites suspensions pour fabriquer des charges de masse et/ou des sauces de couchage ; utilisation desdites sauces et desdites charges de masse pour coucher et/ou fabriquer les papiers. Tout au long de ce procédé, l'homme du métier conserve à l'esprit la nécessité d'obtenir un produit final présentant une forte activation de l'azurage optique, et par voie de conséquence d'obtenir la meilleure blancheur possible ; l'accroissement du degré de blancheur du produit final est en effet une préoccupation majeure pour les papetiers. Cette propriété d'activation de l'azurage optique, ainsi que les moyens connus pour améliorer celle-ci au cours du procédé précédemment décrit, sont illustrés par la suite à travers les documents accessibles à l'homme du métier dans l'art antérieur.

Au cours dudit procédé, les charges minérales et/ou les pigments, tels que le carbonate de calcium, les dolomies, le kaolin, le talc, le gypse, l'oxyde de titane, le blanc satin ou encore le trihydroxyde d'aluminium, sont initialement mis en suspension aqueuse, seuls ou en mélanges. Pour ce faire, on utilise des agents de dispersion et/ou d'aide au broyage

de ces pigments et/ou charges minérales encore appelées matières minérales.

Il est à noter que dans toute la description, on parlera aussi bien de matières minérales que de charges et/ou pigments, ces termes ayant la même signification pour la Demanderesse.

Ces agents de dispersion et/ou d'aide au broyage se comportent comme des modificateurs de rhéologie au sens où ils fluidifient les dites suspensions. L'action mécanique du broyage, facilitée par l'emploi des agents d'aide au broyage, apporte en plus un effet de réduction de la taille des particules. On peut également utiliser des additifs permettant de réguler la viscosité desdites suspensions de matières minérales.

Ainsi, l'homme du métier connaît le document EP 0 610 534 qui enseigne la préparation de polymères obtenus par copolymérisation d'un monomère isocyanate et de monomères aprotiques, puis par fonctionnalisation au moyen d'aminés ou d'éthers monoalkylés de polyalkylènes glycol. De tels agents sont particulièrement efficaces pour le broyage de pigments organiques.

De même, il connaît le document WO 00/77058 qui décrit des copolymères à base d'un dérivé insaturé d'un acide mono ou dicarboxylique, d'un dérivé insaturé de polyalkylène glycol, d'un composé polysiloxane insaturé ou d'un ester insaturé. Ces copolymères sont utilisés comme agents dispersants dans les suspensions de charges minérales, notamment dans le secteur des ciments.

Il connaît également le document WO 01/96007 qui décrit un copolymère ionique, hydrosoluble, et disposant d'une fonction greffée alkoxy ou hydroxy polyalkylène glycol, dont le rôle est de disperser et/ou d'aider au broyage des pigments et/ou des charges minérales.

De même, l'homme de métier connaît aussi le document FR 2 707 182 qui lui enseigne d'utiliser une composition polymérique à base de sels d'acide polyacrylique et de phosphonates, pour fluidifier des suspensions de pigments inorganiques. Néanmoins, ces documents, pas plus que les autres apparaissant dans l'art antérieur, n'enseignent que le greffage d'un groupement alkoxy ou hydroxy polyalkylène glycol améliore l'activation de l'azurage optique.

On connaît aussi d'autres document qui décrivent des composés chimiques, disposant d'une fonction du type polyalkylène glycol, mais mis en oeuvre dans d'autres applications, et / ou avec des fonctions complètement différentes.

Ainsi, le document US 5 491 209 se rapporte à des copolymères disposant d'une fonction éthylénique insaturé polyéthylène glycol, comme indiqué colonne 5, lignes 35 à 51. Et comme indiqué colonne 5, lignes 51 à 58, ce copolymère permet d'améliorer la brillance du papier, par un mécanisme d'interaction entre ledit polymère et les pigments minéraux : ceci est différent de la propriété d'azuration optique, dans laquelle le support d'azuration va interagir avec des azurants optiques qui sont des substances fluorescentes, selon la présente Demande.

Le document US 6 413 306 se rapporte à des polymères de structure ABC qui agissent comme dispersants. Le passage (colonne 4, lignes 41-48) indique que le segment C peut être de nature alcoxy polyalkylene glycol. Ce document ne concerne toutefois pas la propriété d'azuration optique.

Le document JP 02 11951 se rapporte à une résine, composé utilisé comme liant dans le cadre notamment des peintures (revendiquées dans ce document), ce qui n'est pas la fonction du présente copolymère. D'autre part, ce document ne concerne en rien l'amélioration de l'activation de l'azurage optique.

Le document JP 10 030010 se rapporte à des tensio-actifs, qui ne font pas partie de l'objet de la présente invention : de tels tensioactifs améliorent l'état de dispersion des pigments dans des peintures, tout en améliorant la résistance à l'eau de ces dernières.

Enfin le document JP 2002 29233 se rapporte à des dispersants de matières inorganiques, ledit dispersant possédant un groupement du type alkylène glycol allyl éther ; ce dispersant permet notamment d'améliorer la capacité de dispersion de poudres inorganiques.

Lesdites suspensions aqueuses de pigments et/ou de charges minérales entrent ensuite dans la composition des charges de masse et/ou des sauces de couchage.

Dans le cas des charges de masse, lesdites charges sont ajoutées aux fibres avant la fabrication de la feuille de papier ; on parle de charges ajoutées dans la masse, ou de charges de masse, lors de la fabrication de la suspension fibreuse qui alimente la machine à papier, comme l'indique le document WO 99/42657. Lesdites charges peuvent être ajoutées aux fibres sous forme de suspensions de pigments et/ou de charges minérales. On peut également ajouter aux fibres des azurants optiques. Ces derniers sont des substances fluorescentes « ajoutées aux détergents ou utilisées pour traiter les textiles ou les papiers, afin d'augmenter leur blancheur » (A Dictionary of Science, Oxford University Press, Market House Books 1999), cette blancheur étant un élément fondamental pour l'utilisateur final. Les azurants optiques sont en général des molécules stylbéniques qui possèdent la propriété d'absorber une partie du rayonnement lumineux dans les longueurs d'onde de l'UV, pour la ré émettre dans le spectre visible, améliorant ainsi la blancheur du produit final. Cette blancheur est caractérisée par les facteurs de réflectance diffuse des papiers pour une longueur d'onde de 457 nm, mesurés avec et sans UV, notés respectivement $R_{457\ +\ UV}$ et $R_{457\ -\ uv}$ ; on calcule alors la différence $\Delta UV = R_{457\ +\ UV} - R_{457\ -\ UV}$. Ces facteurs sont mesurés suivant la norme française NF Q 03-039 avec un spectrocolorimètre qui répond aux spécifications de la norme expérimentale NF Q 03-038. La blancheur peut également être caractérisée par le facteur W(CIE) mesuré selon la norme ISO / FDIS 11475.

Dans le cas des sauces de couchage, on réalise lesdites sauces en ajoutant un certain nombre d'additifs aux

suspensions aqueuses de pigments et/ou de charges minérales. On utilise notamment des latex qui jouent le rôle de liant, ainsi que des azurants optiques. Enfin, on peut ajouter à ces substances des composés dits « supports » ou « activateurs » des azurants optiques, au sens où ils développent l'activité desdits azurants, améliorant ainsi la blancheur du produit final.

Ainsi, pour activer l'azurage optique, il est bien connu d'incorporer dans les sauces de couchage papetières un certain nombre de composés tels que par exemple l'alcool polyvinylique (APV), la carboxyméthylcellulose (CMC), la polyvinylpyrrolidone (PVP), la caséine ou encore l'amidon, qui sont décrits dans le document « Optical Brightening of Coated Papers » (Allg. Papier-Rundschau, Nov. 5, 1982, no. 44, p. 1242.).

De même, le document « Effect of Polyethylene Glycols on the Properties of Coating Colors and Coating Quality » (Wochbl. Papierfabr., Feb. 15, 1978, Vol. 106, no. 3, pp. 109-112.) enseigne à l'homme du métier l'utilisation de polyéthylène glycol comme support d'azurage optique dans les sauces de couchage papetières. L'homme du métier connaît également le document JP 60 134096 qui décrit le couchage de papiers à partir d'une sauce de couchage contenant un liant latex à base d'un copolymère acrylique ou styrène-butadiène, des charges tels que notamment le carbonate de calcium, la craie, le talc, le kaolin, un composé stylbénique et du polyéthylène glycol. On obtient ainsi une amélioration de la blancheur des papiers. Enfin, l'homme du métier connaît le document EP 1 001 083 qui décrit une composition polymérique contenant au moins un alcool polyvinylique et au moins un polymère hydrosoluble à pH neutre ou alcalin, utilisée dans les sauces de couchage papetières pour améliorer la rétention d'eau et activer l'azurage optique du produit final.

Poursuivant ses recherches en vue d'améliorer l'activation de l'azurage optique des papiers, la Demanderesse a trouvé de manière surprenante, que l'utilisation dans des procédés de broyage de pigments et/ou de charges minérales, dans des procédés de dispersion de pigments et/ou de charges minérales, dans des procédés de fabrication de charges de masse, dans des procédés de fabrication de sauces de couchage, d'un copolymère hydrosoluble disposant d'au moins une fonction greffée alkoxy ou hydroxy polyalkylène glycol sur au moins un monomère insaturé éthylénique, permet d'obtenir une augmentation de l'activation de l'azurage optique des papiers, et donc d'améliorer la blancheur du produit final.

Ainsi l'utilisation selon l'invention d'un copolymère hydrosoluble comme activateur de l'azurage optique se caractérise en ce que le copolymère dispose d'au moins une fonction alkoxy ou hydroxy polyalkylène glycol greffée sur au moins un monomère insaturé éthylénique.

De manière plus particulière, la Demanderesse a trouvé que la présence dans ledit copolymère d'au moins un monomère de formule (I) :

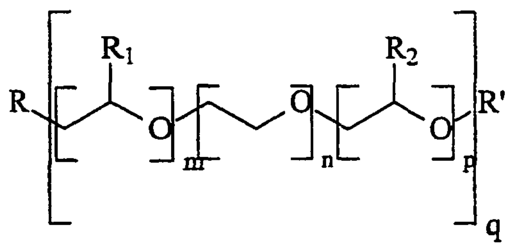

(I)

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,

- R' représente l'hydrogène ou un radical hydrocarboné ayant 1 à 40 atomes de carbone,

a permis la mise au point de copolymères comportant au moins une fonction alkoxy ou hydroxy polyalkylène glycol greffée sur au moins un monomère insaturé éthylénique, qui conduit à une amélioration de l'activation de l'azurage optique des papiers.

Ainsi, selon l'invention, ledit copolymère hydrosoluble se compose :

a) d'au moins un monomère anionique et à fonction carboxylique ou dicarboxylique ou phosphorique ou phosphonique ou sulfonique ou leur mélange,

b) d'au moins un monomère non ionique, le monomère non ionique étant constitué d'au moins un monomère de formule (1) :

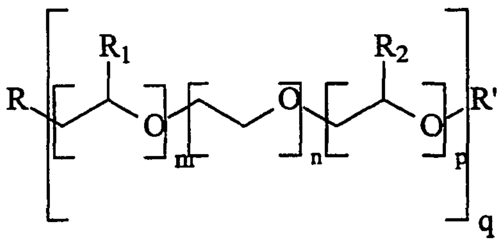

(I)

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et préférentiellement tel que $15 \leq (m+n+p)q \leq 120$
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, $\alpha$,-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,

ou du mélange de plusieurs monomères de formule (I),

c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré ou organosililé, ou du mélange de plusieurs de ces monomères,

d) éventuellement d'au moins un monomère possédant au moins deux insaturations éthyléniques appelé dans la

suite de la demande monomère réticulant,

le total des proportions des constituants a), b), c), et d) étant égal à 100 %.

Ledit copolymère a conduit à une amélioration de l'activation de l'azurage optique des papiers.

Ce but est atteint grâce à l'utilisation d'un copolymère hydrosoluble constitué

a) d'au moins un monomère anionique à insaturation éthylénique et à fonction monocarboxylique, ou dicarboxylique, ou sulfonique, ou phosphorique, ou phosphonique ou leur mélange,

b) d'au moins un monomère non ionique de formule (I),

c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré ou organosililé, ou du mélange de plusieurs de ces monomères,

d) éventuellement d'au moins un monomère réticulant,

le total des proportions des constituants a), b), c), et d) étant égal à 100 %.

L'utilisation, selon l'invention, d'un copolymère hydrosoluble, et disposant d'au moins une fonction alkoxy ou hydroxy polyalkylène glycol greffée sur au moins un monomère insaturé éthylénique conduisant à une amélioration de l'activation de l'azurage optique des papiers, se caractérise en ce que ledit copolymère hydrosoluble est constitué :

a) d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges,

b) d'au moins un monomère à insaturation éthylénique non ionique de formule (I) :

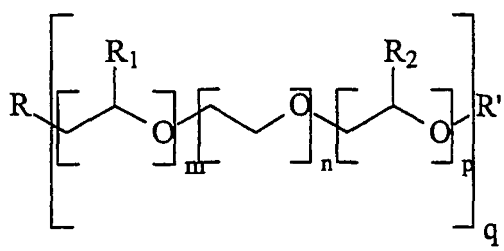

(I)

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et préférentiellement tel que $15 \leq (m+n+p)q \leq 120$,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,

ou du mélange de plusieurs monomères de formule (I),
c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré, ou encore d'au moins un monomère organosililé choisi de manière préférentielle parmi les molécules de formules (IIa) ou (IIb) :
avec formule (IIa)

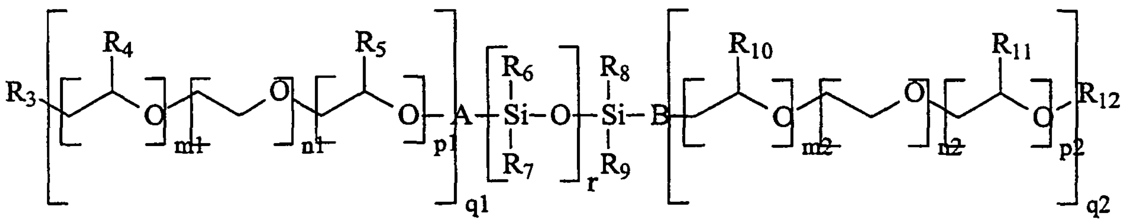

dans laquelle :

- m1, p1, m2 et p2 représentent un nombre de motifs d'oxyde d'alkylène inférieur ou égal à 150,
- n1 et n2 représentent un nombre de motifs d'oxyde d'éthylène inférieur ou égal à 150,
- q1 et q2 représentent un nombre entier au moins égal à 1 et tel que $0 \leq (m1+n1+p1)q1 \leq 150$ et $0 \leq (m2+n2+p2)q2 \leq 150$,
- r représente un nombre tel que $1 \leq r \leq 200$,
- $R_3$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_4$, $R_5$, $R_{10}$ et $R_{11}$, représentent l'hydrogène ou le radical méthyle ou éthyle,
- $R_6$, $R_7$, $R_8$ et $R_9$, représentent des groupements linéaires ou ramifiés alkyle, ou aryle, ou alkylaryle, ou arylalkyle ayant 1 à 20 atomes de carbone, ou leur mélange,
- $R_{12}$ représente un radical hydrocarboné ayant 1 à 40 atomes de carbone,
- A et B sont des groupements éventuellement présents, qui représentent alors un radical hydrocarboné ayant

1 à 4 atomes de carbone,

avec formule (IIb)

$$R - A - Si\ (OB)_3$$

dans laquelle :

- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone,
  ou du mélange de plusieurs de ces monomères,

d) éventuellement d'au moins un monomère réticulant choisi d'une manière non limitative dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres, ou choisi parmi les molécules de formule (III) :

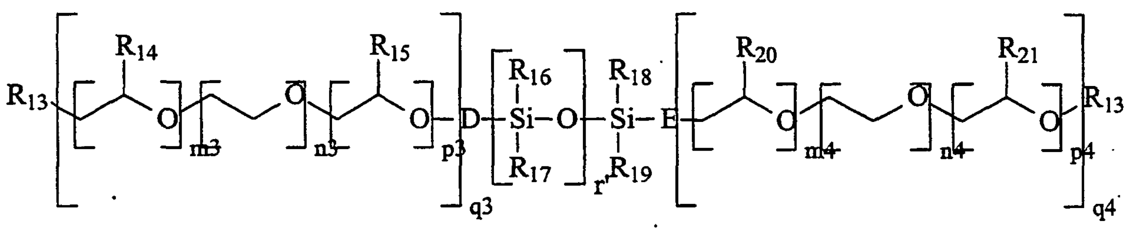

(III)

dans laquelle :

- m3, p3, m4 et p4 représentent un nombre de motifs d'oxyde d'alkylène inférieur ou égal à 150,
- n3 et n4 représentent un nombre de motifs d'oxyde d'éthylène inférieur ou égal à 150,
- q3 et q4 représentent un nombre entier au moins égal à 1 et tel que $0 \leq (m3+n3+p3)q3 \leq 150$ et $0 \leq (m4+n4+p4)q4 \leq 150$,
- r' représente un nombre tel que $1 \leq r' \leq 200$,
- $R_{13}$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,
- $R_{16}$, $R_{17}$, $R_{18}$ et $R_{19}$, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,
  ou du mélange de plusieurs de ces monomères,

le total des proportions des constituants a), b), c), et d) étant égal à 100 %.

Plus particulièrement l'utilisation du copolymère précité est caractérisée en ce que ledit copolymère hydrosoluble est constitué, exprimé en poids :

a) de 2 % à 95 % et encore plus particulièrement de 5 % à 90 % d'au moins un monomère anionique à insaturation éthylénique et à fonction monocarboxylique choisi parmi les monomères à insaturation éthylénique et à fonction monocarboxylique tels que l'acide acrylique ou méthacrylique, ou encore les hémiesters de diacides tels que les monoesters en $C_1$ à $C_4$ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges,

b) de 2 % à 95 % et encore plus particulièrement de 5 % à 90 % d'au moins un monomère à insaturation éthylénique non ionique de formule (I) :

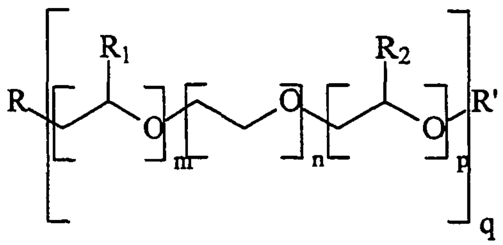

(I)

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et préférentiellement tel que $15 \leq (m+n+p)q \leq 120$,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,

ou du mélange de plusieurs monomères de formule (I),

c) de 0 % à 50 % d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au

moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'un monomère organofluoré, ou encore d'un monomère organosililé choisi de manière préférentielle parmi les molécules de formules (IIa) ou (IIb) :
avec formule (IIa)

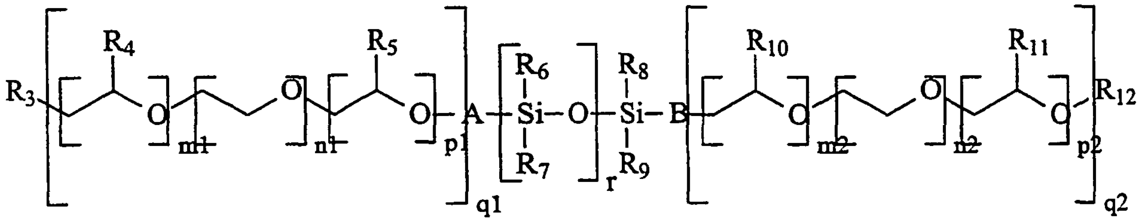

dans laquelle :

- m1, p1, m2 et p2 représentent un nombre de motifs d'oxyde d'alkylène inférieur ou égal à 150,
- n1 et n2 représentent un nombre de motifs d'oxyde d'éthylène inférieur ou égal à 150,
- q1 et q2 représentent un nombre entier au moins égal à 1 et tel que $0 \leq (m1+n1+p1)q1 \leq 150$ et $0 \leq (m2+n2+p2) q2 \leq 150$,
- r représente un nombre tel que $1 \leq r \leq 200$,
- $R_3$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_4$, $R_5$, $R_{10}$ et $R_{11}$, représentent l'hydrogène ou le radical méthyle ou éthyle,
- $R_6$, $R_7$, $R_8$ et $R_9$, représentent des groupements linéaires ou ramifiés alkyle, ou aryle, ou alkylaryle, ou arylalkyle ayant 1 à 20 atomes de carbone, ou leur mélange,
- $R_{12}$ représente un radical hydrocarboné ayant 1 à 40 atomes de carbone,
- A et B sont des groupements éventuellement présents, qui représentent alors un radical hydrocarboné ayant 1 à 4 atomes de carbone,

avec formule (IIb)

$$R - A - Si\ (OB)_3$$

dans laquelle :

- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone,

ou du mélange de plusieurs de ces monomères,

d) de 0 % à 3 % d'au moins un monomère réticulant choisi d'une manière non limitative dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers

allyliques obtenus à partir de polyols tels que le pentaérythritol, le sorbitol, le sucrose ou autres, ou choisi parmi les molécules de formule (III) :

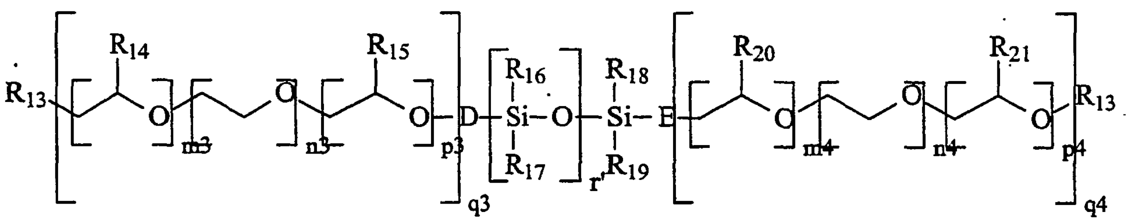

(III)

dans laquelle :

- m3, p3, m4 et p4 représentent un nombre de motifs d'oxyde d'alkylène inférieur ou égal à 150,
- n3 et n4 représentent un nombre de motifs d'oxyde d'éthylène inférieur ou égal à 150,
- q3 et q4 représentent un nombre entier au moins égal à 1 et tel que $0 \leq (m3+n3+p3)q3 \leq 150$ et $0 \leq (m4+n4+p4) q4 \leq 150$,
- r' représente un nombre tel que $1 \leq r' \leq 200$,
- $R_{13}$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,
- $R_{16}$, $R_{17}$, $R_{18}$ et $R_{19}$, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,
  ou du mélange de plusieurs de ces monomères,

le total des proportions des constituants a), b), c), et d) étant égal à 100 %.

Le copolymère utilisé selon l'invention est obtenu par des procédés connus de copolymérisation radicalaire en solution, en émulsion directe ou inverse, en suspension ou précipitation dans des solvants appropriés, en présence de systèmes catalytiques et d'agents de transfert connus, ou encore par des procédés de polymérisation radicalaire contrôlée tels que la méthode dénommée Reversible Addition Fragmentation Transfer (RAFT), la méthode dénommée Atom Transfer Radical Polymerization (ATRP), la méthode dénommée Nitroxide Mediated Polymerization (NMP) ou encore la méthode dénommée Cobaloxime Mediated Free Radical Polymerization.

Ce copolymère obtenu sous forme acide et éventuellement distillé, peut être également partiellement ou totalement neutralisé par un ou plusieurs agents de neutralisation disposant d'une fonction neutralisante monovalente ou d'une fonction neutralisante polyvalente tels que par exemple pour la fonction monovalente ceux choisis dans le groupe constitué par les cations alcalins, en particulier le sodium, le potassium, le lithium, l'ammonium ou les amines primaires, secondaires ou tertiaires aliphatiques et/ou cycliques telles que par exemple la stéarylamine, les éthanolamines (mono-, di-, triéthanolamine), la mono et diéthylamine, la cyclohexylamine, la méthylcyclohexylamine, l'amino méthyl propanol, la morpholine, ou bien encore pour la fonction polyvalente ceux choisis dans le groupe constitué par les cations divalents alcalino-terreux, en particulier le magnésium et le calcium, ou encore le zinc, de même que par les cations trivalents, dont en particulier l'aluminium, ou encore par certains cations de valence plus élevée.

Chaque agent de neutralisation intervient alors selon des taux de neutralisation propres à chaque fonction de valence.

Selon une autre variante, le copolymère issu de la réaction de copolymérisation peut éventuellement avant ou après la réaction de neutralisation totale ou partielle, être traité et séparé en plusieurs phases, selon des procédés statiques ou dynamiques connus de l'homme du métier, par un ou plusieurs solvants polaires appartenant notamment au groupe constitué par l'eau, le méthanol, l'éthanol, le propanol, l'isopropanol, les butanols, l'acétone, le tétrahydrofurane

ou leurs mélanges.

L'une des phases correspond alors au copolymère utilisé selon l'invention comme agent permettant l'amélioration de l'activation de l'azurage optique des papiers.

L'invention concerne aussi ledit copolymère disposant d'au moins une fonction alkoxy ou hydroxy polyalkylène glycol greffée sur au moins un monomère insaturé éthylénique, permettant l'amélioration de l'activation de l'azurage optique des papiers, des détergents des textiles et des peintures.

Ainsi selon l'invention, l'agent améliorant l'activation de l'azurage optique est caractérisé en ce qu'il est le copolymère hydrosoluble précité.

La viscosité spécifique du copolymère est symbolisée par le symbole $\eta_{spé}$ et est déterminée de la manière suivante.

On prend une solution de polymérisât de façon à obtenir une solution correspondant à 2,5 g de polymère sec neutralisé à la soude et à 50 ml d'eau bipermutée. Puis, on mesure avec un viscosimètre capillaire de constante de Baume égale à 0,000105 placé dans un bain thermostaté à 25°C le temps d'écoulement d'un volume donné de la solution précitée contenant le copolymère, ainsi que le temps d'écoulement du même volume d'eau bipermutée dépourvue dudit copolymère. Il est alors possible de définir la viscosité spécifique $\eta_{spé}$ grâce à la relation suivante :

$$\eta_{spé} = \frac{\text{(temps d'écoulement de la solution de polymère)} - \text{(temps d'écoulement de l'eau bipermutée)}}{\text{temps d'écoulement de l'eau bipermutée}}$$

Le tube capillaire est généralement choisi de telle manière que le temps d'écoulement de l'eau bipermutée pure soit d'environ 60 à 100 secondes, donnant ainsi des mesures de viscosité spécifique d'une très bonne précision.

L'invention concerne aussi le procédé de dispersion mettant en oeuvre ledit copolymère.

Ce procédé de dispersion selon l'invention se caractérise en ce que l'on utilise ledit copolymère, et de manière particulière en ce qu'on utilise de 0,05 % à 5 % en poids sec dudit copolymère par rapport au poids sec des charges et/ou pigments, et plus particulièrement en ce qu'on utilise de 0,1 % à 3 % en poids sec dudit copolymère par rapport au poids sec des charges et/ou pigments.

Ce procédé de dispersion en suspension aqueuse de matières minérales selon l'invention est caractérisé en ce que la matière minérale est choisie parmi le carbonate de calcium, les dolomies, le kaolin, le talc, le gypse, l'oxyde de titane, le blanc satin ou encore le trihydroxyde d'aluminium, le mica et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, et est plus particulièrement du carbonate de calcium tel que le carbonate de calcium naturel choisi parmi le marbre, la calcite, la craie ou leurs mélanges.

L'invention concerne aussi le procédé de broyage mettant en oeuvre ledit copolymère.

Ce procédé de broyage en suspension aqueuse de matières minérales selon l'invention se caractérise en ce que l'on utilise ledit copolymère, et de manière particulière en ce qu'on utilise de 0,05 % à 5 % en poids sec dudit copolymère par rapport au poids sec des charges et/ou pigments, et plus particulièrement en ce qu'on utilise de 0,1 % à 3 % en poids sec dudit copolymère par rapport au poids sec des charges et/ou pigments.

Ce procédé de broyage en suspension aqueuse de matières minérales selon l'invention est caractérisé en ce que la matière minérale est choisie parmi le carbonate de calcium, les dolomies, le kaolin, le talc, le gypse, l'oxyde de titane, le blanc satin ou encore le trihydroxyde d'aluminium, le mica et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, et est plus particulièrement du carbonate de calcium tel que le carbonate de calcium naturel choisi parmi le marbre, la calcite, la craie ou leurs mélanges.

L'invention concerne aussi le procédé de fabrication de charge de masse mettant en oeuvre ledit copolymère.

Ce procédé de fabrication de charge de masse selon l'invention se caractérise en ce que l'on utilise ledit copolymère, et de manière particulière en ce qu'on utilise de 0,05 % à 5 % en poids sec dudit copolymère par rapport

au poids sec des charges et/ou pigments, et plus particulièrement en ce qu'on utilise de 0,1 % à 1 % en poids sec dudit copolymère par rapport au poids sec des charges et/ou pigments. L'invention concerne aussi le procédé de fabrication de sauces de couchage mettant en oeuvre ledit copolymère.

Ce procédé de fabrication de sauces de couchage selon l'invention se caractérise en ce que l'on utilise ledit copolymère, et de manière particulière en ce qu'on utilise de 0,05 % à 5 % en poids sec dudit copolymère par rapport au poids sec des charges et/ou pigments, et plus particulièrement en ce qu'on utilise de 0,1 % à 3 % en poids sec dudit copolymère par rapport au poids sec des charges et/ou pigments.

Les suspensions aqueuses de charges et/ou pigments encore appelées matières minérales, dispersées, et/ou broyées, et/ou additivées du copolymère selon l'invention, se caractérisent en ce qu'elles contiennent ledit copolymère et plus particulièrement en ce qu'elles contiennent de 0,05 % à 5 % en poids sec dudit copolymère par rapport au poids sec total des charges et/ou pigments, et encore plus particulièrement 0,1 % à 3,0 % en poids sec dudit copolymère par rapport au poids sec des charges et/ou pigments.

Elles se caractérisent également en ce que la charge et/ou pigment est choisi parmi le carbonate de calcium, les dolomies, le kaolin, le talc, le gypse, l'oxyde de titane, le blanc satin ou encore le trihydroxyde d'aluminium, le mica et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane ou toute autre charge et/ou pigment habituellement mis en oeuvre dans le domaine papetier ainsi que leurs mélanges.

De manière préférentielle les suspensions aqueuses de matières minérales selon l'invention se caractérisent en ce que la matière minérale est du carbonate de calcium tel que le carbonate de calcium naturel choisi parmi le marbre, la calcite, la craie ou leurs mélanges.

Les charges de masse selon l'invention se caractérisent en ce qu'elles contiennent ledit copolymère et plus particulièrement en ce qu'elles contiennent de 0,05 % à 5 % en poids sec dudit copolymère par rapport au poids sec total des charges et/ou pigments, et encore plus particulièrement 0,1 % à 1 % en poids sec dudit copolymère par rapport au poids sec total des charges et/ou pigments.

Les sauces de couchage selon l'invention se caractérisent en ce qu'elles contiennent ledit copolymère et plus particulièrement en ce qu'elles contiennent de 0,05 % à 5 % en poids sec dudit copolymère par rapport au poids sec total des charges et/ou pigments, et encore plus particulièrement 0,1 % à 2 % en poids sec dudit copolymère par rapport au poids sec total des charges et/ou pigments.

Les papiers fabriqués et/ou couchés selon l'invention se caractérisent en ce qu'ils contiennent ledit copolymère.

Les compositions textiles selon l'invention se caractérisent en ce qu'elles contiennent ledit copolymère.

Les compositions détergentes selon l'invention se caractérisent en ce qu'elles contiennent ledit copolymère.

Les compositions de peinture selon l'invention se caractérisent en ce qu'elles contiennent ledit copolymère.

La portée et l'intérêt de l'invention seront mieux perçus grâce aux exemples suivants qui ne sauraient être limitatifs.

## Exemple 1

Cet exemple concerne l'utilisation de copolymères selon l'invention dans un procédé de dispersion de charges minérales. Il concerne également l'utilisation des suspensions ainsi obtenues dans la fabrication de sauces papetières, ces dites sauces étant utilisées pour coucher des papiers. Cet exemple concerne aussi les mesures de l'azurage optique et de la blancheur des papiers ainsi obtenus. Plus précisément, cet exemple a pour objet de démontrer l'efficacité d'un copolymère hydrosoluble selon l'invention contenant au moins une fonction alkoxy ou hydroxy polyalkylène glycol greffée sur au moins un monomère insaturé éthylénique, par rapport à des polymères de l'art antérieur ne disposant pas de cette fonction greffée.

Dans les essais correspondants à cet exemple, on commence par disperser une suspension de matière minérale, selon une des méthodes bien connues de l'homme du métier.

La viscosité Brookfield™ desdites suspensions est déterminée comme suit.

La viscosité Brookfield™ de la suspension est mesurée à l'aide d'un viscosimètre Brookfield™ type RVT, dans le flacon non agité, à une température de 23°C et à deux vitesses de rotation de 10 et 100 tours par minute avec le mobile adéquat. La lecture est effectuée après 1 minute de rotation. On obtient ainsi 2 mesures de viscosité Brookfield™ respectivement notées $\mu_{10}$ et $\mu_{100}$.

Après un temps de repos de 8 jours dans le flacon, la viscosité Brookfield™ de la suspension est mesurée par introduction dans le flacon du mobile adéquat du viscosimètre Brookfield™ type RVT, à une température de 23°C et à 2 vitesses de rotation de 10 et 100 tours ($\mu_{10}$ et $\mu_{100}$). La lecture est effectuée après 1 minute de rotation (viscosité Brookfield™ avant agitation). Les mêmes mesures de viscosité Brookfield™ ($\mu_{10}$ et $\mu_{100}$) sont également effectuées une fois le flacon agité pendant 5 minutes (viscosité Brookfield™ après agitation).

Lesdites suspensions entrent ensuite dans la composition des sauces de couchage. Dans cet exemple, chacune des sauces de couchage est réalisée en incorporant, pour 100 parts en poids de pigment sec de ladite suspension broyée de carbonate de calcium, 15 parts exprimées en poids sec de latex styrène-butadiène commercialisé par la société DOW CHEMICAL sous le nom DL920™, et 1 part en poids en l'état d'azurant optique commercialisé par la société BAYER sous le nom Blancophor P™. On pourra déterminer la viscosité initiale desdites sauces de couchage selon la même méthode que celle appliquée aux suspensions aqueuses de matières minérales. Lesdites sauces de couchage servent à coucher des feuilles de carton support fabriquées par la société CASCADES LA ROCHETTE, dont la blancheur est caractérisée par les paramètres $R_{457+UV}$, $R_{457-UV}$, ΔUV et W(CIE) respectivement égaux à 70,3 - 70,0 - 0,3 et 49,4. Pour chaque essai de couchage, on dispose d'une feuille de carton support de dimensions 21 x 29,7 cm avec un poids spécifique de 223 g/m$^2$ que l'on couche avec la sauce de couchage à tester. Ledit couchage est réalisé au moyen d'une coucheuse de laboratoire à barres roulantes échangeables commercialisée par la société ERICHSEN sous le nom Mod. KCC 202™. Chaque feuille de carton est ainsi couchée à 21 g/m$^2$ puis séchée dans une étuve non ventilée pendant 5 minutes à 50°C.

Essai n°1

Cet essai illustre l'art antérieur et met en oeuvre 0,75 % en poids sec mesuré par rapport au poids sec de charge minérale d'un copolymère selon l'art antérieur pour disperser une suspension de carbonate de calcium, dont 75 % en poids des particules ont un diamètre inférieur à 1 μm déterminé à l'aide d'un granulomètre Sédigraph™ 5100, et possédant une teneur en poids de matière sèche de 72 %.
Ledit copolymère est constitué (en poids) de 70 % d'acide acrylique et 30 % d'anhydride maléique. Il a une viscosité spécifique de 1,4 et est neutralisé par la soude.

Essai n°2

Cet essai illustre l'invention et met en oeuvre 0,75 % en poids sec mesuré par rapport au poids sec de charge minérale d'un copolymère selon l'invention pour disperser une suspension de carbonate de calcium, dont 75 % en poids des particules ont un diamètre inférieur à 1 μm déterminé à l'aide d'un granulomètre Sédigraph™ 5100, et possédant une teneur en poids de matière sèche de 72 %.
Ledit copolymère qui a une viscosité spécifique de 1,2 est neutralisé par la potasse et est constitué de :

a) 13,5 % d'acide acrylique et 3,5 % d'acide méthacrylique
b) 83 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q = 45

Pour les essais n° 1 et 2, on détermine l'extrait sec des sauces de couchage, leur pH, et leurs viscosités Brookfield™ à 10 et 100 tours minutes ($\mu_{10}$ et $\mu_{100}$).
On mesure enfin pour les cartons couchés les paramètres $R_{457+UV}$ et $R_{457-UV}$ selon les normes NF Q 03-038 et NF Q 03-039 puis on calcule la différence $\Delta UV = R_{457+UV} - R_{457-UV}$, et on mesure également le paramètre W(CIE) selon la norme ISO / FDIS 11475.
L'ensemble des résultats correspondant aux essais n° 1 et 2 est résumé dans le tableau I.

TABLEAU I

| **Essais** | | **Caractéristiques des sauces de couchage** | | | | **Blancheur des cartons couchés** | | | |
|---|---|---|---|---|---|---|---|---|---|
| Art antérieur / invention | N° | ES | pH | $\mu_{10}$ | $\mu_{100}$ | $R_{457+}$ UV | $R_{457-UV}$ | ΔUV | W(CIE) |
| Art Antérieur | 1 | 64,8 | 8,1 | 1780 | 325 | 88,9 | 83,7 | 5,2 | 92,4 |
| Invention | 2 | 65,1 | 8,1 | 5360 | 860 | 91,6 | 82,9 | 8,7 | 103,9 |

La lecture du tableau I montre que l'utilisation du copolymère selon l'invention contenant une fonction greffée

méthacrylate de méthoxy polyéthylène glycol de poids moléculaire 2000, telle qu'indiquée dans l'essai n° 2 à travers la description du monomère b), permet d'améliorer l'activation de l'azurage optique et la blancheur des cartons couchés, de manière significative.

D'autre part, on constate que les viscosités Brookfield™ des sauces de couchage obtenues selon l'invention sont compatibles avec l'application industrielle usuelle.

## Exemple 2

Cet exemple concerne l'utilisation de copolymères selon l'invention dans un procédé de broyage de charges minérales. Il concerne également l'utilisation des suspensions ainsi obtenues dans la fabrication de sauces papetières, ces dites sauces étant utilisées pour coucher des papiers. Cet exemple concerne aussi les mesures de l'azurage optique et de la blancheur des papiers ainsi obtenus. Cet exemple a enfin pour objet d'illustrer l'influence du taux de monomère b) sur la blancheur des papiers couchés.

Dans les essais correspondant à cet exemple, on commence par broyer une suspension de matière minérale, selon la méthode suivante.

- On utilise un broyeur du type Dyno-Mill™ à cylindre fixe et impulseur tournant, dont le corps broyant est constitué par des billes à base de zirconium de diamètre compris dans l'intervalle 0,6 millimètre à 1 millimètre.
- Le volume total occupé par le corps broyant est de 1000 centimètres cubes tandis que sa masse est de 2700 g.
- La chambre de broyage a un volume de 1400 centimètres cubes.
- La vitesse circonférentielle du broyeur est de 10 mètres par seconde.
- La suspension de pigment est recyclée à raison de 40 litres par heure.
- La sortie du Dyno-Mill™ est munie d'un séparateur de mailles 200 microns permettant de séparer la suspension résultant du broyage et le corps broyant.
- La température lors de chaque essai de broyage est maintenue à environ 60°C.

La granulométrie desdites suspensions est déterminée comme suit.

Une heure après la fin du broyage, on récupère dans un flacon un échantillon de la suspension pigmentaire dont la granulométrie (exprimée en % en poids des particules inférieures à 2 micromètres) est mesurée à l'aide d'un granulomètre Sédigraph™ 5100.

La viscosité Brookfield™ desdites suspensions est déterminée selon la méthode décrite dans l'exemple 1.

Lesdites suspensions entrent ensuite dans la composition des sauces de couchage.

Dans cet exemple, chacune des sauces de couchage est réalisée en incorporant pour 100 parts en poids de pigment sec de ladite suspension broyée de carbonate de calcium, 10 parts en poids sec de latex styrène-butadiène commercialisé par la société DOW CHEMICAL sous le nom DL950™, et 1 part en poids en l'état d'azurant optique commercialisé par la société BAYER sous le nom Blancophor P™.

Lesdites sauces de couchage servent à coucher des feuilles de papier précouchées. Leur blancheur est caractérisée par les paramètres $R_{457 + UV}$, $R_{457 - UV}$, $\Delta UV$ et W(CIE) respectivement égaux à 88,4 - 85,8 - 2,6 et 89,5.

Pour chaque essai de couchage, on dispose d'une feuille de dimensions 21 x 29,7 cm avec un poids spécifique de 96 g/$m^2$ que l'on couche avec la sauce de couchage à tester. Ledit couchage est réalisé au moyen d'une coucheuse de laboratoire à barres roulantes échangeables commercialisée par la société ERICHSEN sous le nom Mod. KCC 202™. Chaque feuille de papier est ainsi couchée à 15 g/$m^2$ puis séchée dans une étuve non ventilée pendant 5 minutes à 50 °C.

### Essai n°3

Cet essai illustre l'art antérieur et met en oeuvre 0,65 % en poids sec mesuré par rapport au poids sec de charge minérale d'un homopolymère de l'acide acrylique selon l'art antérieur pour broyer une suspension de carbonate de calcium. La suspension de carbonate de calcium contient avant broyage 20 % en poids de particules avec un diamètre inférieur à 2 $\mu$m déterminé à l'aide d'un granulomètre Sédigraph™ 5100, et possède une teneur en poids de matière sèche de 76 %.

Ledit homopolymère de l'acide acrylique a une viscosité spécifique de 0,64 et est neutralisé à l'aide d'hydroxydes de calcium et de sodium.

### Essai n°4

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 $\mu$m déterminé

à l'aide d'un granulomètre Sédigraph™ 5100, et possède une teneur en poids de matière sèche de 76 %.

Ledit copolymère qui a une viscosité spécifique de 1,08 est neutralisé par la soude et est constitué de :

a) 89,8 % d'acide acrylique et 0,2 % d'acide méthacrylique
b) 10 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q =113

Essai n°5

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.

Ledit copolymère qui a une viscosité spécifique de 1,01 est neutralisé par la soude et est constitué de :

a) 79,6 % d'acide acrylique et 0,4 % d'acide méthacrylique
b) 20 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q =113

Essai n°6

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.

Ledit copolymère qui a une viscosité spécifique de 1,08 est neutralisé par la soude et est constitué de :

a) 69,5 % d'acide acrylique et 0,5 % d'acide méthacrylique
b) 30 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q = 113

Essai n°7

Cet essai illustre l'invention et met en oeuvre 0,70 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.

Ledit copolymère qui a une viscosité spécifique de 1,56 est neutralisé par la soude et est constitué de :

a) 8,5 % acide acrylique et 1,5 % acide méthacrylique
b) 90 % d'un monomère de formule (I) dans laquelle :

$R_1$ représente l'hydrogène

$R_2$ représente l'hydrogène
R représente le groupe méthacrylate
R' représente le radical méthyle
avec (m+n+p)q = 113

Essai n°8

Cet essai illustre l'art antérieur et met en oeuvre 1 % en poids sec mesuré par rapport au poids sec de charge minérale d'un homopolymère de l'acide acrylique selon l'art antérieur pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.

Ledit homopolymère de l'acide acrylique a une viscosité spécifique de 0,64 et est neutralisé à l'aide d'hydroxydes de calcium et de sodium.

Essai n°9

Cet essai illustre l'invention et met en oeuvre 1 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.

Ledit copolymère qui a une viscosité spécifique de 0,64 est neutralisé par la soude et est constitué de :

a) 94,5 % d'acide acrylique et 0,5 % d'acide méthacrylique
b) 5 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q =113

Pour l'ensemble des essais n° 3 à 9, on détermine l'extrait sec des suspensions de matière minérale, leur pH, leur granulométrie caractérisée par le pourcentage en poids de particules inférieures à 1 et 2 μm, leurs viscosités Brookfield™ à 10 et 100 tours minutes ($\mu_{10}$ et $\mu_{100}$) déterminées à l'instant t = 0, puis à t = 8 jours, avant et après agitation.

On mesure enfin pour les papiers couchés les paramètres $R_{457} +_{UV}$ et $R_{457} -_{UV}$ selon les normes NF Q 03-038 et NF Q 03-039 puis on calcule la différence $\Delta UV = R_{457 + UV} - R_{457 - UV}$, et on mesure également le paramètre W(CIE) selon la norme ISO / FDIS 11475.

L'ensemble des résultats correspondant aux essais n° 3 à 9 est résumé dans le tableau II.

| Essais | | Composition du polymère | $\eta_{spé}$ | ES (%) | pH | Granulométrie | | Viscosités Brookfield™ (mPa.s) à t=0 | | Viscosités Brookfield™ (mPa.s) à t=8 j avant agitation | | Viscosités Brookfield™ (mPa.s) à t=8 j après agitation | | Blancheur | | | |
|---|---|---|---|---|---|---|---|---|---|---|---|---|---|---|---|---|---|
| N° | Art antérieur / Invention | | | | | %<2 µm | %<1 µm | $\mu_{10}$ | $\mu_{100}$ | $\mu_{10}$ | $\mu_{100}$ | $\mu_{10}$ | $\mu_{100}$ | $R_{457}$ +UV | $R_{457}$ -UV | ΔUV | W (CIE) |
| 3 | Art antérieur | 100 % AA | 0,64 | 75,7 | 9,5 | 89,8 | 60,5 | 510 | 200 | 3000 | 800 | 470 | 190 | 91,4 | 85,2 | 6,2 | 95,5 |
| 4 | Invention | 89,8 % AA<br>0,2 % AMA<br>10 % M MePEG5000 | 1,08 | 75,9 | 9,9 | 85,9 | 53,3 | 350 | 170 | 2510 | 640 | 450 | 200 | 92,8 | 85,2 | 7,6 | 97,4 |
| 5 | Invention | 79,6 % AA<br>0,4 % AMA<br>20 % M MePEG5000 | 1,01 | 76,2 | 9,8 | 90,1 | 60,5 | 1710 | 610 | 20400 | 2720 | 2110 | 700 | 93,1 | 85,1 | 8 | 98,4 |
| 6 | Invention | 69,5 % AA<br>0,5 % AMA<br>30 % M MePEG5000 | 1,08 | 75,3 | 9,9 | 85,7 | 55,5 | 1080 | 410 | 9560 | 1760 | 1170 | 430 | 93,4 | 84,9 | 8,5 | 100,2 |
| 7 | Invention | 8,5 % AA<br>1,5 % AMA<br>90 % M MePEG5000 | 1,56 | 75,4 | 8,4 | 76,1 | 44,8 | 1880 | 740 | 5000 | 2020 | 1660 | 690 | 92,8 | 85,5 | 7,3 | 101,2 |
| 8 | Art antérieur | 100 % AA | 0,64 | 75,8 | 9,6 | 90,4 | 61,3 | 320 | 110 | 1210 | 510 | 400 | 130 | 91,2 | 85,4 | 5,8 | 95,4 |

(suite)

| Essais | | Composition du polymère | $\eta_{spé}$ | ES (%) | pH | Granulométrie | | Viscosités Brookfield™ (mPa.s) à t=0 | | Viscosités Brookfield™ (mPa.s) à t=8 j avant agitation | | Viscosités Brookfield™ (mPa.s) à t=8 j après agitation | | Blancheur | | | |
|---|---|---|---|---|---|---|---|---|---|---|---|---|---|---|---|---|---|
| N° | Art antérieur / Invention | | | | | %<2 µm | %<1 µm | $\mu_{10}$ | $\mu_{100}$ | $\mu_{10}$ | $\mu_{100}$ | $\mu_{10}$ | $\mu_{100}$ | $R_{457}$ +UV | $R_{457}$ -UV | ΔUV | W (CIE) |
| 9 | Invention | 94,5 % AA<br>0,5 % AMA<br>5 % M MePEG5000 | 0,96 | 75,9 | 9,4 | 89,3 | 58,8 | 540 | 220 | 4440 | 1110 | 790 | 340 | 93,2 | 85,3 | 7,9 | 98,0 |

AA désigne : l'acide acrylique
AMA désigne : l'acide méthacrylique
M MePEG5000 désigne : le méthacrylate de méthoxy polyéthylène glycol de poids moléculaire 5000

La lecture du tableau II montre que les copolymères selon l'invention, utilisés dans un procédé de broyage de charges minérales, permettent d'apporter une amélioration notable de l'activation de l'azurage optique des papiers couchés, ainsi qu'une nette amélioration de leur blancheur et ce, quel que soit le taux du monomère b) tel que décrit dans les essais n° 4, 5, 6, 7 et 9.

En outre, ces résultats démontrent également que les copolymères selon l'invention, permettent d'obtenir des suspensions de charges minérales manipulables même après stockage sans agitation.

__Exemple 3__

Cet exemple concerne l'utilisation de copolymères selon l'invention dans un procédé de broyage de charges minérales. Il concerne également l'utilisation des suspensions ainsi obtenues dans la fabrication de sauces papetières, ces dites sauces étant utilisées pour coucher des papiers. Cet exemple concerne aussi la mesure de l'azurage optique et de la blancheur des papiers ainsi obtenus. Cet exemple a enfin pour objet d'illustrer l'influence de la longueur de la chaîne greffée d'alkoxy polyalkylène glycol (c'est à dire la valeur de (m+n+p)q dans la formule (I) qui entre dans la description du monomère b)), ainsi que l'influence de la nature chimique de la molécule greffant ledit groupement alkoxy polyalkylène glycol à la chaîne principale du polymère.

Dans cet exemple, on commence par broyer des suspensions de matière minérale selon le procédé décrit pour l'exemple 2. On détermine leur granulométrie ainsi que leur viscosité Brookfield™ selon les méthodes décrites pour l'exemple 2. Lesdites suspensions entrent ensuite dans la composition de sauces de couchage formulées selon la méthode décrite pour l'exemple 2. Lesdites sauces de couchage servent enfin à coucher des feuilles de papier selon le procédé décrit pour l'exemple 2, avec un poids de couche égal à 15 $g/m^2$. Lesdites feuilles sont des feuilles de papier précouchées de dimensions 21 x 29,7 cm avec un poids spécifique de 96 $g/m^2$. Leur blancheur est caractérisée par les paramètres $R_{457 + UV}$, $R_{457 - UV}$, $\Delta$UV et W(CIE) respectivement égaux à 88,4 - 85,8 - 2,6 et 89,5.

__Essai n° 10__

Cet essai illustre l'art antérieur et met en oeuvre 0,65 % en poids sec mesuré par rapport au poids sec de charge minérale d'un homopolymère de l'acide acrylique selon l'art antérieur pour broyer une suspension de carbonate de calcium. La suspension de carbonate de calcium contient avant broyage 20 % en poids de particules avec un diamètre inférieur à 2 $\mu$m déterminé à l'aide d'un granulomètre Sédigraph™ 5100, et possède une teneur en poids de matière sèche de 76 %.

Ledit homopolymère de l'acide acrylique a une viscosité spécifique de 0,64 et est neutralisé à l'aide d'hydroxydes de calcium et de sodium.

__Essai n°11__

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 $\mu$m déterminé à l'aide d'un granulomètre Sédigraph™ 5100, et possède une teneur en poids de matière sèche de 76 %.

Ledit copolymère qui a une viscosité spécifique de 0,84 est neutralisé par la soude et et constitué de :

a) 18 % d'acide méthacrylique
b) 82 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q = 8

__Essai n° 12__

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 $\mu$m déterminé à l'aide d'un granulomètre Sédigraph™ 5100, et possède une teneur en poids de matière sèche de 76 %.

Ledit copolymère qui a une viscosité spécifique de 0,78 est neutralisé par la soude et est constitué de :

a) 8,3 % acide acrylique et 8,7 % d'acide méthacrylique
b) 83 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q =17

Essai n° 13

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 $\mu$m déterminé à l'aide d'un granulomètre Sédigraph™ 5100, et possède une teneur en poids de matière sèche de 76 %.
Ledit copolymère qui a une viscosité spécifique de 1,47 est neutralisé par la soude et est constitué de :

a) 17 % d'acide acrylique
b) 77,6 % d'un monomère de formule (I) dans laquelle :

$R_1$ représente l'hydrogène
$R_2$ représente l'hydrogène
R représente le groupe méthacryuréthanne, produit de la réaction du méthacrylate d'éthylène glycol et du toluène dites
R' représente le radical méthyle
avec (m+n+p)q =113

c) 5,4 % d'acrylate d'éthyle

Essai n° 14

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 $\mu$m déterminé à l'aide d'un granulomètre Sédigraph™ 5100, et possède une teneur en poids de matière sèche de 76 %.
Ledit copolymère qui a une viscosité spécifique de 3,66 est neutralisé par la soude et est constitué de :

a) 10 % d'acide acrylique
b) 90 % d'un monomère de formule (I) dans laquelle :

$R_1$ représente l'hydrogène
$R_2$ représente l'hydrogène
R représente le groupements 3 isopropenyl $\alpha,\alpha$ diméthylbenzyl uréthanne
R' représente le radical méthyle
avec (m+n+p)q = 113

Pour l'ensemble des essais n° 10 à 14, on détermine l'extrait sec des suspensions de matière minérale, leur pH, leur granulométrie repérée par le pourcentage en poids de particules inférieures à 1 et 2 $\mu$m, leurs viscosités Brookfield™ à 10 et 100 tours minutes ($\mu_{10}$ et $\mu_{100}$) déterminées à l'instant t = 0, puis à t = 8 jours, avant et après agitation.
On mesure enfin pour les papiers couchés les paramètres $R_{457+UV}$ et $R_{457-UV}$ selon les normes NF Q 03-038 et NF Q 03-039 puis on calcule la différence $\Delta UV = R_{457+UV} - R_{457-UV}$, et on mesure également le paramètre W(CIE) selon la norme ISO / FDIS 11475.
L'ensemble des résultats correspondant aux essais n° 10 à 14 est résumé dans le tableau III.

| Essais | | Composition du polymère | $\eta_{spé}$ | ES (%) | pH | Granulométrie | | Viscosités Brookfield™ (mPa.s) à t=0 | | Viscosités Brookfield™ (mPa.s) à t=8 j avant agitation | | Viscosités Brookfield™ (mPa.s) à t=8 j après agitation | | Blancheur | | | |
|---|---|---|---|---|---|---|---|---|---|---|---|---|---|---|---|---|---|
| N° | Art antérieur/ Invention | | | | | %<2 µm | %<1 µm | $\mu_{10}$ | $\mu_{100}$ | $\mu_{10}$ | $\mu_{100}$ | $\mu_{10}$ | $\mu_{100}$ | $R_{457 + UV}$ | $R_{457 -UV}$ | Δ UV | W (CIE) |
| 10 | Art antérieur | 100 % AA | 0,64 | 76,0 | 9,4 | 60,2 | 37 | 400 | 140 | 670 | 320 | 330 | 130 | 91,4 | 84,9 | 6,5 | 95,7 |
| 11 | Invention | 18 % AMA<br>82 % M MePEG350 | 0,84 | 75,3 | 8,8 | 60,4 | 35,4 | 390 | 290 | 18750 | 2030 | 7540 | 890 | 96,5 | 85,5 | 11 | 110,9 |
| 12 | Invention | 8,3 % AA<br>8,7 % AMA<br>83 % M MePEG750 | 0,78 | 75,9 | 9,0 | 60,5 | 32,7 | 190 | 150 | 1440 | 460 | 220 | 160 | 95,6 | 85,0 | 10,6 | 109,5 |
| 13 | Invention | 17 % AA<br>77,6 % MAEG-TDI-MePEG5000<br>5,4%AE | 1,47 | 75,7 | 9,3 | 63,4 | 36,9 | 300 | 190 | 3800 | 820 | 590 | 280 | 96,1 | 85,0 | 11,1 | 112,6 |
| 14 | Invention | 10 % AA<br>90 % IDMBI MePEG5000 | 3,66 | 75,3 | 8,6 | 60,6 | 33,5 | 1630 | 460 | 12300 | 1500 | 2960 | 740 | 95,0 | 85,3 | 9,7 | 109,0 |

AA désigne: l'acide acrylique
AMA désigne : l'acide méthacrylique
AE désigne : l'acrylate d'éthyle
M MePEG350 désigne : le méthacrylate de méthoxy polyéthylène glycol de poids moléculaire 350
M MePEG750 désigne : le méthacrylate de méthoxy polyéthylène glycol de poids moléculaire 750
MAEG-TDI-MePEG5000 désigne : le méthacryluréthanne, produit de la réaction du méthacrylate d'éthylène glycol, du toluène diisocyanate et du méthoxy polyéthylène glycol de poids moléculaire 5000
IDMBI MePEG5000 désigne: le produit de la réaction du méthoxy polyéthylène glycol de poids moléculaire 5000 avec le 3 isopropenyl α,α diméthylbenzyl isocyanate

La lecture du tableau III démontre que les copolymères selon l'invention, utilisés dans un procédé de broyage de charges minérales, apportent une amélioration notable de l'azurage optique des papiers couchés et de leur blancheur et ce, pour différentes natures du monomère b) contenant le groupement alkoxy polyalkylène glycol d'une part, et d'autre part pour une valeur de (m+n+p)q comprise entre 5 et 150, dans la définition du monomère b) tel que décrit à travers la formule (I).

En outre, ces résultats démontrent également que les copolymères selon l'invention, permettent d'obtenir des suspensions de charges minérales manipulables même après stockage sans agitation.

<u>Exempte 4</u>

Cet exemple concerne l'utilisation de copolymères selon l'invention dans un procédé de broyage de charges minérales. Il concerne également l'utilisation des suspensions ainsi obtenues dans la fabrication de sauces papetières, ces dites sauces étant utilisées pour coucher des papiers. Cet exemple concerne aussi la mesure de l'azurage optique et de la blancheur des papiers ainsi obtenus. Cet exemple a enfin pour objet d'illustrer l'influence de la nature du monomère choisi parmi les constituants c) et d) du copolymère selon l'invention.

Dans cet exemple, on commence par broyer des suspensions de matière minérale selon le procédé décrit pour l'exemple 2. On détermine leur granulométrie ainsi que leur viscosité Brookfield™ selon les méthodes décrites pour l'exemple 2. Lesdites suspensions entrent ensuite dans la composition de sauces de couchage formulées selon la méthode décrite pour l'exemple 2. Lesdites sauces de couchage servent enfin à coucher des feuilles de papier selon le procédé décrit pour l'exemple 2, avec un poids de couche égal à 15 $g/m^2$. Lesdites feuilles sont des feuilles de papier précouchées de dimensions 21 x 29,7 cm avec un poids spécifique de 96 $g/m^2$. Leur blancheur est caractérisée par les paramètres $R_{457\ +\ UV}$, $R_{457\ -\ UV}$, ΔUV et W(CIE) respectivement égaux à 88,4 - 85,8 - 2,6 et 89,5.

<u>Essai n° 15</u>

Cet essai illustre l'art antérieur et met en oeuvre 0,70 % en poids sec mesuré par rapport au poids sec de charge minérale d'un homopolymère de l'acide acrylique selon l'art antérieur pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.

Ledit homopolymère de l'acide acrylique a une viscosité spécifique de 0,64 et est neutralisé à l'aide d'hydroxydes de calcium et de sodium.

<u>Essai n° 16</u>

Cet essai illustre l'invention et met en oeuvre 0,70 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.

Ledit copolymère qui a une viscosité spécifique de 2,74 est neutralisé par la soude et est constitué de :

a) 11,8 % d'acide acrylique et 16 % d'acide méthacrylique
b) 69,2 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q =113

c) 3 % d'un monomère de formule (IIb) dans laquelle :

R représente le groupe vinylique
B représente le radical éthyle

<u>Essai n° 17</u>

Cet essai illustre l'invention et met en oeuvre 0,70 % en poids sec mesuré par rapport au poids sec de charge

minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.

Ledit copolymère qui a une viscosité spécifique de 2,88 est neutralisé par la soude et est constitué de :

a) 11,8 % d'acide acrylique et 16 % d'acide méthacrylique
b) 69,2 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q = 113

c) 3 % d'un monomère de formule (IIb) dans laquelle :

R représente le groupe méthacrylate
A représente une chaîne propyle
B représente le radical méthyle

Essai n° 18

Cet essai illustre l'invention et met en oeuvre 0,70 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.

Ledit copolymère qui a une viscosité spécifique de 3,52 est neutralisé par la soude et est constitué de :

a) 11,8 % d'acide acrylique et 16 % d'acide méthacrylique
b) 69,2 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q =113

c) 3 % d'un monomère de formule (IIb) dans laquelle :

R représente le groupe méthacrylate
A représente une chaîne propyle
B représente le radical méthyle

Essai n° 19

Cet essai illustre l'invention et met en oeuvre 0,70 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.

Ledit copolymère qui a une viscosité spécifique de 1,99 est neutralisé par la soude et est constitué de :

a), 11,8 % d'acide acrylique et 16 % d'acide méthacrylique b) 69,2 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q =113

c) 3 % d'un monomère de formule (IIb) dans laquelle :

R représente le groupe méthacrylate
A représente une chaîne propyle
B représente le radical méthyle

Essai n°20

Cet essai illustre l'invention et met en oeuvre 0,70 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.
Ledit copolymère qui a une viscosité spécifique de 2,74 est neutralisé par la soude et est constitué de :

a) 11,8 % d'acide acrylique et 16 % d'acide méthacrylique
b) 69,2 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q = 113

c) 3 % d'acrylate de 2 éthyl perfluoro alkyle constitué d'un motif contenant 21 atomes de fluor et 10 atomes de carbone

Essai n°21

Cet essai illustre l'invention et met en oeuvre 0,70 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.
Ledit copolymère qui a une viscosité spécifique de 2,78 est neutralisé par la soude et est constitué de :

a) 11,8 % d'acide acrylique et 16 % d'acide méthacrylique
b) 68,9 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q = 113
et 3 % d'un monomère de formule (I) dans laquelle :
$R_1$ représente le radical méthyle
$R_2$ représente l'hydrogène
R représente le groupe méthacrylate
R' représente le radical butyle
avec (m+n+p)q = 32

d) 0,3 % de diméthacrylate d'éthylène glycol.

Essai n°22

Cet essai illustre l'invention et met en oeuvré 0,70 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.
Ledit copolymère qui a une viscosité spécifique de 2,80 est neutralisé par la soude et est constitué de :

a) 11,8 % d'acide acrylique et 16 % d'acide méthacrylique
b) 68,9 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q =113
et 3% d'un monomère de formule (I) dans laquelle :
$R_1$ représente le radical méthyle
$R_2$ représente l'hydrogène
R représente le groupe méthacrylamido
R' représente le radical méthyle
avec (m+n+p)q = 22

d) 0,3 % d'un monomère de formule (III) dans laquelle :

$R_{13}$ représente le radical méthacrylate de propyle
$R_{16}$, $R_{17}$, $R_{18}$ et $R_{19}$ représentent le groupement méthyle
D et E ne sont pas présents
m3 = n3 = p3 = m4 = n4 = p4 = 0
r'=14

Pour l'ensemble des essais de n° 15 à 22, on détermine l'extrait sec des suspensions de matière minérale, leur pH, leur granulométrie caractérisée par le pourcentage en poids de particules inférieures à 1 et 2 μm, leurs viscosités Brookfield™ à 10 et 100 tours minutes ($\mu_{10}$ et $\mu_{100}$) déterminées à l'instant t = 0, puis à t = 8 jours, avant et après agitation.
On mesure enfin pour les papiers couchés les paramètres $R_{457 + UV}$ et $R_{457 - UV}$ selon les normes NF Q 03-038 et NF Q 03-039 puis on calcule la différence $\Delta UV = R_{457+ UV} - R_{457 - UV}$, et on mesure également le paramètre W(CIE) selon la norme ISO / FDIS 11475.
L'ensemble des résultats correspondant aux essais n° 15 à 22 est résumé dans le tableau IV.

| Essais | | Composition du polymère | $\eta_{spé}$ | ES (%) | pH | Granulométrie | | Viscosités Brookfield™ (mPa.s) à t=0 | | Viscosités Brookfield™ (mPa.s) à t=8 j avant agitation | | Viscosités Brookfield™ (mPa.s) à t=8 j après agitation | | Blancheur | | | |
|---|---|---|---|---|---|---|---|---|---|---|---|---|---|---|---|---|---|
| N° | Art antérieur/ Invention | | | | | %<2 µm | %<1 µm | $\mu_{10}$ | $\mu_{100}$ | $\mu_{10}$ | $\mu_{100}$ | $\mu_{10}$ | $\mu_{100}$ | $R_{457\ +UV}$ | $R_{457\ -UV}$ | Δ UV | W (CIE) |
| 15 | Art antérieur | 100%AA | 0,64 | 76,0 | 9,0 | 90,1 | 59,6 | 390 | 150 | 1000 | 360 | 310 | 140 | 91,1 | 85,0 | 6 | 93 |
| 16 | Invention | 11,8 % AA<br>16 % AMA<br>69,2 % M MePEG 5000<br>3 % vinyl triéthoxy silane | 2,74 | 76,5 | 9,3 | 79,1 | 46,1 | 1930 | 560 | 16000 | 2030 | 1670 | 570 | 94,8 | 85,4 | 9,4 | 107,1 |
| 17 | Invention | 11,8% AA<br>16% AMA<br>69,2 % M MePEG 5000<br>3 % 3-méthacryloxy propyl triméthyl silane | 2,88 | 75,4 | 9,1 | 78,3 | 45,3 | 810 | 320 | 8480 | 1340 | 940 | 380 | 95,0 | 85,4 | 9,6 | 107,6 |
| 18 | Invention | 11,08% AA<br>16% AMA<br>69,2 % M MePEG 5000<br>3 % 3-méthacryloxy propyl triméthyl silane | 3,52 | 76,1 | 9,2 | 75,8 | 44,1 | 1890 | 560 | 13980 | 1850 | 1120 | 420 | 94,8 | 85,2 | 9,4 | 107 |

(suite)

| Essais | | Composition du polymère | $\eta_{spé}$ | ES (%) | pH | Granulo-métrie | | Viscosités Brookfield™ (mPa.s) à t=0 | | Viscosités Brookfield™ (mPa.s) à t=8 j avant agitation | | Viscosités Brookfield™ (mPa.s) à t=8 j après agitation | | Blancheur | | | |
|---|---|---|---|---|---|---|---|---|---|---|---|---|---|---|---|---|---|
| N° | Art antérieur/ Invention | | | | | %<2 µm | %<1 µm | $\mu_{10}$ | $\mu_{100}$ | $\mu_{10}$ | $\mu_{100}$ | $\mu_{10}$ | $\mu_{100}$ | $R_{457\ +UV}$ | $R_{457\ -UV}$ | Δ UV | W (CIE) |
| 19 | Invention | 11,8 % AA 16 % AMA 72,2 % M MePEG 5000 3 % 3-méthacryloxy propyl triméthyl silane | 1,99 | 75,3 | 9,0 | 81,1 | 48,3 | 750 | 290 | 8080 | 1430 | 1340 | 430 | 95 | 85,6 | 9,6 | 107,3 |
| 20 | Invention | 11,8 % AA 16 % AMA 69,2 % M MePEG 5000 3 % acrylate de 2-éthyl perfluoro alkyle | 2,74 | 76,2 | 9,3 | 80,5 | 47,8 | 2390 | 680 | 14880 | 1900 | 1960 | 610 | 94,8 | 85,4 | 9,4 | 107,1 |

(suite)

| Essais | | Composition du polymère | $\eta$ spé | ES (%) | pH | Granulo-métrie | | Viscosités Brookfield™ (mPa.s) à t=0 | | Viscosités Brookfield™ (mPa.s) à t=8 j avant agitation | | Viscosités Brookfield™ (mPa.s) à t=8 j après agitation | | Blancheur | | | |
|---|---|---|---|---|---|---|---|---|---|---|---|---|---|---|---|---|---|
| N° | Art antérieur/ Invention | | | | | %<2 µm | %<1 µm | $\mu_{10}$ | $\mu_{100}$ | $\mu_{10}$ | $\mu_{100}$ | $\mu_{10}$ | $\mu_{100}$ | $R_{457\ +UV}$ | $R_{457\ -UV}$ | $\Delta$ UV | W (CIE) |
| 21 | Invention | 11,8 % AA<br>16 % AMA<br>68,9 % M MePEG 5000<br>3 % méthacrylate de butoxy 16 OE 16 OP 1700<br>0,3 % diméthacrylate d'éthylène glycol | 2,78 | 76,3 | 9,2 | 82,6 | 49,9 | 3460 | 820 | 15560 | 2210 | 4160 | 1020 | 93,8 | 85,4 | 8,4 | 104,4 |

(suite)

| Essais | | Composition du polymère | η spé | ES (%) | pH | Granulométrie | | Viscosités Brookfield™ (mPa.s) à t=0 | | Viscosités Brookfield™ (mPa.s) à t=8 j avant agitation | | Viscosités Brookfield™ (mPa.s) à t=8 j après agitation | | Blancheur | | | |
|---|---|---|---|---|---|---|---|---|---|---|---|---|---|---|---|---|---|
| N° | Art antérieur/ Invention | | | | | %<2 µm | %<1 µm | $\mu_{10}$ | $\mu_{100}$ | $\mu_{10}$ | $\mu_{100}$ | $\mu_{10}$ | $\mu_{100}$ | $R_{457\ +UV}$ | $R_{457\ -UV}$ | Δ UV | W (CIE) |
| 22 | Invention | 11,8 % AA<br>16 % AMA<br>68,9 % M MePEG 5000<br>3 % méthacrylamido méthoxy OE 19 OP3<br>0,3 % diméthacrylate de siloxane de poids moléculaire 1100 | 2,80 | 76,4 | 9,4 | 78,6 | 46,5 | 1980 | 570 | 11520 | 1840 | 1760 | 580 | 94,5 | 85,4 | 9,1 | 106,5 |

AA désigne : l'acide acrylique
AMA désigne : l'acide méthacrylique
M MePEG5000 : désigne le méthacrylate de méthoxy polyéthylène glycol de poids moléculaire 5000
méthacrylate de butoxy 16 OE 16 OP 1700 désigne : le monomère b) du copolymère selon l'invention tel que décrit dans l'essai 21
méthacrylamido méthoxy OE 19 OP3 désigne : le monomère b) du copolymère selon l'invention tel que décrit dans l'essai 22
diméthacrylate de siloxane de poids moléculaire 1100 désigne : le monomère d) du copolymère selon l'invention tel que décrit dans l'essai 22

La lecture du tableau IV démontre que les copolymères selon l'invention, utilisés dans un procédé de broyage de charges minérales, apportent une amélioration notable de l'azurage optique des papiers couchés et de leur blancheur et ce, pour différents monomères c) ou d) du copolymère selon l'invention.
En outre, ces résultats démontrent également que les copolymères selon l'invention, permettent d'obtenir des suspensions de charges minérales manipulables même après stockage sans agitation.

**Exemple 5**

Cet exemple concerne l'utilisation de copolymères selon l'invention dans un procédé de broyage de charges minérales. Il concerne également l'utilisation des suspensions ainsi obtenues dans la fabrication de sauces papetières, ces dites sauces étant utilisées pour coucher des papiers. Cet exemple concerne aussi la mesure de l'azurage optique et de la blancheur des papiers ainsi obtenus. Cet exemple a enfin pour objet d'illustrer l'influence de la viscosité spécifique du copolymère selon l'invention, pour une composition monomérique constante.
Dans cet exemple, on commence par broyer des suspensions de matière minérale selon le procédé décrit pour l'exemple 2. On détermine leur granulométrie ainsi que leur viscosité Brookfield™ selon les méthodes décrites pour l'exemple 2. Lesdites suspensions entrent ensuite dans la composition de sauces de couchage formulées selon la méthode décrite pour l'exemple 2. Lesdites sauces de couchage servent enfin à coucher des feuilles de papier selon le procédé décrit pour l'exemple 2, avec un poids de couche égal à 15 g/m$^2$. Lesdites feuilles sont des feuilles de papier précouchées de dimensions 21 x 29,7 cm avec un poids spécifique de 96 g/m$^2$. Leur blancheur est caractérisée par les paramètres $R_{457 + UV}$, $R_{457 - UV}$, ΔUV et W(CIE) respectivement égaux à 88,4 - 85,8 - 2,6 et 89,5.
Pour les essais n° 23 à 28, la composition en poids du copolymère selon l'invention est constante et égale à :

a) 18,6 % d'acide acrylique et 1,4 % d'acide méthacrylique
b) 80 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q = 113

Essai n°23

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.
Ledit copolymère qui a une viscosité spécifique de 0,77 est neutralisé par la soude.

Essai n°24

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.
Ledit copolymère qui a une viscosité spécifique de 1,00 est neutralisé par la soude.

Essai n°25

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.
Ledit copolymère qui a une viscosité spécifique de 1,40 est neutralisé par la soude.

Essai n°26

Cet essai illustre l'invention et met en oeuvre 0,65 % en poids sec mesuré par rapport au poids sec de charge

minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.

Ledit copolymère qui a une viscosité spécifique de 2,72 est neutralisé par la soude.

Essai n°27

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et. possède une teneur en poids de matière sèche de 76 %.

Ledit copolymère qui a une viscosité spécifique de 4,79 est neutralisé par la soude.

Essai n°28

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.

Ledit copolymère qui a une viscosité spécifique de 7,85 et est neutralisé par la soude.

Les copolymères selon l'invention tels que décrits dans les essais n° 23 à 28 sont comparés dans cet exemple au polymère de l'art antérieur décrit dans l'essai n° 10 de l'exemple 3.

Pour l'ensemble des essais de n° 23 à 28, on détermine l'extrait sec des suspensions de matière minérale, leur pH, leur granulométrie caractérisée par le pourcentage en poids de particules inférieures à 1 et 2 μm, leurs viscosités Brookfield™ à 10 et 100 tours minutes ($\mu_{10}$ et $\mu_{100}$) déterminées à l'instant t = 0, puis à t = 8 jours, avant et après agitation.

On mesure enfin pour les papiers couchés les paramètres $R_{457 + UV}$ et $R_{457 - UV}$ selon les normes NF Q 03-038 et NF Q 03-039 puis on calcule la différence $\Delta UV = R_{457 + UV} - R_{457 - UV}$, et on mesure également le paramètre W(CIE) selon la norme ISO / FDIS 11475.

L'ensemble des résultats correspondant aux essais n° 23 à 28 est résumé dans le tableau V.

| Essais N° | Essais Art antérieur / Invention | Composition du polymère | $\eta_{spé}$ | ES (%) | pH | Granulométrie %<2 µm | Granulométrie %<1 µm | Viscosités Brookfield™ (mPa.s) à t=0 $\mu_{10}$ | Viscosités Brookfield™ (mPa.s) à t=0 $\mu_{100}$ | Viscosités Brookfield™ (mPa.s) à t=8 j avant agitation $\mu_{10}$ | Viscosités Brookfield™ (mPa.s) à t=8 j avant agitation $\mu_{100}$ | Viscosités Brookfield™ (mPa.s) à t=8 j après agitation $\mu_{10}$ | Viscosités Brookfield™ (mPa.s) à t=8 j après agitation $\mu_{100}$ | Blancheur $R_{157\ +UV}$ | Blancheur $R_{457\ -UV}$ | Blancheur Δ UV | Blancheur W (CIE) |
|---|---|---|---|---|---|---|---|---|---|---|---|---|---|---|---|---|---|
| 10 | Art antérieur | 100 % AA | 0,64 | 76,0 | 9,4 | 60,2 | 37 | 400 | 140 | 670 | 320 | 330 | 130 | 91,4 | 84,9 | 6,5 | 95,7 |
| 23 | Invention | 18,6 % AA | 0,77 | 75,5 | 8,8 | 47,5 | 25,5 | 6380 | 1220 | 10800 | 2090 | 6680 | 1320 | 96,7 | 84,9 | 11,8 | 113,8 |
| 24 | Invention | | 1,00 | 75,0 | 9,1 | 59,4 | 34,4 | 160 | 140 | 1880 | 600 | 250 | 190 | 96,2 | 84,8 | 11,4 | 112,7 |
| 25 | Invention | 1,4 % AMA | 1,40 | 75,2 | 9,2 | 65,3 | 37,9 | 270 | 160 | 1880 | 580 | 320 | 180 | 96,9 | 84,9 | 12 | 114,9 |
| 26 | Invention | | 2,72 | 75,4 | 9,4 | 57,2 | 30,4 | 810 | 310 | 5200 | 1150 | 990 | 350 | 96,9 | 84,8 | 12,1 | 115,1 |
| 27 | Invention | 80 %M | 4,79 | 54,7 | 9,2 | 54,7 | 28,9 | 1270 | 360 | 8600 | 1220 | 990 | 330 | 97,3 | 85,9 | 11,4 | 114,7 |
| 28 | Invention | MePEG5000 | 7,85 | 75,5 | 9,7 | 52,6 | 27,4 | 380 | 190 | 4660 | 970 | 530 | 240 | 97,8 | 85,8 | 12 | 114,9 |

AA désigne : l'acide acrylique
AMA désigne : l'acide méthacrylique
M MePEG5000 désigne : le méthacrylate de méthoxy polyéthylène glycol de poids moléculaire 5000

La lecture du tableau V démontre que les copolymères selon l'invention, utilisés dans un procédé de broyage de charges minérales, apportent une amélioration notable de l'activation de l'azurage optique des papiers couchés et de leur blancheur, pour une large gamme de viscosité spécifique allant de 0,5 à 8.

En outre, ces résultats démontrent également que les copolymères selon l'invention, permettent d'obtenir des suspensions de charges minérales manipulables même après stockage sans agitation.

## Exemple 6

Cet exemple concerne l'utilisation de copolymères selon l'invention dans un procédé de broyage de charges minérales. Il concerne également l'utilisation des suspensions ainsi obtenues dans la fabrication de sauces papetières, ces dites sauces étant utilisées pour coucher des papiers. Cet exemple concerne aussi la mesure de l'azurage optique et de la blancheur des papiers ainsi obtenus. Cet exemple a enfin pour objet d'illustrer l'influence de la composition monomérique d'un copolymère selon l'invention, pour un taux constant de méthacrylate de méthoxy polyéthylène glycol de poids moléculaire 5000.

Dans cet exemple, on commence par broyer des suspensions de matière minérale selon le procédé décrit pour l'exemple 2. On détermine leur granulométrie ainsi que leur viscosité Brookfield™ selon les méthodes décrites pour l'exemple 2. Lesdites suspensions entrent ensuite dans la composition de sauces de couchage formulées selon la méthode décrite pour l'exemple 2. Lesdites sauces de couchage servent enfin à coucher des feuilles de papier selon le procédé décrit pour l'exemple 2, avec un poids de couche égal à 15 g/m$^2$. Lesdites feuilles sont des feuilles de papier précouchées de dimensions 21 x 29,7 cm avec un poids spécifique de 96 g/m$^2$. Leur blancheur est caractérisée par les paramètres $R_{457 + UV}$, $R_{457 - UV}$, $\Delta$UV et W(CIE) respectivement égaux à 88,4 - 85,8 - 2,6 et 89,5.

Essai n°29

Cet essai illustre l'art antérieur et met en oeuvre 0,65 % en poids sec mesuré par rapport au poids sec de charge minérale d'un homopolymère de l'acide acrylique selon l'art antérieur pour broyer une suspension de carbonate de calcium. La suspension de carbonate de calcium contient avant broyage 20 % en poids de particules avec un diamètre inférieur à 2 $\mu$m déterminé à l'aide d'un granulomètre Sédigraph™ 5100, et possède une teneur en poids de matière sèche de 76 %.

Ledit homopolymère de l'acide acrylique a une viscosité spécifique de 0,64 et est neutralisé à l'aide d'hydroxydes de calcium et de sodium.

Essai n°30

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 $\mu$m déterminé à l'aide d'un granulomètre Sédigraph™ 5100, et possède une teneur en poids de matière sèche de 76 %.

Ledit copolymère qui a une viscosité spécifique de 1,34 est neutralisé par la soude et est constitué de :

a) 8,6 % d'acide acrylique et 1,4 % d'acide méthacrylique
b) 80 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q = 113

c) 10 % d'acrylamide

Essai n°31

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 $\mu$m déterminé à l'aide d'un granulomètre Sédigraph™ 5100, et possède une teneur en poids de matière sèche de 76 %.

Ledit copolymère qui a une viscosité spécifique de 1,24 est neutralisé par la soude et est constitué de :

a) 8,6 % d'acide acrylique, 1,4 % d'acide méthacrylique et 10 % d'acide itaconique
b) 80 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q =113

Essai n°32

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.
Ledit copolymère qui a une viscosité spécifique de 1,38 est neutralisé par la soude et est constitué de :

a) 8,6 % d'acide acrylique, 1,4 % d'acide méthacrylique et 10 % de phosphate de méthacrylate d'éthylène glycol
b) 80 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q =113

Essai n°33

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.
Ledit copolymère qui a une viscosité spécifique de 1,24 est neutralisé par la soude et est constitué de :

a) 8,6 % d'acide acrylique, 1,4 % d'acide méthacrylique et 10 % d'acide acrylamido méthyl propane sulfonique
b) 80 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q =113

Essai n°34

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.
Ledit copolymère qui a une viscosité spécifique de 1,92 est neutralisé par la soude et est constitué de :

a) 20 % d'acide méthacrylique
b) 80 % d'un monomère de formule (I) dans laquelle :

$R_1$ représente l'hydrogène
$R_2$ représente l'hydrogène
R représente le groupe méthacrylate
R' représente le radical méthyle

avec (m+n+p)q =113

Les copolymères selon l'invention tels que décrits dans les essais n° 30 à 33 sont comparés dans cet exemple au polymère de l'art antérieur décrit dans l'essai n° 10 de l'exemple 3. Le copolymère selon l'invention tel que décrit dans l'essai n° 34 est comparé dans cet exemple au polymère de l'art antérieur décrit dans l'essai n° 29 de cet exemple. En effet, comme on le voit dans le tableau de valeurs correspondant, on compare des polymères ayant permis d'obtenir des suspensions de matière minérale de granulométries semblables.

Pour l'ensemble des essais n° 30 à 34, on détermine l'extrait sec des suspensions de matière minérale, leur pH, leur granulométrie caractérisée par le pourcentage en poids de particules inférieures à 1 et 2 μm, leurs viscosités Brookfield™ à 10 et 100 tours minutes ($\mu_{10}$ et $\mu_{100}$) déterminées à l'instant t = 0, puis à t = 8 jours, avant et après agitation.

On mesure enfin pour les papiers couchés les paramètres $R_{457 + UV}$ et $R_{457 - UV}$ selon les normes NF Q 03-038 et NF Q 03-039 puis on calcule la différence $\Delta UV = R_{457 + UV} - R_{457 - UV}$, et on mesure également le paramètre W(CIE) selon la norme ISO / FDIS 11475.

L'ensemble des résultats correspondant aux essais n° 30 à 34 est résumé dans le tableau VI.

| Essais | | Composition du polymère | $\eta_{spé}$ | ES (%) | pH | Granulométrie | | Viscosités Brookfield™ (mPa.s) à t=0 | | Viscosités Brookfield™ (mPa.s) à t=8 j avant agitation | | Viscosités Brookfield™ (mPa.s) à t=8 j après agitation | | Blancheur | | | |
|---|---|---|---|---|---|---|---|---|---|---|---|---|---|---|---|---|---|
| N° | Art antérieur/ Invention | | | | | %<2 µm | %<1 µm | $\mu_{10}$ | $\mu_{100}$ | $\mu_{10}$ | $\mu_{100}$ | $\mu_{10}$ | $\mu_{100}$ | $R_{457\ +UV}$ | $R_{457\ -UV}$ | Δ UV | W (CIE) |
| 10 | Art antérieur | 100 % AA | 0,64 | 76,0 | 9,4 | 60,2 | 37 | 400 | 140 | 670 | 320 | 330 | 130 | 91,4 | 84,9 | 6,5 | 95,7 |
| 30 | Invention | 8,6 % AA 1,4 % AMA 10 % Acrylamide 80 % M MePEG5000 | 1,34 | 75,4 | 8,6 | 62,2 | 35,9 | 240 | 170 | 2000 | 720 | 390 | 230 | 97,1 | 85,1 | 12 | 114,9 |
| 31 | Invention | 8,6 % AA 1,4 % AMA 10 % Acide Itaconique 80 % M MePEG5000 | 1,24 | 75,9 | 9,0 | 61,6 | 34 | 260 | 150 | 1320 | 570 | 370 | 180 | 97,2 | 84,7 | 12,5 | 115,6 |
| 32 | Invention | 8,6 % AA 1,4 % AMA 10 % Phosphate de MAEG 80 % M MePEG5000 | 1,38 | 75,6 | 9,0 | 58,7 | 31,8 | 300 | 170 | 1480 | 420 | 280 | 170 | 97,0 | 84,8 | 12,2 | 115,0 |

(suite)

| Essais | | Composition du polymère | $\eta_{spé}$ | ES (%) | pH | Granulométrie | | Viscosités Brookfield™ (mPa.s) à t=0 | | Viscosités Brookfield™ (mPa.s) à t=8 j avant agitation | | Viscosités Brookfield™ (mPa.s) à t=8 j après agitation | | Blancheur | | | |
|---|---|---|---|---|---|---|---|---|---|---|---|---|---|---|---|---|---|
| N° | Art antérieur/ Invention | | | | | %<2 µm | %<1 µm | $\mu_{10}$ | $\mu_{100}$ | $\mu_{10}$ | $\mu_{100}$ | $\mu_{10}$ | $\mu_{100}$ | $R_{457\ +UV}$ | $R_{457\ -UV}$ | Δ UV | W (CIE) |
| 33 | Invention | 8,6 % AA 1,4 % AMA 10 % AMPS 80 % M MePEG5000 | 1,24 | 75,4 | 8,7 | 58,7 | 31,6 | 210 | 180 | 1380 | 610 | 350 | 220 | 97,1 | 85,1 | 12 | 111,5 |
| 29 | Art antérieur | 100 % AA | 0,64 | 75,7 | 9,5 | 82,8 | 50,0 | 450 | 180 | 2700 | 600 | 410 | 150 | 91,0 | 85,0 | 6,0 | 95,2 |
| 34 | Invention | 20% AMA 80 % M MePEG5000 | 1,92 | 75,8 | 8,9 | 81,2 | 48,7 | 1220 | 450 | 12900 | 2040 | 2920 | 780 | 96,8 | 85,5 | 11,3 | 113,8 |

AA désigne : l'acide acrylique
AMA désigne : l'acide méthacrylique
Phosphate de MAEG désigne : le phosphate de méthacrylate d'éthylène glycol
AMPS désigne : l'acide acrylamido méthyl propane sulfonique
M MePEG5000 désigne : le méthacrylate de méthoxy polyéthylène glycol de poids moléculaire 5000

La lecture du tableau VI démontre que les copolymères selon l'invention, utilisés dans un procédé de broyage de charges minérales, apportent une amélioration notable de l'activation de l'azurage optique des papiers couchés et de leur blancheur, pour un taux constant de méthacrylate de méthoxy polyéthylène glycol de poids moléculaire 5000 et ce, pour une large variété de compositions monomériques.
En outre, ces résultats démontrent également que les copolymères selon l'invention, permettent d'obtenir des suspensions de charges minérales manipulables même après stockage sans agitation.

**Exemple 7**

Cet exemple concerne l'utilisation de copolymères selon l'invention dans un procédé de broyage de charges minérales. Il concerne également l'utilisation des suspensions ainsi obtenues dans la fabrication de sauces papetières, ces dites sauces étant utilisées pour coucher des papiers. Cet exemple concerne aussi la mesure de l'azurage optique et de la blancheur des papiers ainsi obtenus. Cet exemple a enfin pour objet d'illustrer l'influence du taux et de la nature du système de neutralisation du copolymère selon l'invention, pour une composition monomérique constante.
Dans cet exemple, on commence par broyer des suspensions de matière minérale selon le procédé décrit pour l'exemple 2. On détermine leur granulométrie ainsi que leur viscosité Brookfield™ selon les méthodes décrites pour l'exemple 2. Lesdites suspensions entrent ensuite dans la composition de sauces de couchage formulées selon la méthode décrite pour l'exemple 2. Lesdites sauces de couchage servent enfin à coucher des feuilles de papier selon le procédé décrit pour l'exemple 2, avec un poids de couche égal à 15 g/m$^2$. Lesdites feuilles sont des feuilles de papier pigmentées de dimensions 21 x 29,7 cm avec un poids spécifique de 96 g/m$^2$. Leur blancheur est caractérisée par les paramètres $R_{457 + UV}$, $R_{457 - UV}$, $\Delta$UV et W(CIE) respectivement égaux à 90,9 - 83,8 - 7,1 et 103,6.
Pour les essais n° 36 à 39 et 41 à 44, la composition du copolymère selon l'invention est constante et fixée en poids à :

a) 11,8 % d'acide acrylique et 16 % d'acide méthacrylique
b) 72,2 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q = 8

Essai n°35

Cet essai illustre l'art antérieur et met en oeuvre 0,65 % en poids sec mesuré par rapport au poids sec de charge minérale d'un homopolymère de l'acide acrylique selon l'art antérieur pour broyer une suspension de carbonate de calcium. La suspension de carbonate de calcium contient avant broyage 20 % en poids de particules avec un diamètre inférieur à 2 µm déterminé à l'aide d'un granulomètre Sédigraph™ 5100, et possède une teneur en poids de matière sèche dé 76 %.
Ledit homopolymère qui a une viscosité spécifique de 0,64 quand il est neutralisé par de la soude, est neutralisé par un système composé en moles de 70 % d'ions sodium et 30 % d'ions calcium pour cet essai.

Essai n°36

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 µm déterminé à l'aide d'un granulomètre Sédigraph™ 5100, et possède une teneur en poids de matière sèche de 76 %.
Ledit copolymère qui a une viscosité spécifique de 1,08 quand il est neutralisé par de la soude, est totalement neutralisé par l'ion potassium pour cet essai.

Essai n°37

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 µm déterminé à l'aide d'un granulomètre Sédigraph™ 5100, et possède une teneur en poids de matière sèche de 76 %.

Ledit copolymère qui a une viscosité spécifique de 1,08 quand il est neutralisé par de la soude, est neutralisé par un système composé en moles de 70 % d'ions sodium et 30 % d'ions calcium pour cet essai.

Essai n°38

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.

Ledit copolymère qui a une viscosité spécifique de 1,08 quand il est neutralisé par de la soude, est neutralisé par un système composé en moles de 50 % d'ions sodium et 50 % d'ions magnésium pour cet essai.

Essai n°39

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.

Ledit copolymère qui a une viscosité spécifique de 1,08 quand il est neutralisé par de la soude, est neutralisé par l'amino méthyl propanol pour cet essai.

Essai n°40

Cet essai illustre l'art antérieur et met en oeuvre 0,65 % en poids sec mesuré par rapport au poids sec de charge minérale d'un homopolymère de l'acide acrylique selon l'art antérieur pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.

Ledit homopolymère qui a une viscosité spécifique de 0,64 quant il est neutralisé par de la soude, est neutralisé par un système composé en moles de 70 % d'ions sodium et 30 % d'ions calcium pour cet essai.

Essai n°41

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.

Ledit copolymère qui a une viscosité spécifique de 1,08 quand il est neutralisé par de la soude, n'est pas neutralisé pour cet essai (toutes ses fonctions carboxyliques restent acides).

Essai n°42

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.

Ledit copolymère qui a une viscosité spécifique de 1,08 quand il est neutralisé par de la soude, est totalement neutralisé par la triéthanolamine pour cet essai.

Essai n°43

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 76 %.

Ledit copolymère qui a une viscosité spécifique de 1,08 quand il est neutralisé par de la soude, est totalement neutralisé par l'ion ammonium pour cet essai.

Essai n° 44

Cet essai illustre l'invention et met en oeuvre 0,65 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 µm déterminé à l'aide d'un granulomètre Sédigraph™ 5100, et possède une teneur en poids de matière sèche de 76 %.

Ledit copolymère qui a une viscosité spécifique de 1,08 quand il est neutralisé par de la soude, est neutralisé à 50 % par l'ion potassium, 50 % de ses fonctions restant acides.

Pour l'ensemble des essais de n° 35 à 44, on détermine l'extrait sec des suspensions de matière minérale, leur pH, leur granulométrie caractérisée par le pourcentage en poids de particules inférieures à 1 et 2 µm, leurs viscosités Brookfield™ à 10 et 100 tours minutes ($\mu_{10}$ et $\mu_{100}$) déterminées à l'instant t = 0, puis à t = 8 jours, avant et après agitation.

On mesure enfin pour les papiers couchés les paramètres $R_{457 + UV}$ et $R_{457 - UV}$ selon les normes NF Q 03-038 et NF Q 03-039 puis on calcule la différence $\Delta UV = R_{457 + UV} - R_{457 - UV}$, et on mesure également le paramètre W(CIE) selon la norme ISO / FDIS 11475.

L'ensemble des résultats correspondant aux essais n° 35 à 44 est résumé dans le tableau VII.

| Essais | | Composition du polymère | Neutralisation | $\eta_{spé}$ | ES (%) | pH | Granulométrie | | Viscosités Brookfield™ (mPa.s) à t=0 | | Viscosités Brookfield™ (mPa.s) à t=8 j avant agitation | | Viscosités Brookfield™ (mPa.s) à t=8 j après agitation | | Blancheur | | | |
|---|---|---|---|---|---|---|---|---|---|---|---|---|---|---|---|---|---|---|
| N° | Art antérieur / Invention | | | | | | %<2 µm | %<1 µm | $\mu_{10}$ | $\mu_{100}$ | $\mu_{10}$ | $\mu_{100}$ | $\mu_{10}$ | $\mu_{100}$ | R $_{457 +UV}$ | R $_{457 -UV}$ | Δ UV | W (CIE) |
| 35 | Art antérieur | 100 % AA | 70%Na 30%Ca | 0,64 | 75,5 | 9,5 | 90,6 | 60,4 | 310 | 120 | 2690 | 600 | 290 | 130 | 94,0 | 85,4 | 8,536 | 107,7 |
| 36 | Invention 11,8 | % AA | 100%K | 1,08 | 75,9 | 9,1. | 78,0 | 49,4 | 2330 | 890 | 18000 | 4300 | 7500 | 1070 | 95,6 | 85,1 | 10,5 | 110,7 |
| 37 | Invention | 16 % AMA | 70%Na 30%Ca | 1,08 | 76,0 | 8,7 | 81,9 | 50 | 2090 | 560 | 10200 | 1470 | 1690 | 580 | 96,0 | 85,4 | 10,6 | 111,2 |
| 38 | Invention | 72,2% M | 50%/NA 50%Mg | 1,08 | 76,7 | 8,9 | 79,4 | 47,9 | 660 | 280 | 8440 | 1340 | 1220 | 460 | 96,0 | 85,2 | 10,8 | 111,9 |
| 39 | Invention | MePEG350 | 100%AMP | 1,08 | 75,8 | 9,2 | 76,2 | 45,6 | 5500 | 1350 | 15000 | 3240 | 7800 | 1850 | 96,3 | 85,3 | 11,0 | 114,5 |
| 40 | Art antérieur | 100 % AA | 70%Na 30%Ca | 0,64 | 75,1 | 9,5 | 61,6 | 36,0 | 330 | 120 | 420 | 220 | 230 | 110 | 95,0 | 85,9 | 10,1 | 111,2 |
| 41 | Invention | 11,8 % AA | Non neutralisé | 1,08 | 75,1 | 7,7 | 61,7 | 34,8 | 1830 | 410 | 3480 | 780 | 970 | 280 | 96,2 | 84,8 | 11,4 | 113,8 |
| 42 | Invention | 16 % AMA | 100%TEA | 1,08 | 75,2 | 8,3 | 55,2 | 31,5 | 550 | 220 | 2900 | 680 | 970 | 290 | 97,0 | 84,7 | 11,3 | 112,0 |
| 43 | Invention | 72,2% M | 100%NH4 | 1,08 | 75,5 | 8,6 | 66 | 38,5 | 1340 | 500 | 5800 | 1490 | 3140 | 780 | 96,2 | 85,1 | 11,1 | 112,2 |

(suite)

| Essais | | Composition du polymère | Neutralisation | $\eta_{spé}$ | ES (%) | pH | Granulométrie | | Viscosités Brookfield™ (mPa.s) à t=0 | | Viscosités Brookfield™ (mPa.s) à t=8 j avant agitation | | Viscosités Brookfield™ (mPa.s) à t=8 j après agitation | | Blancheur | | | |
|---|---|---|---|---|---|---|---|---|---|---|---|---|---|---|---|---|---|---|
| N° | Art antérieur / Invention | | | | | | %<2 µm | %<1 µm | $\mu_{10}$ | $\mu_{100}$ | $\mu_{10}$ | $\mu_{100}$ | $\mu_{10}$ | $\mu_{100}$ | $R_{457 +UV}$ | $R_{457 -UV}$ | Δ UV | W (CIE) |
| 44 | Invention | MePEG350 | 50%K | 1,08 | 76,3 | 8,5 | 66,7 | 37,6 | 670 | 270 | 3880 | 830 | 660 | 270 | 96,3 | 84,9 | 11,4 | 112,7 |

AA désigne : l'acide acrylique
AMA désigne : l'acide méthacrylique
M MePEG350 désigne : le méthacrylate de méthoxy polyéthylène glycol de poids moléculaire 350
AMP désigne : l'amino méthyl propanol
TEA désigne : la triéthanolamine

La lecture du tableau VII démontre que les copolymères selon l'invention, utilisés dans un procédé de broyage de charges minérales, apportent une amélioration notable de l'activation de l'azurage optique des papiers couchés et de leur blancheur, pour une composition monomérique constante et ce, pour différents taux et nature du système de neutralisation envisagé.

En outre, ces résultats démontrent également que les copolymères selon l'invention, permettent d'obtenir des suspensions de charges minérales manipulables même après stockage sans agitation.

**Exemple 8**

Cet exemple concerne l'utilisation de copolymères selon l'invention dans un procédé de broyage de charges minérales. Il concerne également l'utilisation des suspensions ainsi obtenues dans la fabrication de sauces papetières, ces dites sauces étant utilisées pour coucher des papiers. Cet exemple concerne aussi la mesure de l'azurage optique et de la blancheur des papiers ainsi obtenus. Cet exemple a enfin pour objet d'illustrer différentes compositions monomériques d'un copolymère selon l'invention.

Dans cet exemple, on commence par broyer des suspensions de matière minérale selon le procédé décrit pour l'exemple 2. On détermine leur granulométrie ainsi que leur viscosité Brookfield™ selon les méthodes décrites pour l'exemple 2. Lesdites suspensions entrent ensuite dans la composition de sauces de couchage réalisées en incorporant pour 100 parts en poids de pigment sec de ladite suspension broyée de carbonate de calcium, 10 parts en poids sec de latex styrène-butadiène commercialisé par la société DOW CHEMICAL sous le nom DL950™, 0,2 part d'un co-liant commercialisé par la société COATEX sous le nom de Rheocoat™ 35, et 1 part en poids en l'état d'azurant optique commercialisé par la société BAYER sous le nom Blancophor P™.

Lesdites sauces de couchage servent enfin à coucher des feuilles de papier selon le procédé décrit pour l'exemple 2, avec un poids de couche égal à 15 g/$m^2$. Lesdites feuilles sont des feuilles de papier précouchées de dimensions 21 x 29,7 cm avec un poids spécifique de 96 g/$m^2$.

<u>Essai n° 45</u>

Cet essai illustre l'art antérieur et met en oeuvre 0,65 % en poids sec mesuré par rapport au poids sec de charge minérale d'un homopolymère de l'acide acrylique selon l'art antérieur pour broyer une suspension de carbonate de calcium. La suspension de carbonate de calcium contient avant broyage 20 % en poids de particules avec un diamètre inférieur à 2 $\mu$m déterminé à l'aide d'un granulomètre Sédigraph™ 5100, et possède une teneur en poids de matière sèche de 78,2 %.

Ledit homopolymère de l'acide acrylique a une viscosité spécifique de 0,64 et est neutralisé à l'aide d'hydroxydes de calcium et de sodium.

<u>Essai n° 46</u>

Cet essai illustre l'invention et met en oeuvre 1,50 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 $\mu$m déterminé à l'aide d'un granulomètre Sédigraph™ 5100, et possède une teneur en poids de matière sèche de 78,3 %.

Ledit copolymère est neutralisé par la soude et est constitué de :

a) 13,3 % d'acide acrylique et 3,3 % d'acide méthacrylique
b) 78,4 % d'un monomère de formule (I) dans laquelle :

$R_1$ représente l'hydrogène
$R_2$ représente l'hydrogène
R représente le groupe méthacrylate
R' représente le radical méthyle
avec m= p = 0 ; n = 45 ; q = 1 et avec (m+n+p)q = 45

c) 5 % de vinyl pyrrolidone.

<u>Essai n° 47</u>

Cet essai illustre l'invention et met en oeuvre 1,20 % en poids sec mesure par rapport au poids sec de charge minérale d'un copolymère selon l'invention pour broyer une suspension de carbonate de calcium. La suspension de

carbonate de calcium contient avant broyage 20 % en poids de particules avec un diamètre inférieur à 2 μm détermine à l'aide d'un granulomètre Sédigraph™ 5100, et possède une teneur en poids de matière sèche de 78,6 %.

Ledit copolymère est neutralisé par la soude et est constitué de :

a) 94 % d'acide acrylique et 1 % d'anhydride maléique
b) 5 (%) d'un monomère de formule (I) dans laquelle :

$R_1$ représente l'hydrogène
$R_2$ représente l'hydrogène
R représente le groupe vinyle
R' représente l'hydrogène
avec m = p = 0 ; n = 113 ; q = 1 et avec (m+n+p)q = 113

<u>Essai n° 48</u>

Cet essai illustre l'invention et met en oeuvre 1,50 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 μm déterminé à l'aide d'un granulomètre Sédigraph™ 5100, et possède une teneur en poids de matière sèche de 75 %.

Ledit copolymère est neutralisé par la soude et est constitué de :

a) 94 % d'acide acrylique et 1 % d'anhydride maléique
b) 2 % d'un monomère de formule (I) dans laquelle :

$R_1$ représente l'hydrogène
$R_2$ représente l'hydrogène
R représente le groupe vinyle
R' représente l'hydrogène
avec m = p = 0 ; n = 113 ; q = 1 et avec (m+n+p)q = 113

c) 3 % d'un monomère de formule (IIb) dans laquelle :

R représente le groupe méthacrylate
A représente une chaîne propyle
B représente le radical méthyle

Pour l'ensemble des essais de n° 45 à 48, on détermine l'extrait sec des suspensions de matière minérale, leur pH, leur granulométrie caractérisée par le pourcentage en poids de particules inférieures à 1 et 2 μm, leurs viscosités Brookfield™ à 10 et 100 tours minutes $\mu_{10}$ et $\mu_{100}$) déterminées à l'instant t = 0, puis à t = 8 jours, avant et après agitation.

On mesure enfin pour les papiers couchés les paramètres $R_{457 + UV}$ et $R_{457 - UV}$ selon les normes NF Q 03-038 et NF Q 03-039 puis on calcule la différence $\Delta UV = R_{457} + _{UV} - R_{457 - UV}$, et on mesure également le paramètre W(CIE) selon la norme ISO / FDIS 11475.

L'ensemble des résultats correspondant aux essais n° 45 à 48 est résumé dans le tableau VIII.

| Essais | | Composition du polymère | ES (%) | Granulo- métrie | | Viscosités Brookfield™ (mPa.s) à t=0 | | Viscosités Brookfield™ (mPa.s) à t=8 j avant agitation | | Viscosités Brookfield™ (mPa.s) à t=8 j après agitation | | Blancheur | | | |
|---|---|---|---|---|---|---|---|---|---|---|---|---|---|---|---|
| N° | Art antérieur / Invention | | | %<2 µm | %<1 µm | $\mu_{10}$ | $\mu_{100}$ | $\mu_{10}$ | $\mu_{100}$ | $\mu_{10}$ | $\mu_{100}$ | $R_{457\ +UV}$ | $R_{457\ -UV}$ | Δ UV | W (CIE) |
| 45 | Art antérieur | 100 % AA | 78,2 | 89,3 | 61,2 | 730 | 244 | 7100 | 1580 | 1800 | 610 | 89,5 | 85,2 | 4,3 | 90,4 |
| 46 | Invention | 13,3 % AA 3,3 % AMA<br>5%VP<br>78,4 % M MePEG2000 | 78,3 | 95,1 | 66,9 | 1820 | 570 | 18000 | 3730 | 2300 | 720 | 92,4 | 85,3 | 7,1 | 108,2 |
| 47 | Invention | 94 % AA<br>1 % Anhydride Maléique<br>5 % Vinyl PEG5000 | 78,6 | 90,8 | 62 | 2150 | 750 | 28000 | 4120 | 6600 | 1790 | 90,6 | 85,0 | 5,6 | 93,4 |
| 48 | Invention | 94 % AA<br>1 % Anhydride Maléique<br>2 % Vinyl PEG5000<br>3% formule (IIb) | 75,0 | 93,8 | 62 | 1950 | 600 | 19000 | 3880 | 2560 | 850 | 90,8 | 84,9 | 5,9 | 92,5 |

AA désigne : l'acide acrylique
AMA désigne : l'acide méthacrylique
VP désigne : vinyl pyrrolidone
M MePEG2000 désigne : le méthacrylate de méthoxy polyéthylène glycol de poids moléculaire 2000

La lecture du tableau VIII démontre que des copolymères selon l'invention de compositions monomériques différentes, utilisés dans un procédé de broyage de charges minérales, apportent une amélioration notable de l'azurage optique des papiers couchés et de leur blancheur.

**Exemple 9**

Cet exemple concerne l'utilisation de copolymères selon l'invention dans un procédé de fabrication de charges de masse. Il concerne également l'utilisation des charges de masse ainsi obtenues dans la fabrication du papier. Cet exemple concerne aussi la mesure de l'azurage optique et de la blancheur des papiers ainsi obtenus. Cet exemple a enfin pour objet d'illustrer l'efficacité de copolymères selon l'invention comme améliorant l'activation de l'azurage optique et la blancheur des papiers fabriqués.

Dans les essais correspondant à cet exemple, on commence par broyer une suspension de matière minérale, selon la méthode décrite pour l'exemple 2. La charge minérale est du carbonate de calcium. On utilise à chaque essai une quantité constante d'agent d'aide au broyage qui est soit un copolymère selon l'invention, soit un agent d'aide au broyage de l'art antérieur ; cette quantité est égale à 0,35 % en poids sec de copolymère mesurée par rapport au poids sec de charge minérale. On détermine la granulométrie de ladite suspension à l'aide d'un granulomètre Sédigraph™ 5100. On mesure également sa viscosité Brookfield™ à 10 et 100 tours/minutes ($\mu_{10}$ et $\mu_{100}$), à t = 0, puis après 8 jours avant et après agitation, selon le mode opératoire décrit dans l'exemple 2.

Après les mesures de viscosité Brookfield™ à t = 0, on utilise la charge de masse pour fabriquer une feuille de papier selon la méthode suivante.

On dispose d'une pâte qui est un mélange à 30 % en poids de fibres de résineux et à 70 % en poids de fibres d'eucalyptus. Cette pâte est raffinée en pile Valley à 30 °SR, la concentration du raffinage étant de 16 g/l. Ladite pâte est contenue dans un bol de formette de type Franck. On incorpore dans cette pâte 1 % en poids (par rapport au poids sec total de fibres) d'azurant optique qui est le produit Blancophor P 01™ commercialisé par la société BAYER. On introduit ensuite 0,6 % en poids, par rapport au poids sec total de fibres, de la colle Keydime™ C222 commercialisée par la société EKA CHEMICAL. On ajoute ensuite la charge sous forme de suspension aqueuse, à un taux de 30 % en poids sec par rapport au poids sec total de fibres. On effectue une dilution de manière à obtenir une feuille avec un grammage final de 80 g/m$^2$. On introduit également un système de rétention du type amidon cationique / polyacrylamide. L'amidon cationique est le Hi-Cat™ 5283 commercialisé par la société ROQUETTE et le polyacrylamide est le Percol™ 178 commercialisé par la société CIBA. La quantité d'agent de rétention est ajustée de manière à avoir un pourcentage de charges résiduelles de 20 % en poids dans la feuille obtenue.

On mesure enfin pour les papiers fabriqués les paramètres $R_{457+UV}$ et $R_{457-UV}$ selon les normes NF Q 03-038 et NF Q 03-039 puis on calcule la différence $\Delta UV = R_{457+UV} - R_{457-UV}$, et on mesure également le paramètre W(CIE) selon la norme ISO / FDIS 11475.

Essai n° 49

Cet essai illustre l'art antérieur et met en oeuvre 0,35 % en poids sec mesuré par rapport au poids sec de charge minérale d'un homopolymère de l'acide acrylique selon l'art antérieur pour broyer une suspension de carbonate de calcium. La suspension de carbonate de calcium contient avant broyage 20 % en poids de particules avec un diamètre inférieur à 2 µm déterminé à l'aide d'un granulomètre Sédigraph™ 5100, et possède une teneur en poids de matière sèche de 65 %.

Ledit homopolymère de l'acide acrylique a une viscosité spécifique de 0,64 et est neutralisé à l'aide d'hydroxydes de calcium et de sodium.

Essai n° 50

Cet essai illustre l'invention et met en oeuvre 0,35 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 µm déterminé à l'aide d'un granulomètre Sédigraph™ 5100, et possède une teneur en poids de matière sèche de 65 %.

Ledit copolymère qui a une viscosité spécifique de 1,10 est neutralisé par la soude et est constitué de :

a) 14,1 % d'acide acrylique et 3,4 % d'acide méthacrylique
b) 82,5 % d'un monomère de formule (I) dans laquelle :

$R_1$ représente l'hydrogène
$R_2$ représente l'hydrogène

R représente le groupe méthacrylate
R' représente le radical méthyle
avec (m+n+p)q = 45

Essai n° 51

Cet essai illustre l'invention et met en oeuvre 0,35 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 $\mu$m déterminé à l'aide d'un granulomètre Sédigraph™ 5100, et possède une teneur en poids de matière sèche de 65 %.
Ledit copolymère qui a une viscosité spécifique de 1,49 est neutralisé par la soude et est constitué de :

a) 13,7 % d'acide acrylique et 3,3 % d'acide méthacrylique
b) 83 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q =113

Essai n° 52

Cet essai illustre l'invention et met en oeuvre 0,35 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 $\mu$m déterminé à l'aide d'un granulomètre Sédigraph™ 5100, et possède une teneur en poids de matière sèche de 65 %.
Ledit copolymère qui a une viscosité spécifique de 1,27 est neutralisé par la soude et est constitué de :

a) 8,5 % d'acide acrylique et 1,5 % d'acide méthacrylique
b) 90 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q =113

Essai n° 53

Cet essai illustre l'invention et met en oeuvre 0,35 % en poids sec mesuré par rapport au poids sec de charge minérale d'un copolymère selon l'invention pour broyer une suspension de carbonate de calcium. La suspension de carbonate de calcium contient avant broyage 20 % en poids de particules avec un diamètre inférieur à 2 $\mu$m déterminé à l'aide d'un granulomètre Sédigraph™ 5100, et possède une teneur en poids de matière sèche de 65 %.
Ledit copolymère qui a une viscosité spécifique de 1,56 est neutralisé par la soude et est constitué de :

a) 8,5 % d'acide acrylique et 1,5 % d'acide méthacrylique
b) 90 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q =113

Pour les essais n° 49 à 53, on détermine la granulométrie des suspensions broyées de charge minérale repérée par le pourcentage en poids de particules inférieures à 1 et 2 $\mu$m, leurs viscosités Brookfield™ à 10 et 100 tours minutes ($\mu_{10}$ et $\mu_{100}$) déterminées à l'instant t = 0, puis à t = 8 jours, avant et après agitation.

On mesure enfin pour les papiers couchés les paramètres $R_{457 + UV}$ et $R_{457 - UV}$ selon les normes NF Q 03-038 et NF Q 03-039 puis on calcule la différence $\Delta UV = R_{457 + UV}\ R_{457 - UV}$, et on mesure également le paramètre W(CIE) selon la norme ISO / FDIS 11475.

L'ensemble des résultats correspondant aux essais n° 49 à 53 est résumé dans le tableau IX.

| Essais | | Composition du polymère | η spé | Granulo-métrie | | Viscosités Brookfield™ (mPa.s) à t=0 | | Viscosités Brookfield™ (mPa.s) à t=8 j avant agitation | | Viscosités Brookfield™ (mPa.s) à t=8 j après agitation | | Azuration optique | Blancheur |
|---|---|---|---|---|---|---|---|---|---|---|---|---|---|
| N° | Art antérieur / Invention | | | %<2 µm | %<1 µm | $\mu_{10}$ | $\mu_{100}$ | $\mu_{10}$ | $\mu_{100}$ | $\mu_{10}$ | $\mu_{100}$ | Δ UV | W(CIE) |
| 49 | Art antérieur | 100 % AA | 0,64 | 59,0 | 29,1 | 120 | 110 | sédimentation | | 130 | 110 | 8,0 | 98,5 |
| 50 | Invention | 14,1 % AA<br>3,4 % AMA<br>82,5 % M MePEG2000 | 1,10 | 58,4 | 28,3 | 450 | 110 | 1380 | 220 | 540 | 120 | 8,6 | 102,0 |
| 51 | Invention | 13,7 % AA<br>3,3 % AMA<br>83 % M MePEG5000 | 1,49 | 59,0 | 28,5 | 4440 | 580 | 4640 . | 620 | 3250 | 490 | 8,8 | 101,8 |
| 52 | Invention | 8,5 % AA<br>1,5 % AMA<br>90 % M MePEG5000 | 1,27 | 59,1 | 29,5 | 1160 | 230 | 1560 | 280 | 480 | 160 | 8,5 | 99,8 |
| 53 | Invention | 8,5 % AA<br>1,5 % AMA<br>90 % M MePEG5000 | 1,56 | 59,4 | 29,3 | 2500 | 490 | 2880 | 430 | 1620 | 340 | 8,4 | 99,5 |

AA désigne : l'acide acrylique
AMA désigne: l'acide méthacrylique
M MePEG2000 désigne : le méthacrylate de méthoxy polyéthylène glycol de poids moléculaire 2000
M MePEG5000 désigne : le méthacrylate de méthoxy polyéthylène glycol de poids moléculaire 5000

La lecture du tableau IX démontre que les copolymères selon l'invention, utilisés dans un procédé de fabrication de charges de masse, conduisent à une amélioration notable de l'activation de l'azurage optique des papiers fabriqués et de leur blancheur.

En outre, ces résultats démontrent également que les copolymères selon l'invention, permettent d'obtenir des suspensions de charges minérales manipulables même après stockage sans agitation.

**Exemple 10**

Cet exemple concerne l'utilisation de copolymères selon l'invention comme additifs dans un procédé de fabrication de sauces de couchage. Il concerne également l'utilisation des sauces de couchage ainsi obtenues dans la fabrication de papier couché. Cet exemple concerne aussi la mesure de l'azurage optique et de la blancheur des papiers couchés ainsi obtenus. Cet exemple a enfin pour objet d'illustrer l'efficacité de copolymères selon l'invention comme améliorant l'activation de l'azurage optique et la blancheur des papiers couchés.

Dans les essais correspondant à cet exemple, on commence par mélanger selon des procédés connus de l'homme du métier, une suspension de carbonate de calcium commercialisée par la société OMYA sous le nom Setacarb™, et une suspension de kaolin commercialisée par la société HUBER sous le nom Hydragloss™ 90. On réalise ensuite la sauce en incorporant, pour 100 parts en poids de pigment sec, 10 parts exprimées en poids sec d'un latex styrène-butadiène commercialisé par la société DOW CHEMICAL sous le nom de DL950™ et 1 part en poids en l'état d'azurant optique qui est le Blancophor P™ commercialisé par la société BAYER. On ajoute alors, éventuellement, 1 demi part exprimée en poids sec d'un support d'azurage optique connu de l'homme de métier, qui est l'alcool polyvinylique commercialisé sous le nom Mowiol™ 4-98 par la société CLARIANT. On ajoute alors ou non un copolymère selon l'invention, dans des proportions qui seront précisées pour chacun des essais.

On utilise ensuite ces sauces pour coucher des feuilles de papier selon la méthode décrite à l'exemple 2, avec un poids de couche égal à 15 g/m$^2$. Lesdites feuilles sont des feuilles de papier pigmentées de dimensions 21 x 29,7 cm avec un poids spécifique de 76 g/m$^2$. Leur blancheur est caractérisée par les paramètres $R_{457 + UV}$, $R_{457 - UV}$, $\Delta UV$ et W(CIE) respectivement égaux à 90,9 - 83,8 - 7,1 et 103,6.

Essai n° 54

Cet essai illustre l'art antérieur et met en oeuvre pour la réalisation de la sauce le mélange précité de charges minérales, le latex précité et l'azurant optique précité, dans les proportions qui ont été définies au début de l'exemple 10.

Essai n° 55

Cet essai illustre l'invention et met en oeuvre pour la réalisation de la sauce le mélange précité de charges minérales, le latex précité et l'azurant optique précité, dans les proportions qui ont été définies au début de l'exemple 10.

Il met également en oeuvre dans la formulation de la sauce 1,5 parts exprimées en poids sec d'un copolymère selon l'invention.

Ledit copolymère qui a une viscosité spécifique de 14,2 est neutralisé par la soude et est constitué de :

a) 13,6 % d'acide acrylique et 3,4 % d'acide méthacrylique
b) 83 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q = 45

Essai n° 56

Cet essai illustre l'invention et met en oeuvre pour la réalisation de la sauce le mélange précité de charges minérales, le latex précité et l'azurant optique précité, dans les proportions qui ont été définies au début de l'exemple 10.

Il met également en oeuvre dans la formulation de la sauce 1 part exprimée en sec d'un copolymère selon l'invention.

Ledit copolymère qui a une viscosité spécifique de 4,83 est neutralisé par la soude et est constitué de :

a) 13,6 % d'acide acrylique et 3,4 % d'acide méthacrylique

b) 83 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q = 45

Essai n° 57

Cet essai illustre l'art antérieur et met en oeuvre pour la réalisation de la sauce le mélange précité de charges minérales, le latex précité et l'azurant optique précité, dans les proportions qui ont été définies au début de l'exemple 10.
Il met également en oeuvre 0,5 parts exprimées en poids sec d'alcool polyvinylique comme support d'azurage optique.

Essai n° 58

Cet essai illustre l'invention et met en oeuvre pour la réalisation de la sauce le mélange précité de charges minérales, le latex précité et l'azurant optique précité, dans les proportions qui ont été définies au début de l'exemple 10.
Il met également en oeuvre dans la formulation de la sauce 0,5 parts en poids sec d'alcool polyvinylique comme support d'azurage optique, ainsi que 0,9 parts en poids sec d'un copolymère selon l'invention.
Ledit copolymère qui a une viscosité spécifique de 14,2 est neutralisé par la soude et est constitué de :

a) 13,6 % d'acide acrylique et 3,4 % d'acide méthacrylique
b) 83 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q = 45

Essai n° 59

Cet essai illustre l'invention et met en oeuvre pour la réalisation de la sauce le mélange précité de charges minérales, le latex précité et l'azurant optique précité, dans les proportions qui ont été définies au début de l'exemple 10.
Il met également en oeuvre dans la formulation de la sauce 0,5 parts en poids sec d'alcool polyvinylique comme support d'azurage optique, ainsi que 1 part en poids sec d'un copolymère selon l'invention.
Ledit copolymère qui a une viscosité spécifique de 4,83 est neutralisé par la soude et est constitué de :

a) 13,6 % d'acide acrylique et 3,4 % d'acide méthacrylique
b) 83 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q = 45

Pour les essais n° 54 à 59, on détermine la viscosité des sauces obtenues à t = 0, à 10 et 100 tours minutes ($\mu_{10}$ et $\mu_{100}$).
On mesure enfin pour les papiers couchés les paramètres $R_{457 + UV}$ et $R_{457 - UV}$ selon les normes NF Q 03-038 et NF Q 03-039 puis on calcule la différence $\Delta UV = R_{457 + UV} - R_{457 - UV}$, et on mesure également le paramètre W(CIE) selon la norme ISO / FDIS 11475.
On détermine également la valeur de la rétention d'eau pour chaque sauce de couchage, selon la méthode décrite dans le document EP 1 001 083.
La sauce de couchage est soumise à une pression de 7 bars dans un cylindre standardisé, équipé d'une surface de type papier filtre capable de laisser passer l'eau. On détermine alors le volume de filtrat de sauce collecté

après 20 minutes ($V_{20\ min}$ en millilitres) ainsi que le temps à partir duquel la première goutte traverse le papier filtre ($t_{1ère}$ goutte en minutes). La rétention est d'autant meilleure que la valeur de $V_{20\ min}$ est faible et que la valeur de $t_{1ère}$ goutte est élevée.

L'ensemble des résultats correspondant aux essais n° 54 à 59 est résumé dans le tableau X.

| | | Essais | | | | | |
|---|---|---|---|---|---|---|---|
| | | Art antérieur | Invention | Invention | Art antérieur | Invention | Invention |
| **Formulation de la sauce** | **Composants chimiques** | 54 | 55 | 56 | 57 | 58 | 59 |
| Charges | Setacarb™ | 80 | 80 | 80 | 80 | 80 | 80 |
| | Hydragloss™ 90 | 20 | 20 | 20 | 20 | 20 | 20 |
| Latex | DL950™ | 10 | 10 | 10 | 10 | 10 | 10 |
| Azurant optique | Blancophor P™ | 1 | 1 | 1 | 1 | 1 | 1 |
| Support d'azurant optique | PVA 4-98™ | 0 | 0 | 0 | 0,5 | 0,5 | 0,5 |
| Polymère selon l'invention | 13,6 % AA 3,4 % AMA 83 % M MePEG2000 ($\eta_{spé}$ =14,2) | 0 | 1,5 | 0 | 0 | 0,9 | 0 |
| | 13,6 % AA 3,4 % AMA 83 % M MePEG2000 ($\eta_{spé}$ = 4,83) | 0 | 0 | 1,0 | 0 | 0 | 1,0 |
| **Propriétés de la sauce** | pH | 8,6 | 8,6 | 8,6 | 8,6 | 8,6 | 8,6 |
| | ES (%) | 67,3 | 66,8 | 66,8 | 66,7 | 66,9 | 66,9 |
| | $\mu_{10}$ mPa.s | 2920 | 8700 | 11380 | 1780 | 6160 | 8040 |
| | $\mu_{100}$ mPa.s | 550 | 1610 | 1880 | 430 | 1390 | 1620 |
| | $V_{20\ min}$ (ml) | 6,4 | 2,3 | 2,7 | 3,3 | 1,5 | 1,3 |
| | $t_{1ère}$ goutte (min) | 1'26 | 3'25 | 2'05 | 2'01 | 5'00 | 4'54 |
| **Blancheur du papier couché** | $R_{457+UV}$ | 92,8 | 95,4 | 95,11 | 96,7 | 98,2 | 98,1 |
| | $R_{457-UV}$ | 85,0 | 84,9 | 84,9 | 84,7 | 84,6 | 84,6 |
| | $\Delta$UV | 7,8 | 10,5 | 10,2 | 12,0 | 13,6 | 13,5 |
| | W(CIE) | 103,3 | 112,2 | 111,2 | 115,1 | 121,7 | 121,8 |

AA désigne : l'acide acrylique
AMA désigne : l'acide méthacrylique
M MePEG2000 désigne : le méthacrylate de méthoxy polyéthylène glycol de poids moléculaire 2000

La lecture du tableau X démontre qu'indépendamment de la présence d'alcool polyvinylique comme support d'azurage optique, les copolymères selon l'invention conduisent à une amélioration de l'activation de l'azurage optique pour les papiers couchés, ainsi qu'à une amélioration de leur blancheur.

On note également que l'utilisation d'un copolymère selon l'invention permet d'améliorer de manière notable la rétention d'eau de la sauce de couchage.

En outre, on constate que les viscosités Brookfield™ des sauces de couchage obtenues selon l'invention sont compatibles avec l'application industrielle usuelle.

**Exemple 11**

Cet exemple concerne l'utilisation de copolymères selon l'invention comme additifs dans la fabrication de suspensions de matières minérales préalablement dispersées et/ou broyées. Il concerne également l'utilisation des suspensions ainsi obtenues dans la fabrication de sauces papetières, ces dites sauces étant utilisées pour coucher des papiers. Cet exemple concerne aussi la mesure de l'azurage optique et de la blancheur des papiers ainsi obtenus. Cet exemple a enfin pour objet d'illustrer l'efficacité de copolymères selon l'invention comme améliorant l'activation de l'azurage optique et la blancheur des papiers couchés.

Dans les essais correspondant à cet exemple, on utilise une suspension de carbonate de calcium commercialisée sous le nom Hydrocarb™ 90 par la société OMYA.

On incorpore alors éventuellement à ces suspensions un copolymère selon l'invention, dans une proportion de 1 % en poids sec, mesuré par rapport au poids sec de charge minérale.

Lesdites suspensions entrent ensuite dans la composition des sauces de couchage.

On réalise la sauce de couchage en incorporant, pour 100 parts en poids de pigment sec, 10 parts exprimées en poids sec d'un latex styrène-butadiène commercialisé par la société DOW CHEMICAL sous le nom de DL920™ et 1 part en poids en l'état d'azurant optique commercialisé par la société BAYER sous le nom Blancophor P™. Lesdites sauces de couchage servent enfin à coucher des feuilles de papier selon le procédé décrit pour l'exemple 2, avec un poids de couche égal à 15 g/m$^2$. Lesdites feuilles sont des feuilles de papier précouchées de dimensions 21 x 29,7 cm avec un poids spécifique de 96 g/m$^2$. Leur blancheur est caractérisée par les paramètres $R_{457+UV}$, $R_{457-UV}$, ΔUV et W(CIE) respectivement égaux à 88,4-85,8-2,6 et 89,5.

On détermine leur viscosité selon la même méthode que celle appliquée aux suspensions aqueuses de matières minérales.

Les feuilles de papier sont couchées selon la méthode décrite à l'exemple 2.

Essai n° 60

Cet essai illustre l'art antérieur et met en oeuvre dans la fabrication de la sauce de couchage la suspension de carbonate de calcium Hydrocarb 90™.

Essai n° 61

Cet essai illustre l'invention et met en oeuvre 1 % en poids sec mesuré par rapport au poids sec de charge minérale d'un copolymère selon l'invention comme additif dans la suspension de carbonate de calcium Hydrocarb 90™.

Ledit copolymère qui a une viscosité spécifique de 1,52 est neutralisé par la soude et est constitué de :

a) 8,5 % d'acide acrylique et 1,5 % d'acide méthacrylique
b) 90 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q =113

Essai n° 62

Cet essai illustre l'art antérieur et met en oeuvre dans la fabrication de la sauce de couchage la suspension de carbonate de calcium Hydrocarb 90™. Il met également en oeuvre dans la fabrication de la sauce de couchage 1 part (pour 100 parts en poids de pigment sec) en poids sec d'un support d'azurage optique de l'art antérieur, qui est de la polyvinylpyrrolidone commercialisée par la société BASF sous le nom K30™.

Essai n° 63

Cet essai illustre l'invention et met en oeuvre 1 % en poids sec mesuré par rapport au poids sec de charge minérale d'un copolymère selon l'invention comme additif dans la suspension de carbonate de calcium Hydrocarb 90™.

Ledit copolymère qui a une viscosité spécifique de 1,52 est neutralisé par la soude et est constitué de :

a) 8,5 % d'acide acrylique et 1,5 % d'acide méthacrylique
b) 90 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q = 113

Il met également en oeuvre dans la fabrication de la sauce de couchage 1 part (pour 100 parts en poids de pigment sec) en poids sec d'un support d'azurage optique de l'art antérieur, qui est de la polyvinylpyrrolidone commercialisée par la société BASF sous le nom K30™.

Essai n° 64

Cet essai illustre l'art antérieur et met en oeuvre dans la fabrication de la sauce de couchage la suspension de carbonate de calcium Hydrocarb 90™. Il met également en oeuvre dans la fabrication de la sauce de couchage 1 part (pour 100 parts en poids de pigment sec) en poids sec d'un support d'azurage optique de l'art antérieur, qui est du méthoxy polyéthylène glycol de poids moléculaire 5000.

Essai n° 65

Cet essai illustre l'invention et met en oeuvre 1 % en poids sec mesuré par rapport au poids sec de charge minérale d'un copolymère selon l'invention comme additif dans la suspension de carbonate de calcium Hydrocarb 90™.
Ledit copolymère qui a une viscosité spécifique de 1,52 est neutralisé par la soude et est constitué de :

a) 8,5 % d'acide acrylique et 1,5 % d'acide méthacrylique
b) 90 % d'un monomère de formule (I) dans laquelle :

$R_1$ représente l'hydrogène
$R_2$ représente l'hydrogène
R représente le groupe méthacrylate
R' représente le radical méthyle
avec (m+n+p)q = 113

Il met également en oeuvre dans la fabrication de la sauce de couchage 1 part (pour 100 parts en poids de pigment sec) en poids sec d'un support d'azurage optique de l'art antérieur, qui est qui est du méthoxy polyéthylène glycol de poids moléculaire 5000.
Pour les essais n° 60 à 65, on détermine la viscosité des sauces obtenues à t = 0, à 10 et 100 tours minutes ($\mu_{10}$ et $\mu_{100}$).
On mesure enfin pour les papiers couchés les paramètres $R_{457+UV}$ et $R_{457-UV}$ selon les normes NF Q 03-038 et NF Q 03-039 puis on calcule la différence $\Delta UV = R_{457+UV} - R_{457-UV}$, et on mesure également le paramètre W(CIE) selon la norme ISO / FDIS 11475.
L'ensemble des résultats correspondant aux essais n° 60 à 65 est résumé dans le tableau XI.

TABLEAU XI

| | | | Essais | | | | | |
|---|---|---|---|---|---|---|---|---|
| | | | Art antérieur | Invention | Art antérieur | Invention | Art antérieur | Invention |
| | | | 60 | 61 | 62 | 63 | 64 | 65 |
| **Formulation de la sauce de couchage** | Suspension de charge minérale | Hydrocarb™ 90 | 100 | 100 | 100 | 100 | 100 | 100 |
| | Latex | DL920™ | 10 | 10 | 10 | 10 | 10 | 10 |
| | Azurant optique | Blancophor P™ | 1 | 1 | 1 | 1 | 1 | 1 |
| | Copolymère selon l'invention | 8,5% AA<br>1,5 % AMA<br>90 % M MePEG5000 | 0 | 1 | 0 | 1 | 0 | 1 |
| | Autre additif | K30™ | 0 | 0 | 1 | 1 | 0 | 0 |
| | | M MePEG5000 | 0 | 0 | 0 | 0 | 1 | 1 |
| **Propriétés de la sauce** | | pH | 8,6 | 8,7 | 8,6 | 8,7 | 8,6 | 8,9 |
| | | ES (%) | 67,1 | 67,0 | 67,1 | 67,0 | 66,9 | 67,0 |
| | | $\mu_{10}$ mPa.s | 640 | 650 | 750 | 2650 | 650 | 1750 |
| | | $\mu_{100}$ mPa.s | 180 | 230 | 200 | 550 | 310 | 360 |
| **Propriétés du papier couché** | | $R_{457 + UV}$ | 90,8 | 95,5 | 96,6 | 98,3 | 95,3 | 96,3 |
| | | $R_{457 - UV}$ | 85,3 | 85,6 | 85,2 | 85,5 | 85,5 | 85,5 |
| | | $\Delta$UV | 5,5 | 9,9 | 11,4 | 12,7 | 9,8 | 10,7 |
| | | W(CIE) | 92,6 | 110,7 | 114,7 | 119,8 | 110,0 | 114,2 |

AA désigne : l'acide acrylique
AMA désigne : l'acide méthacrylique
M MePEG5000 désigne : le méthacrylate de méthoxy polyéthylène glycol de poids moléculaire 5000

La lecture du tableau XI démontre que l'introduction comme additif dans la suspension de matière minérale d'un copolymère selon l'invention permet d'améliorer l'activation de l'azurage optique du produit final ainsi que sa blancheur.

En outre, on constate que les viscosités Brookfield™ des sauces de couchage obtenues selon l'invention sont compatibles avec l'application industrielle usuelle.

## Exemple 12

Cet exemple concerne l'utilisation de copolymères selon l'invention comme additifs dans la fabrication de sauces de couchage papetières, et plus précisément comme coliants. Cet exemple concerne aussi la mesure de l'azurage optique et de la blancheur des papiers ainsi obtenus. Cet exemple a enfin pour objet d'illustrer l'efficacité de copolymères selon l'invention comme améliorant l'activation de l'azurage optique et la blancheur des papiers couchés.

Dans les essais correspondant à cet exemple, on utilise une suspension de carbonate de calcium commercialisée sous le nom Hydrocarb™ 90 par la société OMYA qui entrent dans la composition des sauces de couchage.

Ainsi, réalise t'on la sauce de couchage en incorporant, pour 100 parts en poids de pigment sec, 10 parts exprimées en poids sec d'un latex styrène-butadiène commercialisé par la société DOW CHEMICAL sous le nom de DL950™, la quantité de co-liant à tester et 1 part en poids en l'état d'azurant optique commercialisé par la société BAYER sous le nom Blancophor P™.

Lesdites sauces de couchage servent enfin à coucher des feuilles de papier selon le procédé décrit pour l'exemple 2, avec un poids de couche égal à 15 g/$m^2$. Lesdites feuilles sont des feuilles de papier précouchées de dimensions 21 x 29,7 cm avec un poids spécifique de 96 g/$m^2$.

On détermine leur viscosité selon la même méthode que celle appliquée aux suspensions aqueuses de matières minérales.

Les feuilles de papier sont couchées selon la méthode décrite à l'exemple 2.

### Essai n° 66

Cet essai illustre l'art antérieur et met en oeuvre dans la fabrication de la sauce de couchage 0,2 part d'un coliant de l'art antérieur commercialisé par COATEX sous le nom Rheocoat™ 35.

### Essai n° 67

Cet essai illustre l'invention et met en oeuvre dans la fabrication de la sauce de couchage 0,2 part d'un copolymère selon l'invention comme additif co-liant.

Ledit copolymère est neutralisé par la soude et est constitué de :

a) 5,9 % d'acide acrylique et 1,6 % d'acide méthacrylique
b) 92,5 % d'un monomère de formule (I) dans laquelle :

$R_1$ représente l'hydrogène
$R_2$ représente l'hydrogène
R représente le groupe méthacrylate
R' représente le radical méthyle
avec m = p = 0 ; n =113 ; q= 1 et avec (m+n+p)q = 113.

### Essai n° 68

Cet essai illustre l'invention et met en oeuvre, comme additif co-liant dans la fabrication de la sauce de couchage 0,8 part du même copolymère selon l'invention que celui mis en oeuvre dans l'essai n° 67.

### Essai n° 69

Cet essai illustre l'invention et met en oeuvre, comme additif co-liant dans la fabrication de la sauce de couchage 3 parts du même copolymère selon l'invention que celui mis en oeuvre dans l'essai n° 67.

### Essai n° 70

Cet essai illustre l'invention et met en oeuvre, comme additif co-liant dans la fabrication de la sauce de couchage

4 parts du même copolymère selon l'invention que celui mis en oeuvre dans l'essai n° 67.

Pour les essais n° 66 à 70, on détermine la viscosité des sauces obtenues à t = 0, à 10 et 100 tours minutes ($\mu$10 et $\mu$100).

On mesure enfin pour les papiers couchés les paramètres $R_{457 + UV}$ et $R_{457 - UV}$ selon les normes NF Q 03-038 et NF Q 03-039 puis on calcule la différence $\Delta UV = R_{457+}$ uv - $R_{457 - UV}$, et on mesure également le paramètre W(CIE) selon la norme ISO / FDIS 11475.

L'ensemble des résultats correspondant aux essais n° 66 à 70 est résumé dans le tableau XII.

| | | Art antérieur | Invention | Invention | Invention | Invention |
|---|---|---|---|---|---|---|
| **Formulation de la sauce** | **Composants chimiques** | 66 | 67 | 68 | 69 | 70 |
| Charges | Hydrocarb™ 90 | 100 | 100 | 100 | 100 | 100 |
| Latex | DL950™ | 10 | 10 | 10 | 10 | 10 |
| Azurant optique | Blancophor P™ | 1 | 1 | 1 | 1 | 1 |
| Co-liant | Rheocoat™ 35<br>Polymère selon l'invention | 0,2<br>0 | 0<br>0,2 | 0<br>0,8 | 0<br>3,0 | 0<br>4,0 |
| **Propriétés de la sauce** | pH | 8,5 | 8,5 | 8,5 | 8,6 | 8,6 |
| | ES (%) | 66,8 | 67,0 | 67,0 | 67,0 | 65,0 |
| | $\mu_{10}$ mPa.s | 25200 | 8030 | 16000 | 34600 | 43200 |
| | $\mu_{100}$ mPa.s | 3700 | 1470 | 2510 | 6430 | 6300 |
| **Blancheur du papier couché** | $R_{457 + UV}$ | 89,7 | 91,3 | 91,5 | 92,2 | 92,5 |
| | $R_{457 - UV}$ | 85,5 | 85,3 | 85,2 | 85,1 | 85,3 |
| | $\Delta$UV | 4,2 | 6,0 | 6,3 | 7,1 | 7,2 |
| | W(CIE) | 88,6 | 94,2 | 97,2 | 101,3 | 101,1 |

La lecture du tableau XII démontre que l'utilisation des copolymères selon l'invention comme additif dans la sauce de couchage conduisent à une amélioration de l'activation de l'azurage optique pour les papiers couchés, ainsi qu'à une amélioration de leur blancheur.

## Revendications

1. Utilisation d'un copolymère hydrosoluble comme agent améliorant l'activation de l'azurage optique **caractérisée en ce que** ledit copolymère dispose d'au moins une fonction alkoxy ou hydroxy polyalkylène glycol greffée sur au moins un monomère insaturé éthylénique.

2. Utilisation d'un copolymère hydrosoluble comme agent améliorant l'activation de l'azurage optique selon la revendication 1 **caractérisée en ce que** ledit copolymère se compose d'au moins un monomère de formule (I) :

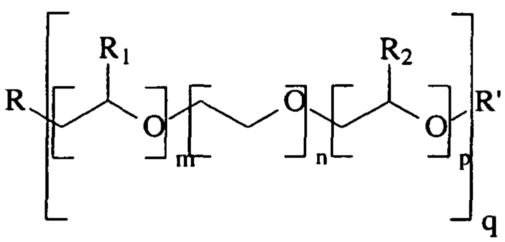

(I)

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15 ≤ (m+n+p)q ≤ 120,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,

**3.** Utilisation d'un copolymère hydrosoluble comme agent améliorant l'activation de l'azurage optique selon l'une des revendications 1 ou 2 **caractérisée en ce que** ledit copolymère se compose :

a) d'au moins un monomère anionique et à fonction carboxylique ou dicarboxylique ou phosphorique ou phosphonique ou sulfonique ou leur mélange,
b) d'au moins un monomère non ionique, le monomère non ionique étant constitué d'au moins un monomère de formule (I) :

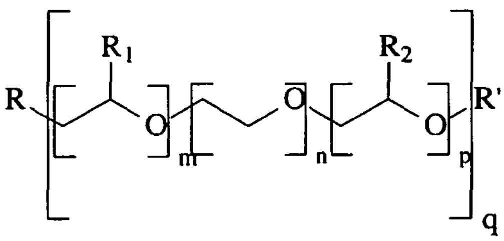

(I)

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15≤ (m+n+p)q ≤ 120,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,

ou du mélange de plusieurs monomères de formule (I),
c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organosililé ou organofluoré, ou du mélange de plusieurs de ces monomères,
d) éventuellement d'au moins un monomère possédant au moins deux insaturations éthyléniques appelé monomère réticulant,
le total des proportions des constituants a), b), c), et d) étant égal à 100 %.

4. Utilisation d'un copolymère comme agent améliorant l'activation de l'azurage optique selon l'une des revendications 1 à 3 **caractérisée en ce que** le monomère organosililé est choisi parmi les molécules de formules (IIa) ou (IIb) :
avec formule (IIa)

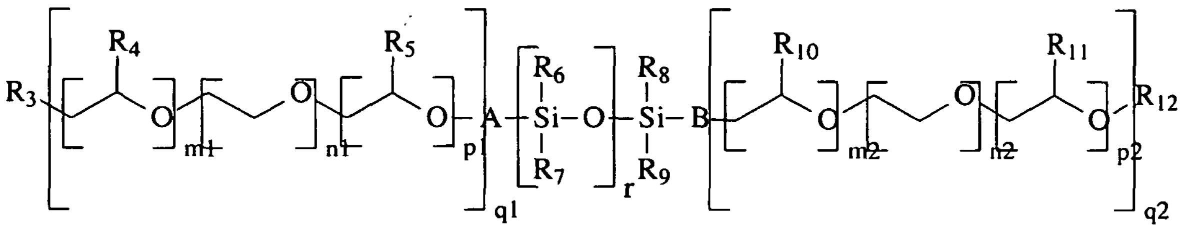

dans laquelle :

- m1, p1, m2 et p2 représentent un nombre de motifs d'oxyde d'alkylène inférieur ou égal à 150,
- n1 et n2 représentent un nombre de motifs d'oxyde d'éthylène inférieur ou égal à 150,
- q1 et q2 représentent un nombre entier au moins égal à 1 et tel que $0 \leq (m1+n1+p1)q1 \leq 150$ et $0 \leq (m2+n2+p2)q2 \leq 150$,
- r représente un nombre tel que $1 \leq r \leq 200$,
- $R_3$ représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_4$, $R_5$, $R_{10}$ et $R_{11}$, représentent l'hydrogène ou le radical méthyle ou éthyle,
- $R_6$, $R_7$, $R_8$ et $R_9$, représentent des groupements linéaires ou ramifiés alkyle, ou aryle, ou alkylaryle, ou arylalkyle ayant 1 à 20 atomes de carbone, ou leur mélange,
- $R_{12}$ représente un radical hydrocarboné ayant 1 à 40 atomes de carbone,
- A et B sont des groupements éventuellement présents, qui représentent alors un radical hydrocarboné ayant 1 à 4 atomes de carbone,

avec formule (IIb)

R -A-Si (OB)3

dans laquelle :

- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes

de carbone,
- B représente un radical hydrocarboné ayant 1 à 4 atomes de carbone,
ou du mélange de plusieurs de ces monomères,

et **en ce que** le monomère réticulant est choisi dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose, ou choisi parmi les molécules de formule (III) :

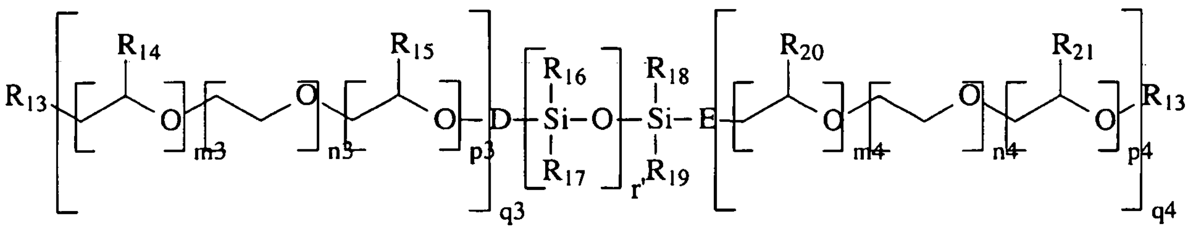

(III)

dans laquelle :

- m3, p3, m4 et p4 représentent un nombre de motifs d'oxyde d' alkylène inférieur ou égal à 150,
- n3 et n4 représentent un nombre de motifs d'oxyde d'éthylène inférieur ou égal à 150,
- q3 et q4 représentent un nombre entier au moins égal à 1 et tel que $0 \leq (m3+n3+p3)q3 \leq 150$ et $0 \leq (m4+n4+p4)q4 \leq 150$,
- r' représente un nombre tel que $1 \leq r' \leq 200$,
- $R_{13}$ représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,
- $R_{16}$, $R_{17}$, $R_{18}$ et $R_{19}$, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,
ou du mélange de plusieurs de ces monomères.

**5.** Utilisation d'un copolymère hydrosoluble comme agent améliorant l'activation de l'azurage optique selon 1' une des revendications 1 à 4 **caractérisée en ce que** ledit copolymère est constitué, exprimé en poids :

a) de 2 % à 95 % et encore plus particulièrement de 5 % à 90 % d'au moins un monomère anionique à insaturation éthylénique et à fonction monocarboxylique choisi parmi les monomères à insaturation éthylénique et à fonction monocarboxylique tels que l'acide acrylique ou méthacrylique, ou encore les hémiesters de diacides tels que les monoesters en $C_1$ à $C_4$ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges,
b) de 2 à 95 % et encore plus particulièrement de 5 % à 90 % d'au moins un monomère à insaturation éthylénique non ionique de formule (I) :

(I)

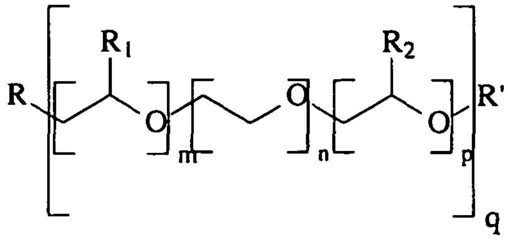

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et préférentiellement tel que $15 \leq (m+n+p)q \leq 120$,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,

ou du mélange de plusieurs monomères de formule (I),
c) de 0 % à 50 % d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré, ou encore d'au moins un monomère organosililé choisi de manière préférentielle parmi les molécules de formules (IIa) ou (IIb) :
avec formule (IIa)

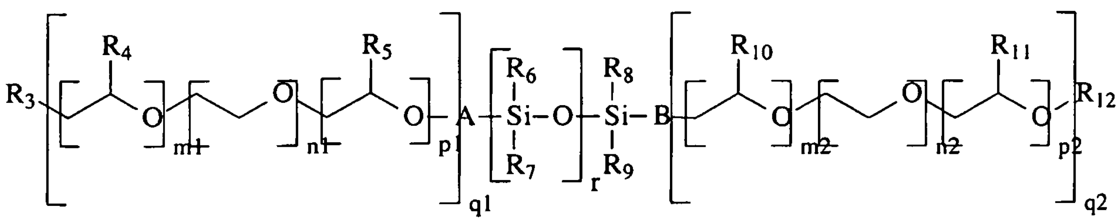

dans laquelle :

- m1, p1, m2 et p2 représentent un nombre de motifs d'oxyde d'alkylène inférieur ou égal à 150,
- n1 et n2 représentent un nombre de motifs d'oxyde d'éthylène inférieur ou égal à 150,
- q1 et q2 représentent un nombre entier au moins égal à 1 et tel que $0 \leq (m1+n1+p1)q1 \leq 150$ et $0 \leq$

$(m2+n2+p2)q2 \leq 150$,

- r représente un nombre tel que $1 \leq r \leq 200$,
- $R_3$ représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_4$, $R_5$, $R_{10}$ et $R_{11}$, représentent l'hydrogène ou le radical méthyle ou éthyle,
- $R_6$, $R_7$, $R_8$ et $R_9$, représentent des groupements linéaires ou ramifiés alkyle, ou aryle, ou alkylaryle, ou arylalkyle ayant 1 à 20 atomes de carbone, ou leur mélange,
- $R_{12}$ représente un radical hydrocarboné ayant 1 à 40 atomes de carbone,
- A et B sont des groupements éventuellement présents, qui représentent alors un radical hydrocarboné ayant 1 à 4 atomes de carbone,

avec formule (IIb)

$$R\text{-}A\text{-}Si(OB)_3$$

dans laquelle :

- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone, ou du mélange de plusieurs de ces monomères,

d) de 0 % à 3 % d'au moins un monomère réticulant choisi dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose, ou choisi parmi les molécules de formule (III) :

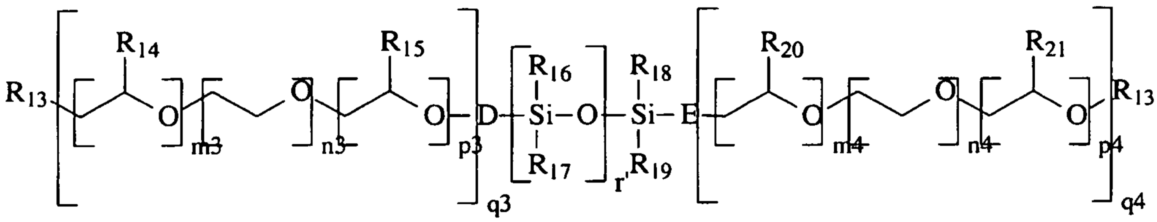

(III)

dans laquelle :

- m3, p3, m4 et p4 représentent un nombre de motifs d'oxyde d'alkylène inférieur ou égal à 150,
- n3 et n4 représentent un nombre de motifs d'oxyde d'éthylène inférieur ou égal à 150,
- q3 et q4 représentent un nombre entier au moins égal à 1 et tel que $0 \leq (m3+n3+p3)q3 \leq 150$ et $0 \leq (m4+n4+p4)q4 \leq 150$,
- r' représente un nombre tel que $1 \leq r' \leq 200$,
- $R_{13}$ représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,
- $R_{16}$, $R_{17}$, $R_{18}$ et $R_{19}$, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,
ou du mélange de plusieurs de ces monomères,
le total des proportions des constituants a), b), c), et d) étant égal à 100 %.

**6.** Utilisation d'un copolymère hydrosoluble comme agent améliorant l'activation de l'azurage optique selon l'une des revendications 1 à 5 **caractérisée en ce que** ledit copolymère est sous sa forme acide ou partiellement ou totalement neutralisé par un ou plusieurs agents de neutralisation disposant d'une fonction neutralisante monovalente ou disposant d'une fonction neutralisante polyvalente tels que pour la fonction monovalente ceux choisis dans le groupe constitué par les cations alcalins, en particulier le sodium, le potassium, le lithium, l'ammonium ou les amines primaires, secondaires ou tertiaires aliphatiques et/ou cycliques telles que la stéarylamine, les éthanolamines (mono-, di-, triéthanolamine), la mono et diéthylamine, la cyclohexylamine, la méthylcyclohexylamine, l'amino méthyl propanol, la morpholine, ou bien encore pour la fonction polyvalente ceux choisis dans le groupe constitué par les cations divalents alcalino-terreux, en particulier le magnésium et le calcium, ou encore le zinc, de même que par les cations trivalents, dont en particulier l'aluminium, ou encore par certains cations de valence plus élevée.

**7.** Utilisation d'un copolymère hydrosoluble comme agent améliorant l'activation de l'azurage optique selon la revendication 6

- dans un procédé de dispersion en suspension aqueuse de matières minérales **caractérisée en ce que** l'on utilise de 0,05 % à 5 % en poids sec dudit copolymère par rapport au poids sec des charges et/ou pigments, et plus particulièrement **en ce qu'**on utilise de 0,1 % à 3 % en poids sec dudit copolymère par rapport au poids sec des charges et/ou pigments, et **en ce que** la matière minérale est choisie parmi le carbonate de calcium, les dolomies, le kaolin, le talc, le gypse, l'oxyde de titane, le blanc satin ou encore le trihydroxyde d'aluminium, le mica et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, et est préférentiellement du carbonate de calcium tel que le carbonate de calcium naturel choisi parmi le marbre, la calcite, la craie ou leurs mélanges,
- dans un procédé de broyage en suspension aqueuse de matières minérales **caractérisée en ce que** l'on utilise de 0,05 % à 5 % en poids sec dudit copolymère par rapport au poids sec des charges et/ou pigments, et plus particulièrement **en ce qu'**on utilise de 0,1 % à 3 % en poids sec dudit copolymère par rapport au poids sec des charges et/ou pigments, et **en ce que** la matière minérale est choisie parmi le carbonate de calcium, les dolomies, le kaolin, le talc, le gypse, l'oxyde de titane, le blanc satin ou encore le trihydroxyde d'aluminium, le mica et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, et est préférentiellement du carbonate de calcium tel que le carbonate de calcium naturel choisi parmi le marbre, la calcite, la craie ou leurs mélanges,
- dans un procédé de fabrication de charges de masse, **caractérisée en ce que** l'on utilise de 0,05 % à 5 % en poids sec dudit copolymère par rapport au poids sec des charges et/ou pigments, et plus particulièrement **en ce qu'**on utilise de 0,1 % à 1 % en poids sec dudit copolymère par rapport au poids sec des charges et/ou pigments, et **en ce que en ce que** la matière minérale est choisie parmi le carbonate de calcium, les dolomies, le kaolin, le talc, le gypse, l'oxyde de titane, le blanc satin ou encore le trihydroxyde d'aluminium, le mica et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, et est préférentiellement du carbonate de calcium tel que le carbonate de calcium naturel choisi parmi le marbre, la calcite, la craie ou leurs mélanges,
- dans un procédé de fabrication de sauce de couchage, **caractérisé en ce que** l'on utilise de 0,05 % à 5 % en poids sec dudit copolymère par rapport au poids sec des charges et/ou pigments, et plus particulièrement

**en ce qu'**on utilise de 0,1 % à 2 % en poids sec dudit copolymère par rapport au poids sec des charges et/ou pigments, et **en ce que** la matière minérale est choisie parmi le carbonate de calcium, les dolomies, le kaolin, le talc, le gypse, l'oxyde de titane, le blanc satin ou encore le trihydroxyde d'aluminium, le mica et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, et est préférentiellement du carbonate de calcium tel que le carbonate de calcium naturel choisi parmi le marbre, la calcite, la craie ou leurs mélanges,
- comme additif ajouté à des suspensions de matières minérales dispersées,
- comme additif ajouté à des suspensions de matières minérales broyées.

8. Suspension aqueuse de matières minérales dispersées **caractérisée en ce qu'**elle contient le copolymère selon l'une des revendications 1 à 6, et plus particulièrement en ce qu'elle contient de 0,05 % à 5 % en poids sec dudit copolymère par rapport au poids sec des charges et/ou pigments, et encore plus particulièrement **en ce qu'**elle contient de 0,1 % à 3 % en poids sec dudit copolymère par rapport au poids sec des charges et/ou pigments.

9. Suspension aqueuse de matières minérales broyées **caractérisée en ce qu'**elle contient le copolymère selon l'une quelconque des revendications 1 à 6, et plus particulièrement **en ce qu'**elle contient de 0,05 % à 5 % en poids sec dudit copolymère par rapport au poids sec des charges et/ou pigments, et plus particulièrement **en ce qu'**elle contient de 0,1 % à 3 % en poids sec dudit copolymère par rapport au poids sec des charges et/ou pigments.

10. Charge de masse **caractérisée en ce qu'**elle contient le copolymère selon l'une quelconque des revendications 1 à 6, et plus particulièrement **en ce qu'**elle contient de 0,05 % à 5 % en poids sec dudit copolymère par rapport au poids sec total des charges et/ou pigments, et encore plus particulièrement 0,1 % à 1 % en poids sec dudit copolymère par rapport au poids sec total des charges et/ou pigments.

11. Sauce de couchage **caractérisée en ce qu'**elle contient le copolymère selon l'une des revendications 1 à 6, et plus particulièrement **en ce qu'**elle contient de 0,05 % à 5 % en poids sec dudit copolymère par rapport au poids sec total des charges et/ou pigments, et encore plus particulièrement 0,1 % à 2 % en poids sec dudit copolymère par rapport au poids sec total des charges et/ou pigments.

12. Suspension, charge de masse ou sauce de couchage selon l'une quelconque des revendications 8 à 11, **caractérisé en ce que** la matière matière minérale est choisie parmi le carbonate de calcium, les dolomies, le kaolin, le talc, le gypse, l'oxyde de titane, le blanc satin ou encore le trihydroxyde d'aluminium, le mica et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, et est préférentiellement du carbonate de calcium tel que le carbonate de calcium naturel choisi parmi le marbre, la calcite, la craie ou leurs mélanges.

## Claims

1. The use of a water-soluble copolymer as an agent improving the activation of optical brightness, **characterized in that** said copolymer has at least one alkoxy function or hydroxy-polyalkylene glycol function grafted onto at least one ethylenic unsaturated monomer,

2. The use of a water-soluble copolymer as an agent improving the activation of optical brightness according to claim 1, **characterized in that** said copolymer is made up of at least one monomer with formula (I):

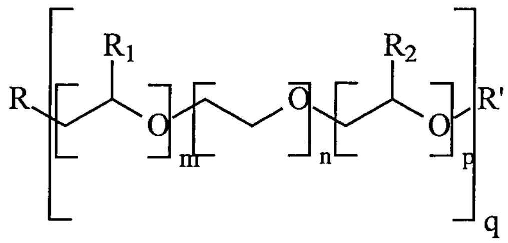

(I)

where:

- m and p represent a number of alkylene oxide units less than or equal to 150,
- n represents a number of ethylene oxide units less than or equal to 150,
- q represents an integer at least equal to 1 and such that 5 ≤ (m+n+p)q ≤ 150, and preferentially such that 15 ≤ (m+n+p)q ≤ 120
- R1 represents hydrogen or the methyl or ethyl radical,
- R2 represents hydrogen or the methyl or ethyl radical,
- R represents a radical containing a polymerizable unsaturated function, belonging to the group of vinylics as well as the group of acrylic, methacrylic, maleic, itaconic, crotonic, and vinylphtalic esters, as well as to the group of unsaturated urethanes such as acrylurethane, methacrylurethane, α-α' dimethyl-isopropenyl-benzylurethane, allylurethane, as well as to the group of allylic or vinylic ethers, whether substituted or not, or to the group of ethylenically unsaturated amides or imides,
- R' represents hydrogen or a hydrocarbon radical having 1 to 40 carbon atoms, and preferably represents a hydrocarbon radical having 1 to 12 carbon atoms, and very preferably a hydrocarbon radical having 1 to 4 carbon atoms.

3. The use of a water-soluble copolymer as an agent improving the activation of optical brightness according to one of the claims 1 or 2, **characterized in that** said copolymer is made up :

a) of at least one anionic monomer with a carboxylic or dicarboxylic or phosphoric or phosphonic or sulfonic function, or mixtures thereof,
b) of at least one non-ionic monomer, the non-ionic monomer being made up of at least one monomer with formula (I):

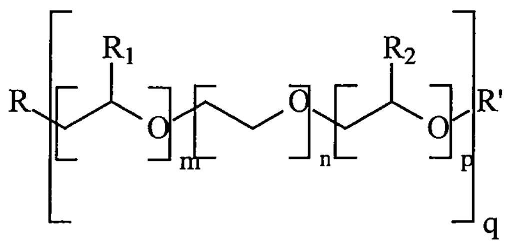

(I)

where:

- m and p represent a number of alkylene oxide units less than or equal to 150,
- n represents a number of ethylene oxide units less than or equal to 150,
- q represents an integer at least equal to 1 and such that 5 ≤ (m+n+p)q ≤ 150, and preferentially such that 15 ≤ (m+n+p)q ≤ 120,

- $R_1$ represents hydrogen or the methyl or ethyl radical,
- $R_2$ represents hydrogen or the methyl or ethyl radical,
- R represents a radical containing a polymerizable unsaturated function, belonging to the group of vinylics as well as the group of acrylic, methacrylic, maleic, itaconic, crotonic, and vinylphtalic esters, as well as to the group of unsaturated urethanes such as acrylurethane, methacrylurethane, α-α' dimethyl-isopropenyl-benzylurethane, allylurethane, as well as to the group of allylic or vinylic ethers, whether substituted or not, or to the group of ethylenically unsaturated amides or imides,
- R' represents hydrogen or a hydrocarbon radical having 1 to 40 carbon atoms, and preferably represents a hydrocarbon radical having 1 to 12 carbon atoms, and very preferably a hydrocarbon radical having 1 to 4 carbon atoms.

or a mixture of several monomers with formula (I),
c) potentially at least one acrylamide or methacrylamide monomer or derivatives thereof such as N-[3-(dimethylamino) propyl] acrylamide or N-[3-(dimethylamino) propyl] methacrylamide, and mixtures thereof, or at least one non-water-soluble monomer such as alkyl acrylates or methacrylates, unsaturated esters such as N-[2-(dimethylamino) ethyl] methacrylate, or N-[2-(dimethylamino) ethyl] acrylate, vinylics such as vinyl acetate, vinylpyrrolidone, styrene, alphamethylstyrene and derivatives thereof, or at least one cationic or ammonium quaternary monomer such as [2-(methacryloyloxy) ethyl] trimethyl ammonium chloride or sulfate, [2-(acryloyloxy) ethyl] trimethyl ammonium chloride or sulfate, [3-(acrylamido) propyl] trimethyl ammonium chloride or sulfate, dimethyl diallyl ammonium chloride or sulfate, [3-(methacrylamido) propyl] trimethyl ammonium chloride or sulfate, or at least one organosilylated or organofluorinated monomer, or a mixture of more than one of these monomers,
d) potentially at least one monomer possessing at least two ethylene unsaturations called a cross-linked monomer,
the total proportions of components a), b), c) and d) being equal to 100%.

**4.** The use of a copolymer as an agent improving the activation of optical brightness according to one of the claims 1 to 3 **characterized in that** the organosilylated monomer is selected from among molecules of formula (IIa) or (IIb), with formula (IIa)

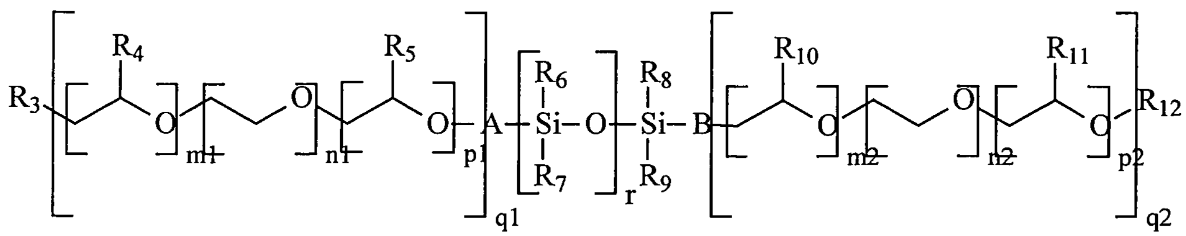

where:

- m1, p1, m2, and p2 represent a number of alkylene oxide units less than or equal to 150,
- n1 and n2 represent a number of ethylene oxide units less than or equal to 150,
- q1 and q2 each represent a whole number at least equal to 1 and such that $0 \leq (m1+n1+p1)q1 \leq 150$ and $0 \leq (m2+n2+p2)q2 \leq 150$,
- r represents a number such as $1 \leq r \leq 200$,
- $R_3$ represents a radical containing a polymerizable unsaturated function, belonging to the group of vinylics as well as the group of acrylic, methacrylic, maleic, itaconic, crotonic, and vinylphtalic esters, as well as to the group of unsaturated urethanes such as acrylurethane, methacrylurethane, α-α' dimethyl-isopropenyl-benzylurethane, allylurethane, as well as to the group of allylic or vinylic ethers, whether substituted or not, or to the group of ethylenically unsaturated amides or imides,
- $R_4$, $R_5$, $R_{10}$, and $R_{11}$, represent hydrogen or the methyl or ethyl radical,
- $R_6$, $R_7$, $R_8$, and $R_9$, represent linear or branched alkyl, or aryl, or alkylaryl, or arylalkyl groups having 1 to 20 carbon atoms, or mixtures thereof,
- $R_{12}$ represents a hydrocarbon radical having 1 to 40 carbon atoms,
- A and B are potentially present groups, which then represent a hydrocarbon radical having 1 to 4 carbon atoms,

with the formula (IIb)

R-A-Si(OB)$_3$

where:

- R represents a radical containing a polymerizable unsaturated function, belonging to the group of vinylics as well as the group of acrylic, methacrylic, maleic, itaconic, crotonic, and vinylphtalic esters, as well as to the group of unsaturated urethanes such as acrylurethane, methacrylurethane, α-α' dimethyl-isopropenyl-benzylurethane, allylurethane, as well as to the group of allylic or vinylic ethers, whether substituted or not, or to the group of ethylenically unsaturated amides or imides,
- A is a group potentially present, which if so represents a hydrocarbon radical having 1 to 4 carbon atoms,
- B represents a hydrocarbon radical having 1 to 4 carbon atoms, or the mixture of more than one of these monomers,

and **in that** the cross-linked monomer is chosen from the group made up of ethylene glycol dimethacrylate, trimethylolpropanetriacrylate, allyl acrylate, allyl maleates, methylene-bis-acrylamide, methylene-bis-methacrylamide, tetrallyloxyethane, triallylcyanurates, allylic ethers obtained from polyols such as pentaerythritol, sorbitol, and sucrose, or chosen among molecules with the formula (III):

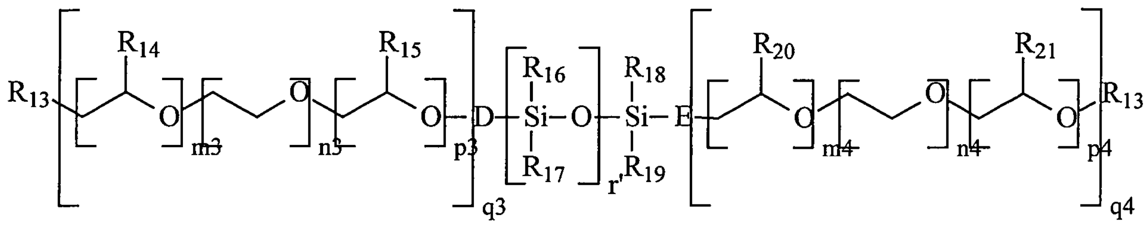

(III)

where:

- m3, p3, m4 and p4 represent a number of alkylene oxide units less than or equal to 150,
- n3 and n4 represent a number of ethylene oxide units less than or equal to 150,
- q3 and q4 each represent a whole number at least equal to 1 and such that $0 \leq (m3+n3+p3)q3 \leq 150$ and $0 \leq (m4+n4+p4)q4 \leq 150$,
- r' represents a number such that $1 \leq r' \leq 200$,
- $R_{13}$ represents a radical containing a polymerizable unsaturated function, belonging to the group of vinylics as well as the group of acrylic, methacrylic, maleic, itaconic, crotonic, and vinylphtalic esters, as well as to the group of unsaturated urethanes such as acrylurethane, methacrylurethane, α-α' dimethyl-isopropenyl-benzylurethane, allylurethane, as well as to the group of allylic or vinylic ethers, whether substituted or not, or to the group of ethylenically unsaturated amides or imides,
- $R_{14}$, $R_{15}$, $R_{20}$, and $R_{21}$ represent hydrogen or the methyl or ethyl radical,
- $R_{16}$, $R_{17}$, $R_{18}$, and $R_{19}$, represent linear or branched alkyl, or aryl, or alkylaryl, or arylalkyl groups having 1 to 20 carbon atoms, or mixtures thereof,
- D and E are potentially present groups, which then represent a hydrocarbon radical having 1 to 4 carbon atoms,

or mixtures of more than one of these monomers.

**5.** The use of a water-soluble copolymer as an agent improving the activation of optical brightness according to one of the claims 1 to 4 **characterized in that** said copolymer is made up, expressed by weight:

a) 2% to 95%, and more particularly 5% to 90% of at least one ethylenically-unsaturated anionic monomer with a monocarboxylic function selected from among the ethylenically unsaturated monomers having a monocarboxylic function such as acrylic or methacrylic acid, or hemiesters of diacids such as $C_1$-$C_4$ monoesters of maleic or itaconic acids, or mixtures thereof, or chosen from among ethylenically-unsaturated monomers with a dicarboxylic function such as crotonic, isocrotonic, cinnamic, itaconic, or maleic acids, or anhydrides of carboxylic

acids, such as maleic anhydride, or chosen from among ethylenically-unsaturated monomers with a sulfonic function such as acrylamido-methylpropane-sulfonic acid, sodium methallylsulfonate, sulfonic vinyl acid, and sulfonic styrene acid, or from among ethylenically-unsaturated monomers with a phosphoric function such as phosphoric vinyl acid, glycol ethylene methacrylate phosphate, glycol propylene methacrylate phosphate, glycol ethylene acrylate phosphate, glycol propylene acrylate phosphate, and their ethoxylates, or from among ethylenically-unsaturated monomers with a phosphonic function such as phosphonic vinyl acid, or mixtures thereof.
b) 2 to 95% and more particularly 5% to 90% of at least one non-ionic ethylenically-unsaturated monomer with the formula (I):

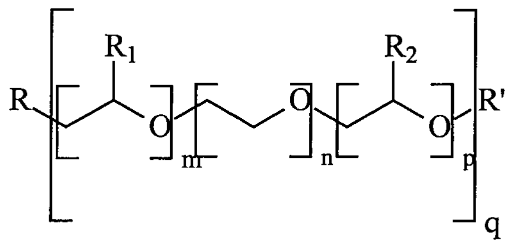

(I)

where:

- m and p represent a number of alkylene oxide units less than or equal to 150,
- n represents a number of ethylene oxide units less than or equal to 150,
- q represents an integer at least equal to 1 and such that $5 \leq (m+n+p)q \leq 150$, and preferentially such that $15 \leq (m+n+p)q \leq 120$,
- $R_1$ represents hydrogen or the methyl or ethyl radical,
- $R_2$ represents hydrogen or the methyl or ethyl radical,
- R represents a radical containing a polymerizable unsaturated function, belonging to the group of vinylics as well as the group of acrylic, methacrylic, maleic, itaconic, crotonic, and vinylphtalic esters, as well as to the group of unsaturated urethanes such as acrylurethane, methacrylurethane, α-α' dimethyl-isopropenylbenzylurethane, allylurethane, as well as to the group of allylic or vinylic ethers, whether substituted or not, or to the group of ethylenically unsaturated amides or imides,
- R' represents hydrogen or a hydrocarbon radical having 1 to 40 carbon atoms, and preferably represents a hydrocarbon radical having 1 to 12 carbon atoms, and very preferably a hydrocarbon radical having 1 to 4 carbon atoms.

or a mixture of several monomers of formula (I),
c) 0% to 50% of at least one acrylamide or methacrylamide monomer or derivatives thereof such as N-[3-(dimethylamino) propyl] acrylamide or N-[3-(dimethylamino) propyl] methacrylamide, and mixtures thereof, or at least one non-water-soluble monomer such as alkyl acrylates or methacrylates, unsaturated esters such as N-[2-(dimethylamino) ethyl] methacrylate, or N-[2-(dimethylamino) ethyl] acrylate, vinylics such as vinyl acetate, vinylpyrrolidone, styrene, alphamethylstyrene and derivatives thereof, or at least one cationic or ammonium quaternary monomer such as [2-(methacryloyloxy) ethyl] trimethyl ammonium chloride or sulfate, [2-(acryloyloxy) ethyl] trimethyl ammonium chloride or sulfate, [3-(acrylamido) propyl] trimethyl ammonium chloride or sulfate, dimethyl diallyl ammonium chloride or sulfate, [3-(methacrylamido) propyl] trimethyl ammonium chloride or sulfate, or at least one organofluorinated monomer, or at least one organosilylated monomer preferably chosen from among molecules with formulas (IIa) or (IIb):
with the formula (IIa):

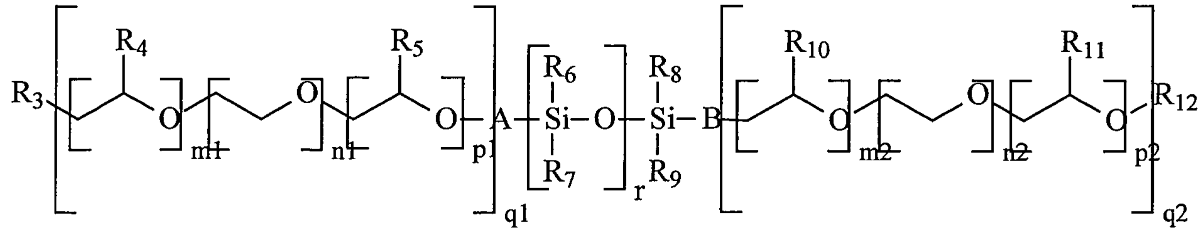

where:

- $m1$, $p1$, $m2$, and $p2$ represent a number of alkylene oxide units less than or equal to 150,
- $n1$ and $n2$ represent a number of ethylene oxide units less than or equal to 150,
- $q1$ and $q2$ each represent a whole number at least equal to 1 and such that $0 \leq (m1+n1+p1)q1 \leq 150$ and $0 \leq (m2+n2+p2)q2 \leq 150$,
- r represents a number such as $1 \leq r \leq 200$,
- $R_3$ represents a radical containing a polymerizable unsaturated function, belonging to the group of vinylics as well as the group of acrylic, methacrylic, maleic, itaconic, crotonic, and vinylphtalic esters, as well as to the group of unsaturated urethanes such as acrylurethane, methacrylurethane, α-α' dimethyl-isopropenyl-benzylurethane, allylurethane, as well as to the group of allylic or vinylic ethers, whether substituted or not, or to the group of ethylenically unsaturated amides or imides,
- $R_4$, $R_5$, $R_{10}$, and $R_{11}$, represent hydrogen or the methyl or ethyl radical,
- $R_6$, $R_7$, $R_8$, and $R_9$, represent linear or branched alkyl, or aryl, or alkylaryl, or arylalkyl groups having 1 to 20 carbon atoms, or mixtures thereof,
- $R_{12}$ represents a hydrocarbon radical having 1 to 40 carbon atoms,
- A and B are potentially present groups, which then represent a hydrocarbon radical having 1 to 4 carbon atoms,

with the formula (IIb)

$$R\text{-}A\text{-}Si(OB)_3$$

where:

- R represents a radical containing a polymerizable unsaturated function, belonging to the group of vinylics as well as the group of acrylic, methacrylic, maleic, itaconic, crotonic, and vinylphtalic esters, as well as to the group of unsaturated urethanes such as acrylurethane, methacrylurethane, α-α' dimethyl-isopropenyl-benzylurethane, allylurethane, as well as to the group of allylic or vinylic ethers, whether substituted or not, or to the group of ethylenically unsaturated amides or imides,
- A is a group potentially present, which if so represents a hydrocarbon radical having 1 to 4 carbon atoms,
- B represents a hydrocarbon radical having 1 to 4 carbon atoms, or the mixture of more than one of these monomers,

d) 0% to 3% of at least one cross-linked monomer chosen from the group made up of ethylene glycol dimethacrylate, trimethylolpropanetriacrylate, allyl acrylate, allyl maleates, methylene-bis-acrylamide, methylene-bis-methacrylamide, tetrallyloxyethane, triallylcyanurates, allylic ethers obtained from polyols such as pentaerythritol, sorbitol, and sucrose, or chosen among molecules with the formula (III):

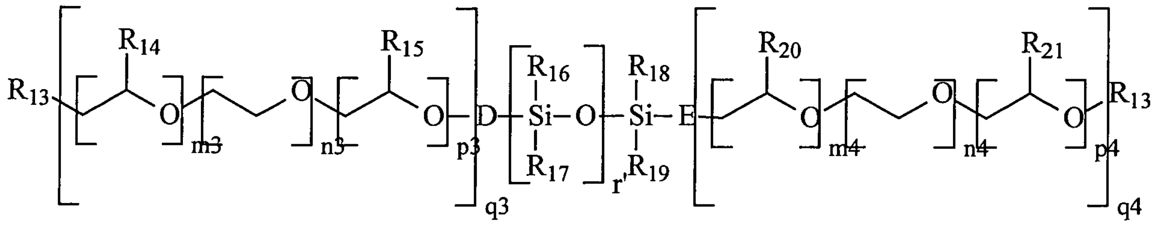

(III)

where:

- m3, p3, m4, and p4 represent a number of alkylene oxide units less than or equal to 150,
- n3 and n4 represent a number of ethylene oxide units less than or equal to 150,
- q3 and q4 each represent a whole number at least equal to 1 and such that $0 \leq (m3+n3+p3)q3 \leq 150$ and $0 \leq (m4+n4+p4)q4 \leq 150$,
- r' represents a number such that $1 \leq r' \leq 200$,
- $R_{13}$ represents a radical containing a polymerizable unsaturated function, belonging to the group of vinylics as well as the group of acrylic, methacrylic, maleic, itaconic, crotonic, and vinylphtalic esters, as well as to the group of unsaturated urethanes such as acrylurethane, methacrylurethane, α-α' dimethyl-isopropenyl-benzylurethane, allylurethane, as well as to the group of allylic or vinylic ethers, whether substituted or not, or to the group of ethylenically unsaturated amides or imides,
- $R_{14}$, $R_{15}$, $R_{20}$, and $R_{21}$ represent hydrogen or the methyl or ethyl radical,
- $R_{16}$, $R_{17}$, $R_{18}$, and $R_{19}$, represent linear or branched alkyl, or aryl, or alkylaryl, or arylalkyl groups having 1 to 20 carbon atoms, or mixtures thereof,
- D and E are potentially present groups, which then represent a hydrocarbon radical having 1 to 4 carbon atoms,

or mixtures of more than one of these monomers.
the total proportions of components a), b), c) and d) being equal to 100%.

6. The use of a water-soluble copolymer as an agent improving the activation of optical brightness according to one of the claims 1 to 5, **characterized in that** said copolymer is in its acidic form or partially or fully neutralized by one or more neutralization agents having at least one monovalent neutralizing function or having a polyvalent neutralizing function, such as for the monovalent function, those chosen from the group made up of alkaline cations, in particular sodium, potassium, lithium, ammonium, or primary, secondary, or tertiary aliphatic and/or cyclical amines such as stearylamine, ethanolamines (mono-, di-, triethanolamine), mono- and diethylamine, cyclohexylamine, methylcyclohexylamine, amino-methyl-propanol, mopholine, or for the polyvalent function, those chosen from the group made up of divalent alkaline-earth cations, in particular magnesium and calcium, or zinc, as well as of trivalent cations, particularly including aluminium, or certain higher-valence cations.

7. The use of a water-soluble copolymer as an agent improving the activation of optical brightness according to claim 6

- in a method for dispersing mineral materials in an aqueous suspension, **characterized in that** 0.05% to 5% by dry weight of said copolymer are used in relation to the dry weight of the fillers and/or pigments, and more particularly **in that** 0.1% to 3% by dry weight of said copolymer is used in relation to the dry weight of the fillers and/or pigments, and **in that** the mineral material is chosen from among calcium carbonate, dolomites, kaolin, talc, gypsum, titanium dioxide, satin white, or aluminium trihydroxide, mica, and mixtures of these fillers with one another, such as talc-calcium carbonate or calcium carbonate-kaolin mixtures, or also mixtures of calcium carbonate with aluminium trihydroxide, or mixtures with synthetic or natural fibres, or co-structures of minerals such as talc-calcium carbonate co-structures such as natural calcium carbonate chosen from among marble, calcite, chalk, or mixtures thereof.
- in a method for grinding mineral materials in an aqueous suspension, **characterized in that** 0.05% to 5% by dry weight of said copolymer are used in relation to the dry weight of the fillers and/or pigments, and more

particularly **in that** 0.1% to 3% by dry weight of said copolymer is used in relation to the dry weight of the fillers and/or pigments, and **in that** the mineral material is chosen from among calcium carbonate, dolomites, kaolin, talc, gypsum, titanium dioxide, satin white, or aluminium trihydroxide, mica, and mixtures of these fillers with one another, such as talc-calcium carbonate or calcium carbonate-kaolin mixtures, or also mixtures of calcium carbonate with aluminium trihydroxide, or mixtures with synthetic or natural fibres, or co-structures of minerals such as talc-calcium carbonate or talc-titanium dioxide co-structures, and is preferably natural calcium carbonate chosen from marble, calcite, chalk, or mixtures thereof.

- in a method for manufacturing mass fillers, **characterized in that** 0.05% to 5% by dry weight of said copolymer are used in relation to the dry weight of the fillers and/or pigments, and more particularly **in that** 0.1 % to 1% by dry weight of said copolymer is used in relation to the dry weight of the fillers and/or pigments, and **in that** the mineral material is chosen from among calcium carbonate, dolomites, kaolin, talc, gypsum, titanium dioxide, satin white, or aluminium trihydroxide, mica, and mixtures of these fillers with one another, such as talc-calcium carbonate or calcium carbonate-kaolin mixtures, or also mixtures of calcium carbonate with aluminium trihydroxide, or mixtures with synthetic or natural fibres, or co-structures of minerals such as talc-calcium carbonate or talc-titanium dioxide co-structures, and is preferably natural calcium carbonate chosen from marble, calcite, chalk, or mixtures thereof,
- in a method for manufacturing paper coatings, **characterized in that** 0.05% to 5% by dry weight of said copolymer are used in relation to the dry weight of the fillers and/or pigments, and more particularly **in that** 0.1 % to 2% by dry weight of said copolymer is used in relation to the dry weight of the fillers and/or pigments, and **in that** the mineral material is chosen from among calcium carbonate, dolomites, kaolin, talc, gypsum, titanium dioxide, satin white, or aluminium trihydroxide, mica, and mixtures of these fillers with one another, such as talc-calcium carbonate or kaolin-calcium carbonate mixtures, or also mixtures of calcium carbonate with aluminium trihydroxide, or mixtures with synthetic or natural fibres, or co-structures of minerals such as talc-calcium carbonate or talc-titanium dioxide co-structures, and is preferably calcium carbonate such as a natural calcium carbonate chosen from marble, calcite, chalk, or mixtures thereof,
- as an additive added to suspensions of dispersed mineral materials,
- as an additive added to suspensions of ground mineral materials,

**8.** An aqueous suspension of dispersed mineral materials **characterized in that** it contains the copolymer according to one of the claims 1 to 6, and more particularly **in that** it contains 0.05% to 5% by dry weight of said copolymer in relation to the dry weight of the fillers and/or pigments, and even more particularly **in that** it contains 0.1% to 3% by dry weight of said copolymer in relation to the dry weight of the fillers and/or pigments.

**9.** An aqueous suspension of ground mineral materials **characterized in that** it contains the copolymer according to one of the claims 1 to 6, and more particularly **in that** it contains 0.05% to 5% by dry weight of said copolymer in relation to the dry weight of the fillers and/or pigments, and even more particularly **in that** it contains 0.1% to 3% by dry weight of said copolymer in relation to the dry weight of the fillers and/or pigments.

**10.** A mass filler **characterized in that** it contains the copolymer according to one of the claims 1 to 6, and more particularly **in that** it contains 0.05% to 5% by dry weight of said copolymer in relation to the total dry weight of the fillers and/or pigments, and even more particularly **in that** it contains 0.1 % to 1 % by dry weight of said copolymer in relation to the dry weight of the fillers and/or pigments.

**11.** A paper coating **characterized in that** it contains the copolymer according to one of the claims 1 to 6, and more particularly **in that** it contains 0.05% to 5% by dry weight of said copolymer in relation to the total dry weight of the fillers and/or pigments, and even more particularly **in that** it contains 0.1% to 2% by dry weight of said copolymer in relation to the total dry weight of the fillers and/or pigments.

**12.** A suspension, mass filler, or paper coating according to any one of the claims 8 to 11, **characterized in that** the mineral material is chosen from among calcium carbonate, dolomites, kaolin, talc, gypsum, titanium dioxide, satin white, or aluminium trihydroxide, mica, and mixtures of these fillers with one another, such as talc-calcium carbonate or calcium carbonate-kaolin mixtures, or also mixtures of calcium carbonate with aluminium trihydroxide, or mixtures with synthetic or natural fibres, or co-structures of minerals such as talc-calcium carbonate or talc-titanium dioxide co-structures, and is preferably calcium carbonate such as a natural calcium carbonate chosen from marble, calcite, chalk, or mixtures thereof.

## Patentansprüche

1. Verwendung eines wasserlöslichen Copolymers als Mittel zur Verbesserung der Aktivierung der optischen Weißung, **dadurch gekennzeichnet, dass** das besagte Copolymer mindestens über eine Alkoxy- oder Hydroxy-Polyalkylenglycol-Funktion verfügt, welche auf mindestens ein ethylenisch ungesättigtes Monomer aufgepfropft ist.

2. Verwendung eines wasserlöslichen Copolymers als Mittel zur Verbesserung der Aktivierung der optischen Weißung nach Anspruch 1, **dadurch gekennzeichnet, dass** sich das besagte Copolymer aus mindestens einem Monomer der Formel (I):

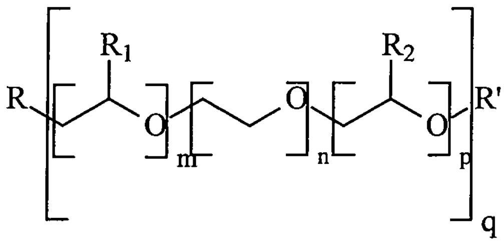

(I)

zusammensetzt, wobei:

- m und p eine Anzahl von Alkylenoxidmustern kleiner oder gleich 150 darstellen,
- n eine Anzahl von Ethylenoxidmustern kleiner oder gleich 150 darstellt,
- q eine ganze Zahl von mindestens 1 und wie $5 \leq (m+n+p)q \leq 150$, und vorzugsweise wie $15 \leq (m+n+p)q \leq 120$, darstellt
- R1 den Wasserstoff oder das Methyl- oder Ethylradikal darstellt,
- R2 den Wasserstoff oder das Methyl- oder Ethylradikal darstellt,
- R das Radikal mit einer polymerisierbaren, ungesättigten Funktion darstellt, welches zur Gruppe der Vinyle sowie zur Gruppe der Acryl-, Methacryl-, Malein, Itacon-, Croton-, Vinylphtal-Ester sowie zur Gruppe der ungesättigten Urethane wie Acrylurethan, Methacrylurethan, α-α' Dimethyl-Isopropenyl-Benzylurethan, Allylurethan, ebenso wie zur Gruppe der substituierten oder nicht substituierten Allyl- oder Vinylether oder auch zur Gruppe der ethylenisch ungesättigten Amide oder Imide gehört,
- R' den Wasserstoff oder ein hydrocarbonisiertes Radikal mit 1 bis 40 Kohlenstoffatomen darstellt, und vorzugsweise ein hydrocarbonisiertes Radikal mit 1 bis 12 Kohlenstoffatomen und noch bevorzugterweise ein hydrocarbonisiertes Radikal mit 1 bis 4 Kohlenstoffatomen darstellt.

3. Verwendung eines wasserlöslichen Copolymers als Mittel zur Verbesserung der Aktivierung der optischen Weißung nach einem der Ansprüche 1 oder 2, **dadurch gekennzeichnet, dass** sich das besagte Copolymer zusammensetzt aus

a) mindestens einem anionischen Monomer mit Carboxyl- oder Dicarboxyl- oder Phosphor- oder Phosphon- oder Sulfonfunktion oder Mischungen daraus,
b) mindestens einem nicht ionischen Monomer, wobei das nicht ionische Monomer aus mindestens einem Monomer der Formel (I):

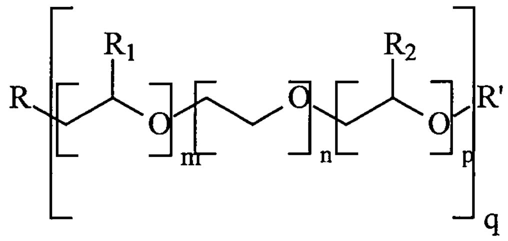

(I)

besteht, wobei:

- m und p eine Anzahl von Alkylenoxidmustern kleiner oder gleich 150 darstellen,
- n eine Anzahl von Ethylenoxidmustem kleiner oder gleich 150 darstellt,
- q eine ganze Zahl von mindestens 1 und wie $5 \leq (m+n+p)q \leq 150$, und vorzugsweise wie $15 \leq (m+n+p)q \leq 120$, darstellt
- R1 den Wasserstoff oder das Methyl- oder Ethylradikal darstellt,
- R2 den Wasserstoff oder das Methyl- oder Ethylradikal darstellt,
- R das Radikal mit einer polymerisierbaren, ungesättigten Funktion darstellt, welches zur Gruppe der Vinyle sowie zur Gruppe der Acryl-, Methacryl-, Malein-, Itacon-, Croton-, Vinylphtal-Ester sowie zur Gruppe der ungesättigten Urethane wie Acrylurethan, Methacrylurethan, $\alpha$-$\alpha$' Dimethyl-Isopropenyl-Benzylurethan, Allylurethan, ebenso wie zur Gruppe der substituierten oder nicht substituierten Allyl- oder Vinylether oder auch zur Gruppe der ethylenisch ungesättigten Amide oder Imide gehört,
- R' den Wasserstoff oder ein hydrocarbonisiertes Radikal mit 1 bis 40 Kohlenstoffatomen darstellt, und vorzugsweise ein hydrocarbonisiertes Radikal mit 1 bis 12 Kohlenstoffatomen und noch bevorzugterweise ein hydrocarbonisiertes Radikal mit 1 bis 4 Kohlenstoffatomen darstellt,

oder der Mischung mehrerer Monomere der Formel (I),
c) gegebenenfalls mindestens einem Acrylamid- oder Methacrylamid-Monoper oder deren Derivaten wie N-[3-(dimethylamino)propyl]-Acrylamid oder N-[3-(dimethylamino)propyl]-Methacrylamid und Mischungen daraus, oder aber aus mindestens einem nicht wasserlöslichen Monomer wie die Alkylacrylate oder -methacrylate, ungesättigten Ester wie N-[2-(dimethylamino)-ethyl]-Methacrylat oder N-[2-(dimethylamino)-ethyl]-Acrylat, Vinylen wie Vinylacetat, Vinylpyrrolidon, Styrol, Alphamethylstyrol und ihre Derivate, oder mindestens einem kationischen Monomer oder quaternären Ammonium wie [2-(Methacryloyloxy)ethyl]trimethylammoniumchlorid oder -sulfat, [2-(Acryloyloxy)ethyl]trimethylammoniumchlorid oder -sulfat, [3-(Acrylamido) propyl]trimethylammoniumchlorid oder -sulfat, Dimethyldiallylammoniumchlorid oder -sulfat, [3-(Methacrylamido)propyl]trimethylammoniumchlorid oder -sulfat, oder auch mindestens einem organosilierten oder organofluorierten Monomer, oder einem Gemisch von mehreren dieser Monomere,
d) gegebenenfalls mindestens einem Monomer mit mindestens zwei ethylenischen Nichtsättigungen, vernetzendes Monomer genannt, >
wobei die Anteile der Bestandteile a), b), c) und d) insgesamt 100 % darstellen.1

**4.** Verwendung eines Copolymers als Mittel zur Verbesserung der Aktivierung der optischen Weißung nach einem der Ansprüche 1 bis 3, **dadurch gekennzeichnet, dass** das organosilierte Monomer unter den Molekülen der Formeln (IIa) oder (IIb) gewählt wird:
Mit Formel (IIa)

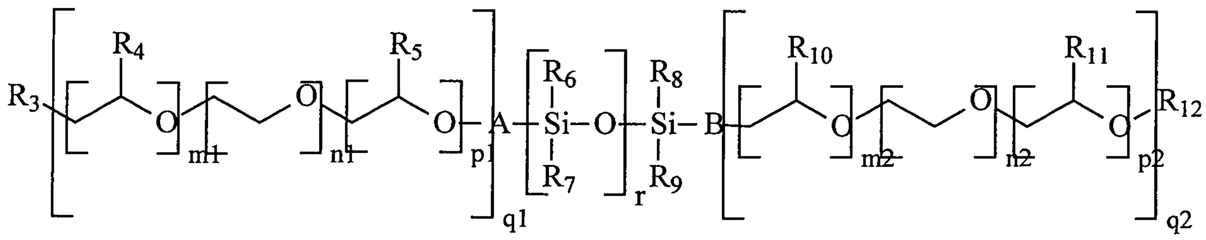

wobei:

- m1, p1, m2 und p2 eine Anzahl von Alkylenoxidmustern von weniger als oder gleich 150 darstellen,
- n1 und n2 eine Anzahl von Alkylenoxidmustern von weniger als oder gleich 150 darstellen,
- q1 und q2 eine ganze Zahl von mindestens gleich 1 darstellen, wie $0 \leq (m1+n1+p1)q1 \leq 150$ und $0 \leq (m2+n2+p2) q2 \leq 150$,
- r eine Zahl wie $1 \leq r \leq 200$ darstellt,
- $R_3$ ein Radikal mit einer polymerisierbaren, ungesättigten Funktion darstellt, welches vorzugsweise zur Gruppe der Vinyle sowie zur Gruppe der Acryl-, Methacryl-, Malein-, Itacon-, Croton-, Vinylphtal-Ester sowie zur Gruppe der ungesättigten Urethane wie beispielsweise die Acrylurethane, Methacrylurethane, α-α' Dimethyl-Isopropenyl-Benzylurethan, Allylurethan, ebenso wie zur Gruppe der substituierten oder nicht substituierten Allyl- oder Vinylether oder auch zur Gruppe der ethylenisch ungesättigten Amide oder Imide gehört,
- $R_4$, $R_5$, $R_{10}$ und $R_{11}$ den Wasserstoff oder das Methyl- oder Ethylradikal darstellen,
- $R_6$, $R_7$, $R_8$ und $R_9$ geradkettige oder verzweigte Alkyl-, oder Aryl-, oder Alkylaryloder Arylalkylgruppen mit 1 bis 20 Kohlenstoffatomen, oder Mischungen daraus, darstellen,
- $R_{12}$ ein hydrocarbonisiertes Radikal mit 1 bis 40 Kohlenstoffatomen darstellt,
- Eine gegebenenfalls vorhandene Gruppe mit einem hydrocarbonisierten Radikal von 1 bis 4 Kohlenstoffatomen sind,

mit Formel (IIb)

$$R\text{-}A\text{-}Si(OB)_3$$

wobei:

- R ein Radikal mit einer polymerisierbaren, ungesättigten Funktion darstellt, welches vorzugsweise zur Gruppe der Vinyle sowie zur Gruppe der Acryl-, Methacryl-, Malein-, Itacon-, Croton-, Vinylphtal-Ester sowie zur Gruppe der ungesättigten Urethane wie Acrylurethan, Methacrylurethan, α-α' Dimethyl-Isopropenyl-Benzylurethan, Allylurethan, ebenso wie zur Gruppe der substituierten oder nicht substituierten Allyl- oder Vinylether oder auch zur Gruppe der ethylenisch ungesättigten Amide oder Imide gehört,
- A eine gegebenenfalls vorhandene Gruppe mit einem hydrocarbonisierten Radikal mit 1 bis 4 Kohlenstoffatomen ist,
- B ein hydrocarbonisiertes Radikal mit 1 bis 4 Kohlenstoffatomen darstellt,

oder aus der Mischung mehrerer dieser Monomere,
und dass das Monomer gewählt wird aus der Gruppe bestehend aus Ethylenglycoldimethacrylat, Trimethylolpropantriacrylat, Allylacrylat, Allylmaleaten, Methylen-bis-Acrylamid, Methylen-bis-Methacrylamid, Tetrallyloxyethan, Triallylcyanurate, Allylether, welche aus Polyolen wie Pentaerythritol gewonnen werden, Sorbitol, Sucrose, oder unter den Molekülen der Formel (III):

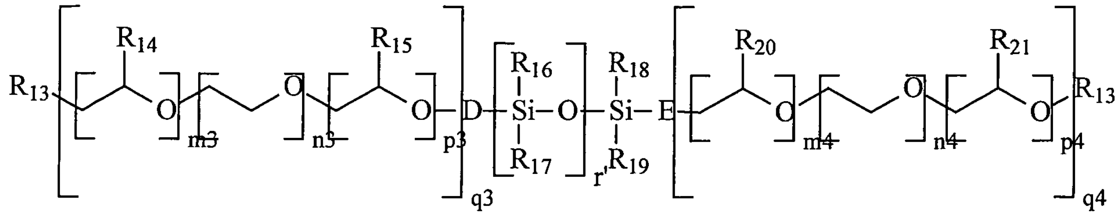

(III)

wobei:

- m3, p3, m4 und p4 eine Anzahl von Alkylenoxidmustern von weniger als oder gleich 150 darstellen,
- n3 und n4 eine Anzahl von Ethylenoxidmustem von weniger als oder gleich 150 darstellen,
- q3 und q4 eine ganze Zahl von mindestens gleich 1 darstellen, wie $0 \leq (m3+n3+p3)q3 \leq 150$ und $\leq (m4+n4+p4)q4 \leq 150$,
- r' eine ganze Zahl wie $1 \leq r' \leq 200$ darstellt,
- $R_{13}$ ein Radikal mit einer polymerisierbaren, ungesättigten Funktion darstellt, welches vorzugsweise zur Gruppe der Vinyle sowie zur Gruppe der Acryl-, Methacryl-, Malein-, Itacon-, Croton-, Vinylphtal-Ester sowie zur Gruppe der ungesättigten Urethane wie beispielsweise die Acrylurethane, Methacrylurethane, α-α' Dimethyl-Isopropenyl-Benzylurethan, Allylurethan, ebenso wie zur Gruppe der substituierten oder nicht substituierten Allyl- oder Vinylether oder auch zur Gruppe der ethylenisch ungesättigten Amide oder Imide gehört,
- $R_{14}$, $R_{15}$, $R_{20}$ und $R_{21}$ den Wasserstoff oder das Methyl- oder Ethylradikal darstellen,
- $R_{16}$, $R_{17}$, $R_{18}$ und $R_{19}$ geradkettige oder verzweigte Alkyl-, oder Aryl-, oder Alkylaryloder Arylalkylgruppen mit 1 bis 20 Kohlenstoffatomen, oder Mischungen daraus, darstellen,
- D und E gegebenenfalls vorhandene Gruppen mit einem hydrocarbonisierten Radikal mit 1 bis 4 Kohlenstoffatomen sind,

oder Mischungen mehrerer dieser Monomere.

**5.** Verwendung eines wasserlöslichen Copolymers als Mittel zur Verbesserung der Aktivierung der optischen Weißung nach einem der Ansprüche 1 bis 4, **dadurch gekennzeichnet, dass** sich das besagte Copolymer, ausgedrückt in Gewicht, wie folgt zusammensetzt:

a) 2 % bis 95 % und insbesondere 5 % bis 90 % mindestens eines ethylenisch ungesättigten anionischen Monomers mit Monocarboxylfunktion wie Acryl- oder Methacrylsäure, oder auch Halbester zweiwertiger Säuren wie die Monoester mit 1 bis 4 C-Atomen der Malein- oder Itaconsäure, oder Mischungen daraus, oder gewählt unter den ethylenisch ungesättigten Monomeren mit Dicarboxyl wie Croton-, Isocroton-, Zimt-, Itacon-, Maleinsäure, oder auch den Carboxyl-Säureanhydriden wie Maleinanhydrid, oder gewählt unter den ethylenisch ungesättigten Monomeren mit Sulfonfunktion wie Acrylamido-Methyl-Propan-Sulfonsäure, Natrium-Methallylsulfonat, Vinylsulfonsäure und Styrolsulfonsäure, oder noch gewählt unter den ethylenisch ungesättigten Monomeren mit Phosphonfunktion wie Vinylphosphorsäure, Ethylenglycol-Methacrylat-Phosphat, Propylenglycol-Methacrylat-Phosphat, Ethylenglycol-Acrylat-Phosphat, Propylenglycol-Acrylat-Phosphat und deren Ethoxylate, oder weiterhin gewählt unter den ethylenisch ungesättigten Monomeren mit Phosphonfunktionwie Vinylphosphorsäure, oder Mischungen daraus,
b) 2 bis 95 % und insbesondere 5 % bis 90 % mindestens eines ethylenisch ungesättigten nicht ionischen Monomers der Formel (I):

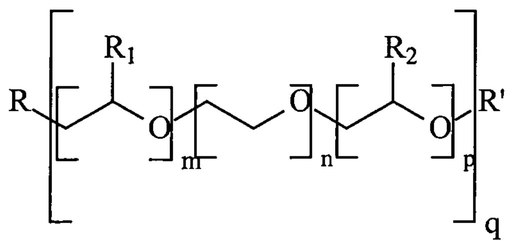

(I)

wobei:

- m und p eine Anzahl von Alkylenoxidmustern kleiner oder gleich 150 darstellen,
- n eine Anzahl von Ethylenoxidmustern kleiner oder gleich 150 darstellt,
- q eine ganze Zahl von mindestens 1 und wie $5 \leq (m+n+p)q \leq 150$, und vorzugsweise wie $15 \leq (m+n+p)q \leq 120$, darstellt
- R1 den Wasserstoff oder das Methyl- oder Ethylradikal darstellt,
- R2 den Wasserstoff oder das Methyl- oder Ethylradikal darstellt,
- R das Radikal mit einer polymerisierbaren, ungesättigten Funktion darstellt, welches zur Gruppe der Vinyle sowie zur Gruppe der Acryl-, Methacryl-, Malein-, Itacon-, Croton-, Vinylphtal-Ester sowie zur Gruppe der ungesättigten Urethane wie Acrylurethan, Methacrylurethan, α-α' Dimethyl-Isopropenyl-Benzylurethan, Allylurethan, ebenso wie zur Gruppe der substituierten oder nicht substituierten Allyl- oder Vinylether oder auch zur Gruppe der ethylenisch ungesättigten Amide oder Imide gehört,
- R' den Wasserstoff oder ein hydrocarbonisiertes Radikal mit 1 bis 40 Kohlenstoffatomen darstellt, und vorzugsweise ein hydrocarbonisiertes Radikal mit 1 bis 12 Kohlenstoffatomen und noch bevorzugterweise ein hydrocarbonisiertes Radikal mit 1 bis 4 Kohlenstoffatomen darstellt.

oder aus der Mischung von mehreren Monomeren der Formel (I),

c) 0 % bis 50 % mindestens eines Monomers vom Typ Acrylamid oder Methacrylamid oder deren Derivaten wie N-[3-(dimethylamino)propyl]-Acrylamid oder N-[3-(dimethylamino)propyl]-Methacrylamid und Mischungen daraus, oder aber aus mindestens einem nicht wasserlöslichen Monomer wie Alkylacrylate oder -methacrylate, ungesättigte Ester wie N-[2-(dimethylamino)-ethyl]-Methacrylat oder N-[2-(dimethylamino)-ethyl]-Acrylat, Vinylen wie Vinylacetat, Vinylpyrrolidon, Styrol, Alphamethylstyrol und ihre Derivaten, oder mindestens einen kationischen Monomer oder quaternären Ammonium wie [2-(Methacryloyloxy)ethyl]trimethylammoniumchlorid oder -sulfat, [2-(Acryloyloxy)ethyl]trimethylammoniumchlorid oder -sulfat, [3-(Acrylamido) propyl] trimethylammoniumchlorid oder -sulfat, Dimethyldiallylammoniumchlorid oder -sulfat, [3-(Methacrylamido)propyl]trimethylammoniumchlorid oder -sulfat, oder auch mindestens einem organofluorierten Monomer, oder auch einem organosilierten Monomer, vorzugsweise gewählt unter den Molekülen der Formeln (IIa) oder (IIb):
Mit Formel (IIa):

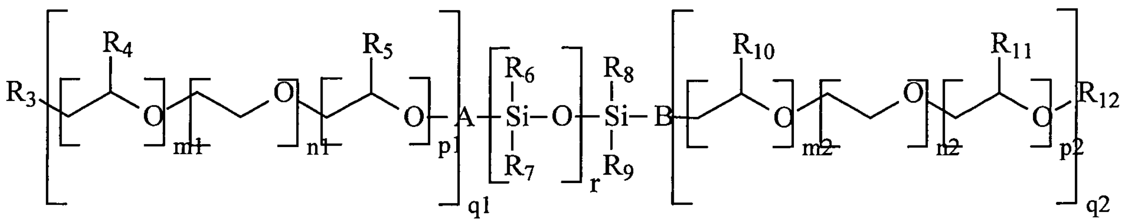

wobei:

- m1, p1, m2 und p2 eine Anzahl von Alkylenoxidmustern von weniger als oder gleich 150 darstellen,
- n1 und n2 eine Anzahl von Alkylenoxidmustern von weniger als oder gleich 150 darstellen,
- q1 und q2 eine ganze Zahl von mindestens gleich 1 darstellen, wie $0 \leq (m1+n1+p1)q1 \leq 150$ und $0 \leq (m2+n2+p2)q2 \leq 150$,

- r eine Zahl wie 1 ≤ 200 darstellt,
- $R_3$ ein Radikal mit einer polymerisierbaren, ungesättigten Funktion darstellt, welches vorzugsweise zur Gruppe der Vinyle sowie zur Gruppe der Acryl-, Methacryl-, Malein-, Itacon-, Croton-, Vinylphtal-Ester sowie zur Gruppe der ungesättigten Urethane wie beispielsweise die Acrylurethane, Methacrylurethane, α-α' Dimethyl-Isopropenyl-Benzylurethan, Allylurethan, ebenso wie zur Gruppe der substituierten oder nicht substituierten Allyl- oder Vinylether oder auch zur Gruppe der ethylenisch ungesättigten Amide oder Imide gehört,
- $R_4$, $R_5$, $R_{10}$ und $R_{11}$ den Wasserstoff oder das Methyl- oder Ethylradikal darstellen,
- $R_6$, $R_7$, $R_8$ und $R_9$ geradkettige oder verzweigte Alkyl-, Aryl-, Alkylaryl- oder Arylalkylgruppen mit 1 bis 20 Kohlenstoffatomen, oder Mischungen daraus, darstellen,
- $R_{12}$ ein hydrocarbonisiertes Radikal mit 1 bis 40 Kohlenstoffatomen darstellt,
- A und B gegebenenfalls vorhandene Gruppen mit einem hydrocarbonisierten Radikal von 1 bis 4 Kohlenstoffatomen sind,

Mit Formel (IIb)

$$R\text{-}A\text{-}Si(OB)_3$$

wobei:

- R ein Radikal mit einer polymerisierbaren, ungesättigten Funktion darstellt, welches vorzugsweise zur Gruppe der Vinyle sowie zur Gruppe der Acryl-, Methacryl-, Malein-, Itacon-, Croton-, Vinylphtal-Ester sowie zur Gruppe der ungesättigten Urethane wie Acrylurethan, Methacrylurethan, α-α' Dimethyl-Isopropenyl-Benzylurethan, Allylurethan, ebenso wie zur Gruppe der substituierten oder nicht substituierten Allyl- oder Vinylether oder auch zur Gruppe der ethylenisch ungesättigten Amide oder Imide gehört,
- A eine gegebenenfalls vorhandene Gruppe mit einem hydrocarbonisierten Radikal mit 1 bis 4 Kohlenstoffatomen ist,
- B ein hydrocarbonisiertes Radikal mit 1 bis 4 Kohlenstoffatomen darstellt,

oder eine Mischung mehrerer dieser Monomere,
d) 0 % bis 3 % mindestens eines vernetzenden Monomers, gewählt in der Gruppe bestehend aus Ethylenglycoldimethacrylat, Trimethylolpropantriacrylat, Allylacrylat, Allylmaleaten, Methylen-bis-Acrylamid, Methylen-bis-Methacrylamid, Tetrallyloxyethan, Triallylcyanurate, Allylether, welche aus Polyolen wie Pentaerythritol gewonnen werden, Sorbitol, Sucrose, oder unter den Molekülen der Formel (III):

(III)

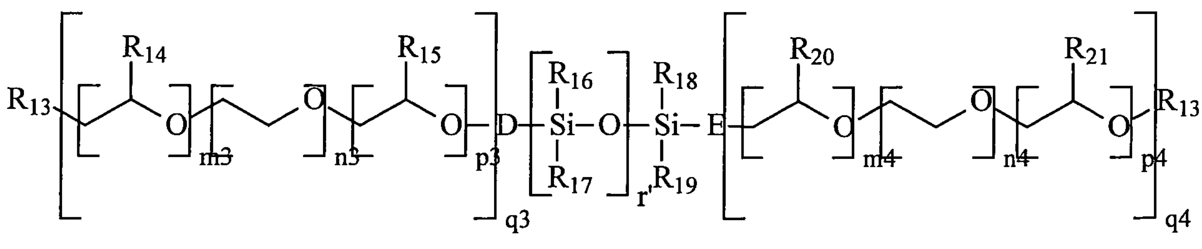

wobei:

- m3, p3, m4 und p4 eine Anzahl von Alkylenoxidmustern von weniger als oder gleich 150 darstellen,
- n3 und n4 eine Anzahl von Ethylenoxidmustem von weniger als oder gleich 150 darstellen,
- q3 und q4 eine ganze Zahl von mindestens gleich 1 darstellen, wie 0 ≤ (m3+n3+p3)q3 ≤ 150 und 0 ≤ (m4+n4+p4)q4 ≤ 150,
- r' eine ganze Zahl wie 1 ≤ r' ≤ 200 darstellt,
- $R_{13}$ ein Radikal mit einer polymerisierbaren, ungesättigten Funktion darstellt, welches vorzugsweise zur Gruppe der Vinyle sowie zur Gruppe der Acryl-, Methacryl-, Malein-, Itacon-, Croton-, Vinylphtal-Ester sowie zur Gruppe der ungesättigten Urethane wie beispielsweise die Acrylurethane, Methacrylurethane, α-α' Dimethyl-Isopropenyl-Benzylurethan, Allylurethan; ebenso wie zur Gruppe der substituierten oder nicht

substituierten Allyl- oder Vinylether oder auch zur Gruppe der ethylenisch ungesättigten Amide oder Imide gehört,

- $R_{14}$, $R_{15}$, $R_{20}$ und $R_{21}$ den Wasserstoff oder das Methyl- oder Ethylradikal darstellen,
- $R_{16}$, $R_{17}$, $R_{18}$ und $R_{19}$ geradkettige oder verzweigte Alkyl-, oder Aryl-, oder Alkylaryloder Arylalkylgruppen mit 1 bis 20 Kohlenstoffatomen, oder Mischungen daraus, darstellen,
- D und E gegebenenfalls vorhandene Gruppen mit einem hydrocarbonisierten Radikal mit 1 bis 4 Kohlenstoffatomen sind,

oder die Mischung mehrerer dieser Monomere,
wobei die Anteile der Bestandteile a), b), c) und d) insgesamt 100 % darstellen.

**6.** Verwendung eines wasserlöslichen Copolymers als Mittel zur Verbesserung der Aktivierung der optischen Weißung nach einem der Ansprüche 1 bis 5, **dadurch gekennzeichnet, dass** das besagte Copolymer in seiner Säureform vorliegt oder ganz oder teilweise durch ein oder mehrere Neutralisierungsmittel mit einer einwertigen neutralisierenden Funktion oder einer mehrwertigen neutralisierenden Funktion neutralisiert wird, wobei das oder die Neutralisierungsmittel für die einwertige Funktion aus der Gruppe der Alkalikationen, wie insbesondere Natrium, Kalium, Lithium, Ammonium oder aliphatische und/oder zyklische primäre, sekundäre oder terziäre Amine wie z. B. Stearylamin, Ethanolamin (Mono-, Di-, Triethanolamin), Mono- und Diethylamin, Cyclohexylamin, Methylcyclohexylamin, Aminomethylpropanol, Morpholin, oder für die mehrwertige Funktion aus der Gruppe bestehend aus bivalenten Alkali-Erde-Kationen, insbesondere Magnesium und Calcium, oder auch Zink, ebenso wie aus dreiwertigen Kationen wie insbesondere Aluminium, oder aber bestimmte höherwertige Kationen gewählt wird.

**7.** Verwendung eines wasserlöslichen Copolymers als Mittel zur Verbesserung der Aktivierung der optischen Weißung nach Anspruch 6

- in einem Dispersionsverfahren in wässriger Suspension von Mineralstoffen, **dadurch gekennzeichnet, dass** man 0,05 % bis 5 % Trockengewicht des besagten Copolymers im Verhältnis zum Trockengewicht der Ladungen und/oder Pigmente verwendet, und insbesondere **dadurch**, dass man 0,1 % bis 3 % Trockengewicht des besagten Copolymers im Verhältnis zum Trockengewicht der Ladungen und/oder Pigmente verwendet, und dass der Mineralstoff gewählt wird unter Calciumcarbonat, Dolomiten, Kaolin, Talk, Gips, Titandioxid, weißglänzender Emulsion, oder auch Aluminiumtrioxyd, Glimmer oder der Mischung dieser Ladungen untereinander, wie die Mischungen Talk-Calciumcarbonat mit Aluminiumtrihydroxid oder auch die Mischungen mit synthetischen oder natürlichen Fasern, oder weiterhin die Co-Strukturen von Mineralen wie die Co-Strukturen Talk-Calciumcarbonat oder Talk-Titandioxid, und vorzugsweise ein Calciumcarbonat wie das natürliche Calciumcarbonat, gewählt unter Marmor, Kalkspat, Kreide oder Mischungen daraus, ist,
- in einem Mahlverfahren in wässriger Suspension von Mineralstoffen, **dadurch gekennzeichnet, dass** man 0,05 % bis 5 % Trockengewicht des besagten Copolymers im Verhältnis zum Trockengewicht der Ladungen und/oder Pigmente verwendet, und insbesondere **dadurch**, dass man 0,1 % bis 3 % Trockengewicht des besagten Copolymers im Verhältnis zum Trockengewicht der Ladungen und/oder Pigmente verwendet, und dass der Mineralstoff gewählt wird unter Calciumcarbonat, Dolomiten, Kaolin, Talk, Gips, Titandioxid, weißglänzender Emulsion, oder auch Aluminiumtrioxyd, Glimmer oder der Mischung dieser Ladungen untereinander, wie die Mischungen Talk-Calciumcarbonat mit Aluminiumtrihydroxid oder auch die Mischungen mit synthetischen oder natürlichen Fasern, oder weiterhin die Co-Strukturen von Mineralen wie die Co-Strukturen Talk-Calciumcarbonat oder Talk-Titandioxid, und vorzugsweise ein Calciumcarbonat wie das natürliche Calciumcarbonat, gewählt unter Marmor, Kalkspat, Kreide oder Mischungen daraus, ist,
- in einem Herstellungsverfahren von Füllmassen, **dadurch gekennzeichnet, dass** man 0,05 % bis 5 % Trokkengewicht des besagten Copolymers im Verhältnis zum Trockengewicht der Ladungen und/oder Pigmente verwendet, und insbesondere **dadurch**, dass man 0,1 % bis 1 % Trockengewicht des besagten Copolymers im Verhältnis zum Trockengewicht der Ladungen und/oder Pigmente verwendet, und dass der Mineralstoff gewählt wird unter Calciumcarbonat, Dolomiten, Kaolin, Talk, Gips, Titandioxid, weißglänzender Emulsion, oder auch Aluminiumtrioxyd, Glimmer oder der Mischung dieser Ladungen untereinander, wie die Mischungen Talk-Calciumcarbonat mit Aluminiumtrihydroxid oder auch die Mischungen mit synthetischen oder natürlichen Fasern, oder weiterhin die Co-Strukturen von Mineralen wie die Co-Strukturen Talk-Calciumcarbonat oder Talk-Titandioxid,
und vorzugsweise ein Calciumcarbonat wie das natürliche Calciumcarbonat, gewählt unter Marmor, Kalkspat, Kreide oder Mischungen daraus, ist,
- in einem Herstellungsverfahren von Streichmasse, **dadurch gekennzeichnet, dass** man 0,05 % bis 5 % Trockengewicht des besagten Copolymers im Verhältnis zum Trockengewicht der Ladungen und/oder Pigmente

verwendet, und insbesondere **dadurch**, dass man 0,1 % bis 2 % Trockengewicht des besagten Copolymers im Verhältnis zum Trockengewicht der Ladungen und/oder Pigmente verwendet, und dass der Mineralstoff gewählt wird unter Calciumcarbonat, Dolomiten, Kaolin, Talk, Gips, Titandioxid, weißglänzender Emulsion, oder auch Aluminiumtrioxyd, Glimmer oder der Mischung dieser Ladungen untereinander, wie die Mischungen Talk-Calciumcarbonat, Calciumcarbonat-Kaolin, oder auch die Mischungen von Calciumcarbonat mit Aluminiumtrihydroxid oder auch die Mischungen mit synthetischen oder natürlichen Fasern, oder weiterhin die Co-Strukturen von Mineralen wie die Co-Strukturen Talk-Calciumcarbonat oder Talk-Titandioxid, und vorzugsweise ein Calciumcarbonat wie das natürliche Calciumcarbonat, gewählt unter Marmor, Kalkspat, Kreide oder Mischungen daraus, ist,
- als Zusatzstoff, welcher den Suspensionen aus dispersierten Mineralstoffen beigemischt wird,
- als Zusatzstoff, welcher den Suspensionen aus gemahlenen Mineralstoffen beigemischt wird.

**8.** Wässrige Suspension aus dispersierten Mineralstoffen, **dadurch gekennzeichnet, dass** sie das Copolymer gemäß einem der Ansprüche 1 bis 6 enthält, und insbesondere **dadurch**, dass sie 0,05 % bis 5 % Trockengewicht des besagten Copolymers im Verhältnis zum Trockengewicht der Ladungen und/oder Pigmente enthält, und noch insbesondere **dadurch**, dass sie 0,1 % bis 3 % Trockengewicht des besagten Copolymers im Verhältnis zum Trokkengewicht der Ladungen und/oder Pigmente enthält.

**9.** Wässrige Suspension aus gemahlenen Mineralstoffen, **dadurch gekennzeichnet, dass** sie das Copolymer gemäß einem beliebigen der Ansprüche 1 bis 6 enthält, und insbesondere **dadurch**, dass sie 0,05 % bis 5 % Trockengewicht des besagten Copolymers im Verhältnis zum Trockengewicht der Ladungen und/oder Pigmente enthält, und noch insbesondere **dadurch**, dass sie 0,1 % bis 3 % Trockengewicht des besagten Copolymers im Verhältnis zum Trockengewicht der Ladungen und/oder Pigmente enthält.

**10.** Füllmasse, **dadurch gekennzeichnet, dass** sie das Copolymer gemäß einem beliebigen der Ansprüche 1 bis 6 enthält, und insbesondere **dadurch**, dass sie 0,05 % bis 5 % Trockengewicht des besagten Copolymers im Verhältnis zum Gesamttrockengewicht der Ladungen und/oder Pigmente enthält, und noch insbesondere **dadurch**, dass sie 0,1 % bis 1 % Trockengewicht des besagten Copolymers im Verhältnis zum Gesamttrockengewicht der Ladungen und/oder Pigmente enthält.

**11.** Streichmasse, **dadurch gekennzeichnet, dass** sie das Copolymer gemäß einem der Ansprüche 1 bis 6 enthält, und insbesondere **dadurch**, dass sie 0,05 % bis 5 % Trockengewicht des besagten Copolymers im Verhältnis zum Gesamttrockengewicht der Ladungen und/oder Pigmente enthält, und noch insbesondere **dadurch**, dass sie 0,1 % bis 2 % Trockengewicht des besagten Copolymers im Verhältnis zum Gesamttrockengewicht der Ladungen und/oder Pigmente enthält.

**12.** Suspension, Füllmasse oder Streichmasse nach einem beliebigen der Ansprüche 8 bis 11, **dadurch gekennzeichnet, dass** der Mineralstoff unter Calciumcarbonat, Dolomiten, Kaolin, Talk, Gips, Titandioxid, weißglänzender Emulsion, oder auch Aluminiumtrioxyd, Glimmer oder der Mischung dieser Ladungen untereinander, wie die Mischungen Talk-Calciumcarbonat, Calciumcarbonat-Kaolin, oder auch Mischungen von Calciumcarbonat mit Aluminiumtrihydroxid, oder auch die Mischungen mit synthetischen oder natürlichen Fasern, oder weiterhin die Co-Strukturen von Mineralen wie die Co-Strukturen Talk-Calciumcarbonat oder Talk-Titandioxid gewählt wird, und vorzugsweise ein Calciumcarbonat wie das natürliche Calciumcarbonat, gewählt unter Marmor, Kalkspat, Kreide oder Mischungen daraus, ist.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0610534 A
- WO 0077058 A
- WO 0196007 A
- FR 2707182
- US 5491209 A
- US 6413306 B
- JP 2011951 A
- JP 10030010 A
- JP 2002029233 A
- WO 9942657 A
- JP 60134096 A
- EP 1001083 A


### Littérature non-brevet citée dans la description


- A Dictionary of Science. Oxford University Press, 1999
- Optical Brightening of Coated Papers. *Allg. Papier-Rundschau,* 05 Novembre 1982, 1242
- Effect of Polyethylene Glycols on the Properties of Coating Colors and Coating Quality. *Wochbl. Papierfabr.,* 15 Février 1978, vol. 106 (3), 109-112